# EUROPEAN PATENT APPLICATION

(11) **EP 3 872 314 A1**
(43) Date of publication of application: **01.09.2021**
(21) Application number: 19876825.1
(22) Date of filing: 21.10.2019
(51) Int. Cl.: F01N 3/01, F01N 3/08, B01D 53/32

(54) **ENGINE EXHAUST GAS TREATMENT SYSTEM AND METHOD**

(30) Priority: 22.10.2018 CN 201811227550; 22.10.2018 CN 201811227573; 05.11.2018 CN 201811308119; 05.11.2018 CN 201811307602; 13.12.2018 CN 201811525874; 13.12.2018 CN 201811527816; 20.12.2018 CN 201811563797; 19.02.2019 CN 201910124517; 20.03.2019 CN 201910211284; 25.04.2019 CN 201910340445; 25.04.2019 CN 201910340443; 20.05.2019 CN 201910418872; 27.05.2019 CN 201910446294; 28.05.2019 CN 201910452169; 30.05.2019 CN 201910465124; 13.06.2019 CN 201910512533; 17.06.2019 CN 201910521796; 17.06.2019 CN 201910522488; 17.06.2019 CN 201910521793; 05.07.2019 CN 201910605156; 15.07.2019 CN 201910636710
(71) Applicant: Shanghai Bixiufu Enterprise Management Co., Ltd., Shanghai 201112 (CN)
(72) Inventor: TANG, Wanfu, Shanghai 201112 (CN); DUAN, Zhijun, Shanghai 201112 (CN); WANG, Daxiang, Shanghai 201112 (CN); ZOU, Yongan, Shanghai 201112 (CN); XI, Yong, Shanghai 201112 (CN)
(74) Representative: Ström & Gulliksson AB
(86) International application number: PCT/CN2019/112250
(87) International publication number: WO 2020/083194

(57) **Abstract**

An engine exhaust gas treatment system, comprising an exhaust gas dust removal system and an exhaust gas ozone purification system. The exhaust gas dust removal system comprises an exhaust gas dust removal system inlet, an exhaust gas dust removal system outlet, and an exhaust gas electric field apparatus (1021). The exhaust gas electric field apparatus (1021) comprises an exhaust gas electric field apparatus inlet, an exhaust gas electric field apparatus outlet, an exhaust gas dust removal electric field cathode (10212), and an exhaust gas dust removal electric field anode (10211). The exhaust gas dust removal electric field cathode (10212) and the exhaust gas dust removal electric field anode (10211) are configured to produce an exhaust gas ionized dust removal electric field. The engine exhaust gas treatment system is able to effectively remove particles in engine exhaust gas, and the purification treatment effect for engine exhaust gas is good.

## Description

### Technical Field

The present invention belongs to the field of environmental protection, and it relates to an engine tail gas treatment system and method.

### Background Art

In the prior art, particulates are usually filtered by a diesel particulate filter (DPF). A DPF works in a combustion mode. Namely, after a porous structure is sufficiently blocked by carbon deposits and the temperature is raised up to an ignition point, natural combustion or supported combustion is carried out. Specifically, the working principle of a DPF is as follows. An intake containing particulates enters a honeycomb-shaped carrier of a DPF, the particulates are trapped in the honeycomb-shaped carrier, and most of the particulates have been filtered out when the intake flows out of the DPF. The carrier of a DPF is mainly made of cordierite, silicon carbide, aluminum titanate, and the like and can be selected and used according to practical conditions. However, the above-described manner of operation has the following drawbacks.
(1) Regeneration is needed when a DPF captures a certain amount of particulates. Otherwise, the engine exhaust backpressure will rise and the working state will deteriorate, seriously affecting performance and oil consumption and even blocking the DPF, which can cause engine failure. Thus, a DPF needs to be maintained regularly, and a catalyst needs to be added to it. Even with regular maintenance, the accumulation of particulates restricts an exhaust flow. As a result, the backpressure is increased, affecting the performance and fuel consumption of the engine.
(2) The dedusting effect of a DPF is unstable and fails to meet the latest filtering requirements of engine intake treatment.

Electrostatic dedusting is usually used as a gas dedusting method in industrial fields such as metallurgy and chemistry for purifying gas or recovering useful dust particles. In the prior art, due to problems including large space requirements, a complex system structure, and a poor dedusting effect, particulates in engine intake cannot be treated by electrostatic dedusting.

Environmental pollution caused by engines mainly comes from the exhaust products of engines, i.e., engine tail gas. At present, the following conventional technical route is used for tail gas purification of diesel engines. An oxidation catalyst (DOC) is used to remove hydrocarbons (THC) and CO, while low-valence NO is oxidized into high-valence NO₂. After the DOC, the particulates (PM) are filtered with a diesel particulate filter DPF; urea is sprayed after the diesel particulate filter DPF, the urea is decomposed into ammonia NH₃ in the exhaust, NH₃ then undergoes a selective catalytic reduction reaction with NO₂ over a selective catalyst (SCR) to generate nitrogen N₂ and water, and finally excessive NH₃ is oxidized into N₂ and water on an ammonia oxidation catalyst (ASC). A large amount of urea needs to be added for purification of engine tail gas in the prior art, and the purifying effect is ordinary.

### Summary of the Invention

In view of all of the above shortcomings of the prior art, the present invention aims at providing an engine emission treatment system and method for solving at least one of the problems of the prior art dedusting systems, which are that regular maintenance is needed, the effect is unstable, a large amount of urea needs to be added to treat the tail gas, and the effect of tail gas purification is ordinary. Through the present invention there are new problems in the existing ionization dedusting technology by research and solved by a series of technical means. For example, when a tail gas temperature or an engine temperature is lower than a certain temperature, the engine tail gas may contain liquid water. In the present invention, a water removing device is installed in front of a tail gas electric field device to remove the liquid water in the tail gas and improve the ionization dedusting effect. Under a high temperature condition, by controlling the ratio of the dust collection area of an anode to the discharge area of a cathode of the tail gas electric field device, the length of the cathode/the anode, the distance between the electrode and an auxiliary electric field, and other parameters, electric field coupling is effectively reduced, and the tail gas electric field device is allowed to still have efficient dust collecting capability under high temperature impacts. Therefore, the present invention is suitable for operation under severe conditions and ensures the dedusting efficiency. Thus, from a commercial perspective, the present invention is absolutely applicable to engines.

The present invention provides an engine emission treatment system including at least one of a tail gas dedusting system and a tail gas ozone purification system. The tail gas dedusting system includes a tail gas dedusting system entrance, a tail gas dedusting system exit, and a tail gas electric field device. The tail gas ozone purification system includes a reaction field configured to mix and react an ozone stream with a tail gas stream. This engine emission treatment system can effectively treat engine emissions such that the engine emissions are cleaner.

In order to achieve the above objects and other relevant objects, the following examples are provided in the present invention.
1. Example 1 of the present invention provides an engine emission treatment system.
2. Example 2 of the present invention includes the features of Example 1 and further includes a tail gas dedusting system, the tail gas dedusting system including a tail gas dedusting system entrance, a tail gas dedusting system exit, and a tail gas electric field device.
3. Example1 3 of the present invention includes the features of Example 2, wherein the tail gas electric field device includes a tail gas electric field device entrance, a tail gas electric field device exit, a tail gas dedusting electric field cathode, and a tail gas dedusting electric field anode, and wherein the tail gas dedusting electric field cathode and the tail gas dedusting electric field anode are used to generate a tail gas ionization dedusting electric field.
4. Example 4 of the present invention includes the features of Example 3, wherein the tail gas dedusting electric field anode includes a first anode portion and a second anode portion, the first anode portion is close to the tail gas electric field device entrance, the second anode portion is close to the tail gas electric field device exit, and at least one cathode supporting plate is provided between the first anode portion and the second anode portion.
5. Example 5 of the present invention includes the features of Example 4, wherein the tail gas electric field device further includes a tail gas insulation mechanism configured to realize insulation between the cathode supporting plate and the tail gas dedusting electric field anode.
6. Example 6 of the present invention includes the features of Example 5, wherein an electric field flow channel is formed between the tail gas dedusting electric field anode and the tail gas dedusting electric field cathode, and the tail gas insulation mechanism is provided outside the electric field flow channel.
7. Example 7 of the present invention includes the features of Example 5 or 6, wherein the tail gas insulation mechanism includes an insulation portion and a heat-protection portion. The insulation portion is made of a ceramic material or a glass material.
8. Example 8 of the present invention includes the features of Example 7, wherein the insulation portion is an umbrella-shaped string ceramic column, an umbrella-shaped string glass column, a column-shaped string ceramic column or a column-shaped glass column, with the interior and exterior of the umbrella or the interior and exterior of the column being glazed.
9. Example 9 of the present invention includes the features of Example 8, wherein the distance between an outer edge of the umbrella-shaped string ceramic column or the umbrella-shaped string glass column and the tail gas dedusting electric field anode is greater than 1.4 times an electric field distance, the sum of the distances between umbrella protruding edges of the umbrella-shaped string ceramic column or the umbrella-shaped string glass column is greater than 1.4 times the insulation distance of the umbrella-shaped string ceramic column or the umbrella-shaped string glass column, and the total length of the inner depth of the umbrella edge of the umbrella-shaped string ceramic column or the umbrella-shaped string glass column is greater than 1.4 times the insulation distance of the umbrella-shaped string ceramic column or the umbrella-shaped string glass column.
10. Example 10 of the present invention includes the features of any one of Examples 4 to 9, wherein the length of the first anode portion accounts for 1/10 to 1/4, 1/4 to 1/3, 1/3 to 1/2, 1/2 to 2/3, 2/3 to 3/4, or 3/4 to 9/10 of the length of the tail gas dedusting electric field anode.
11. Example 11 of the present invention includes the features of any one of Examples 4 to 10, wherein the first anode portion has a sufficient length so as to eliminate a part of dust, reduce dust accumulated on the tail gas insulation mechanism and the cathode supporting plate, and reduce electrical breakdown caused by dust.
12. Example 12 of the present invention includes the features of any one of Examples 4 to 11, wherein the second anode portion includes a dust accumulation section and a reserved dust accumulation section.
13. Example 13 of the present invention includes the features of any one of Examples 3 to 12, wherein the tail gas dedusting electric field cathode includes at least one electrode bar.
14. Example 14 of the present invention includes the features of Example 13, wherein the electrode bar has a diameter of no more than 3 mm.
15. Example 15 of the present invention includes the features of Example 13 or 14, wherein the electrode bar has a needle shape, a polygonal shape, a burr shape, a threaded rod shape, or a columnar shape.
16. Example 16 of the present invention includes the features of any one of Examples 3 to 15, wherein the tail gas dedusting electric field anode is composed of hollow tube bundles.
17. Example 17 of the present invention includes the features of Example 16, wherein a hollow cross section of the tube bundle of the tail gas dedusting electric field anode has a circular shape or a polygonal shape.
18. Example 18 of the present invention includes the features of Example 17, wherein the polygonal shape is a hexagonal shape.
19. Example 19 of the present invention includes the features of any one of Examples 15 to 18, wherein the tube bundle of the tail gas dedusting electric field anode has a honeycomb shape.
20. Example 20 of the present invention includes the features of any one of Examples 3 to 19, wherein the tail gas dedusting electric field cathode is provided in the tail gas dedusting electric field anode in a penetrating manner.
21. Example 21 of the present invention includes the features of any one of Examples 3 to 20, wherein the tail gas electric field device performs a carbon black removing treatment when the dust is accumulated to a certain extent in the electric field.
22. Example 22 of the present invention includes the features of Example 21, wherein the tail gas electric field device detects an electric field current to determine whether the dust is accumulated to a certain extent and whether the carbon black removing treatment is needed.
23. Example 23 of the present invention includes the features of Example 21 or 22, wherein the tail gas electric field device increases an electric field voltage to perform the carbon black removing treatment.
24. Example 24 of the present invention includes the features of Example 21 or 22, wherein the tail gas electric field device performs the carbon black removing treatment using an electric field back corona discharge phenomenon.
25. Example 25 of the present invention includes the features of Example 21 or 22, wherein the tail gas electric field device uses an electric field back corona discharge phenomenon, increases a voltage, and restricts an injection current so that rapid discharge occurring at a deposition position of the anode generates plasmas, and the plasmas enable organic components of the carbon black to be deeply oxidized and break polymer bonds to form small molecular carbon dioxide and water, thus performing the carbon black removing treatment.
26. Example 26 of the present invention includes the features of any one of Examples 3 to 25, wherein the tail gas dedusting electric field anode has a length of 10-90 mm and the tail gas dedusting electric field cathode has a length of 10-90 mm.
27. Example 27 of the present invention includes the features of Example 26, wherein when the electric field has a temperature of 200°C, the corresponding dust collecting efficiency is 99.9%.
28. Example 28 of the present invention includes the features of Example 26 or 27, wherein when the electric field has a temperature of 400°C, the corresponding dust collecting efficiency is 90%.
29. Example 29 of the present invention includes the features of any one of Examples 26 to 28, wherein when the electric field has a temperature of 500°C, the corresponding dust collecting efficiency is 50%.
30. Example 30 of the present invention includes the features of any one of Examples 3 to 29, wherein the tail gas electric field device further includes an auxiliary electric field unit configured to generate an auxiliary electric field that is not parallel to the tail gas ionization dedusting electric field.
31. Example 31 of the present invention includes the features of any one of Examples 3 to 29, wherein the tail gas electric field device further includes an auxiliary electric field unit, the tail gas ionization dedusting electric field includes a flow channel, and the auxiliary electric field unit is configured to generate an auxiliary electric field that is not perpendicular to the flow channel.
32. Example 32 of the present invention includes the features of Example 30 or 31, wherein the auxiliary electric field unit includes a first electrode, and the first electrode of the auxiliary electric field unit is provided at or close to an entrance of the tail gas ionization dedusting electric field.
33. Example 33 of the present invention includes the features of Example 32, wherein the first electrode is a cathode.
34. Example 34 of the present invention includes the features of Example 32 or 33, wherein the first electrode of the auxiliary electric field unit is an extension of the tail gas dedusting electric field cathode.
35. Example 35 of the present invention includes the features of Example 34, wherein the first electrode of the auxiliary electric field unit and the tail gas dedusting electric field anode have an included angle α, wherein 0°<α≤125°, 45°≤α≤125°, 60°≤α≤100°, or α=90°.
36. Example 36 of the present invention includes the features of any one of Examples 30 to 35, wherein the auxiliary electric field unit includes a second electrode, and the second electrode of the auxiliary electric field unit is provided at or close to an exit of the tail gas ionization dedusting electric field.
37. Example 37 of the present invention includes the features of Example 36, wherein the second electrode is an anode.
38. Example 38 of the present invention includes the features of Example 36 or 37, wherein the second electrode of the auxiliary electric field unit is an extension of the tail gas dedusting electric field anode.
39. Example 39 of the present invention includes the features of Example 38, wherein the second electrode of the auxiliary electric field unit and the tail gas dedusting electric field cathode have an included angle α, wherein 0 °<α≤125°, 45°≤α≤125°, 60°≤α≤100°, or α=90°.
40. Example 40 of the present invention includes the features of any one of Examples 30 to 33, 36 and 37, wherein electrodes of the auxiliary electric field and electrodes of the tail gas ionization dedusting electric field are provided independently of each other.
41. Example 41 of the present invention includes the features of any one of Examples 3 to 40, wherein the ratio of the dust accumulation area of the tail gas dedusting electric field anode to the discharge area of the tail gas dedusting electric field cathode is 1.667:1-1680:1.
42. Example 42 of the present invention includes the features of any one of Examples 3 to 40, wherein the ratio of the dust accumulation area of the tail gas dedusting electric field anode to the discharge area of the tail gas dedusting electric field cathode is 6.67:1-56.67:1.
43. Example 43 of the present invention includes the features of any one of Examples 3 to 42, wherein the tail gas dedusting electric field cathode has a diameter of 1-3 mm, and the inter-electrode distance between the tail gas dedusting electric field anode and the tail gas dedusting electric field cathode is 2.5-139.9 mm. The ratio of the dust accumulation area of the tail gas dedusting electric field anode to the discharge area of the tail gas dedusting electric field cathode is 1.667:1-1680:1.
44. Example 44 of the present invention includes the features of any one of Examples 3 to 42, wherein the inter-electrode distance between the tail gas dedusting electric field anode and the tail gas dedusting electric field cathode is less than 150 mm.
45. Example 45 of the present invention includes the features of any one of Examples 3 to 42, wherein the inter-electrode distance between the tail gas dedusting electric field anode and the tail gas dedusting electric field cathode is 2.5-139.9 mm.
46. Example 46 of the present invention includes the features of any one of Examples 3 to 42, wherein the inter-electrode distance between the tail gas dedusting electric field anode and the tail gas dedusting electric field cathode is 5-100mm.
47. Example 47 of the present invention includes the features of any one of Examples 3 to 46, wherein the tail gas dedusting electric field anode has a length of 10-180 mm.
48. Example 48 of the present invention includes the features of any one of Examples 3 to 46, wherein the tail gas dedusting electric field anode has a length of 60-180 mm.
49. Example 49 of the present invention includes the features of any one of Examples 3 to 48, wherein the tail gas dedusting electric field cathode has a length of 30-180 mm.
50. Example 50 of the present invention includes the features of any one of Examples 3 to 48, wherein the tail gas dedusting electric field cathode has a length of 54-176mm.
51. Example 51 of the present invention includes the features of any one of Examples 41 to 50, wherein when running, the coupling time of the tail gas ionization dedusting electric field is ≤3.
52. Example 52 of the present invention includes the features of any one of Examples 30 to 50, wherein when running, the coupling time of the tail gas ionization dedusting electric field is ≤3.
53. Example 53 of the present invention includes the features of any one of Examples 3 to 52, wherein the value of the voltage of the tail gas ionization dedusting electric field is in the range of 1 kv-50 kv.
54. Example 54 of the present invention includes the features of any one of Examples 3 to 53, wherein the tail gas electric field device further includes a plurality of connection housings, and serially connected electric field stages are connected by the connection housings.
55. Example 55 of the present invention includes the features of Example 54, wherein the distance between adjacent electric field stages is greater than 1.4 times the inter-electrode distance.
56. Example 56 of the present invention includes the features of any one of Examples 3 to 55, wherein the tail gas electric field device further includes a tail gas front electrode, and the tail gas front electrode is between the tail gas electric field device entrance and the tail gas ionization dedusting electric field formed by the tail gas dedusting electric field anode and the tail gas dedusting electric field cathode.
57. Example 57 of the present invention includes the features of Example 56, wherein the tail gas front electrode has a point shape, a linear shape, a net shape, a perforated plate shape, a plate shape, a needle rod shape, a ball cage shape, a box shape, a tubular shape, a natural shape of a substance, or a processed shape of a substance.
58. Example 58 of the present invention includes the features of Example 56 or 57, wherein the tail gas front electrode is provided with a tail gas through hole.
59. Example 59 of the present invention includes the features of Example 58, wherein the tail gas through hole has a polygonal shape, a circular shape, an oval shape, a square shape, a rectangular shape, a trapezoidal shape, or a diamond shape.
60. Example 60 of the present invention includes the features of Example 58 or 59, wherein the tail gas through hole has a diameter of 0.1-3 mm.
61. Example 61 of the present invention includes the features of any one of Examples 56 to 60, wherein the tail gas front electrode is in one or a combination of more states of solid, liquid, a gas molecular group, or a plasma.
62. Example 62 of the present invention includes the features of any one of Examples 56 to 61, wherein the tail gas front electrode is an electrically conductive substance in a mixed state, a natural mixed electrically conductive substance of organism, or an electrically conductive substance formed by manual processing of an object.
63. Example 63 of the present invention includes the features of any one of Examples 56 to 62, wherein the tail gas front electrode is 304 steel or graphite.
64. Example 64 of the present invention includes the features of any one of Examples 56 to 62, wherein the tail gas front electrode is an ion-containing electrically conductive liquid.
65. Example 65 of the present invention includes the features of any one of Examples 56 to 64, wherein during working, before a gas carrying pollutants enters the tail gas ionization dedusting electric field formed by the tail gas dedusting electric field cathode and the tail gas dedusting electric field anode and when the gas carrying pollutants passes through the tail gas front electrode, the tail gas front electrode enables the pollutants in the gas to be charged.
66. Example 66 of the present invention includes the features of Example 65, wherein when the gas carrying pollutants enters the tail gas ionization dedusting electric field, the tail gas dedusting electric field anode applies an attractive force to the charged pollutants such that the pollutants move towards the tail gas dedusting electric field anode until the pollutants are attached to the tail gas dedusting electric field anode.
67. Example 67 of the present invention includes the features of Example 65 or 66, wherein the tail gas front electrode directs electrons into the pollutants, and the electrons are transferred among the pollutants located between the tail gas front electrode and the tail gas dedusting electric field anode to enable more pollutants to be charged.
68. Example 68 of the present invention includes the features of any one of Examples 64 to 66, wherein the tail gas front electrode and the tail gas dedusting electric field anode conduct electrons therebetween through the pollutants and form a current.
69. Example 69 of the present invention includes the features of any one of Examples 65 to 68, wherein the tail gas front electrode enables the pollutants to be charged by contacting the pollutants.
70. Example 70 of the present invention includes the features of any one of Examples 65 to 69, wherein the tail gas front electrode enables the pollutants to be charged by energy fluctuation.
71. Example 71 of the present invention includes the features of any one of Examples 65 to 70, wherein the tail gas front electrode is provided with a tail gas through hole.
72. Example 72 of the present invention includes the features of any one of Examples 56 to 71, wherein the tail gas front electrode has a linear shape and the tail gas dedusting electric field anode has a planar shape.
73. Example 73 of the present invention includes the features of any one of Examples 56 to 72, wherein the tail gas front electrode is perpendicular to the tail gas dedusting electric field anode.
74. Example 74 of the present invention includes the features of any one of Examples 56 to 73, wherein the tail gas front electrode is parallel to the tail gas dedusting electric field anode.
75. Example 75 of the present invention includes the features of any one of Examples 56 to 74, wherein the tail gas front electrode has a curved shape or an arcuate shape.
76. Example 76 of the present invention includes the features of any one of Examples 56 to 75, wherein the tail gas front electrode uses a wire mesh.
77. Example 77 of the present invention includes the features of any one of Examples 56 to 76, wherein a voltage between the tail gas front electrode and the tail gas dedusting electric field anode is different from a voltage between the tail gas dedusting electric field cathode and the tail gas dedusting electric field anode.
78. Example 78 of the present invention includes the features of any one of Examples 56 to 77, wherein the voltage between the tail gas front electrode and the tail gas dedusting electric field anode is lower than a corona inception voltage.
79. Example 79 of the present invention includes the features of any one of Examples 56 to 78, wherein the voltage between the tail gas front electrode and the tail gas dedusting electric field anode is 0.1 kv/mm-2 kv/mm.
80. Example 80 of the present invention includes the features of any one of Examples 56 to 79, wherein the tail gas electric field device includes a tail gas flow channel, the tail gas front electrode is located in the tail gas flow channel, and the cross-sectional area of the tail gas front electrode to the cross-sectional area of the tail gas flow channel is 99%-10%, 90-10%, 80-20%, 70-30%, 60-40%, or 50%.
81. Example 81 of the present invention includes the features of any one of Examples 3 to 80, wherein the tail gas electric field device includes a tail gas electret element.
82. Example 82 of the present invention includes the features of Example 81, wherein when the tail gas dedusting electric field anode and the tail gas dedusting electric field cathode are powered on, the tail gas electret element is in the tail gas ionization dedusting electric field.
83. Example 83 of the present invention includes the features of Example 81 or 82, wherein the tail gas electret element is close to the tail gas electric field device exit, or the tail gas electret element is provided at the tail gas electric field device exit.
84. Example 84 of the present invention includes the features of any one of Examples 81 to 83, wherein the tail gas dedusting electric field anode and the tail gas dedusting electric field cathode form a tail gas flow channel, and the tail gas electret element is provided in the tail gas flow channel.
85. Example 85 of the present invention includes the features of Example 84, wherein the tail gas flow channel includes a tail gas flow channel exit, and the tail gas electret element is close to the tail gas flow channel exit or the tail gas electret element is provided at the tail gas flow channel exit.
86. Example 86 of the present invention includes the features of Example 84 or 85, wherein the cross section of the tail gas electret element in the tail gas flow channel occupies 5%-100% of the cross section of the tail gas flow channel.
87. Example 87 of the present invention includes the features of Example 86, wherein the cross section of the tail gas electret element in the tail gas flow channel occupies 10%-90%, 20%-80%, or 40%-60% of the cross section of the tail gas flow channel.
88. Example 88 of the present invention includes the features of any one of Examples 81 to 87, wherein the tail gas ionization dedusting electric field charges the tail gas electret element.
89. Example 89 of the present invention includes the features of any one of Examples 81 to 88, wherein the tail gas electret element has a porous structure.
90. Example 90 of the present invention includes the features of any one of Examples 81 to 89, wherein the tail gas electret element is a textile.
91. Example 91 of the present invention includes the features of any one of Examples 81 to 90, wherein the tail gas dedusting electric field anode has a tubular interior, the tail gas electret element has a tubular exterior, and the tail gas dedusting electric field anode is disposed around the tail gas electret element like a sleeve.
92. Example 92 of the present invention includes the features of any one of Examples 81 to 91, wherein the tail gas electret element is detachably connected with the tail gas dedusting electric field anode.
93. Example 93 of the present invention includes the features of any one of Examples 81 to 92, wherein materials forming the tail gas electret element include an inorganic compound having electret properties.
94. Example 94 of the present invention includes the features of Example 93, wherein the inorganic compound is one or a combination of compounds selected from an oxygen-containing compound, a nitrogen-containing compound, and a glass fiber.
95. Example 95 of the present invention includes the features of Example 94, wherein the oxygen-containing compound is one or a combination of compounds selected from a metal-based oxide, an oxygen-containing complex, and an oxygen-containing inorganic heteropoly acid salt.
96. Example 96 of the present invention includes the features of Example 95, wherein the metal-based oxide is one or a combination of oxides selected from aluminum oxide, zinc oxide, zirconium oxide, titanium oxide, barium oxide, tantalum oxide, silicon oxide, lead oxide, and tin oxide.
97. Example 97 of the present invention includes the features of Example 95, wherein the metal-based oxide is aluminum oxide.
98. Example 98 of the present invention includes the features of Example 95, wherein the oxygen-containing complex is one or a combination of materials selected from titanium zirconium composite oxide and titanium barium composite oxide.
99. Example 99 of the present invention includes the features of Example 95, wherein the oxygen-containing inorganic heteropoly acid salt is one or a combination of salts selected from zirconium titanate, lead zirconate titanate, and barium titanate.
100. Example 100 of the present invention includes the features of Example 94, wherein the nitrogen-containing compound is silicon nitride.
101. Example 101 of the present invention includes the features of any one of Examples 81 to 100, wherein the materials forming the tail gas electret element include an organic compound having electret properties.
102. Example 102 of the present invention includes the features of Example 101, wherein the organic compound is one or a combination of compounds selected from fluoropolymers, polycarbonates, PP, PE, PVC, natural wax, resin, and rosin.
103. Example 103 of the present invention includes the features of Example 102, wherein the fluoropolymer is one or a combination of materials selected from polytetrafluoroethylene, fluorinated ethylene propylene, soluble polytetrafluoroethylene , and polyvinylidene fluoride.
104. Example 104 of the present invention includes the features of Example 102, wherein the fluoropolymer is polytetrafluoroethylene.
105. Example 105 of the present invention includes the features of any one of Examples 2 to 104 and further includes a tail gas equalizing device.
106. Example 106 of the present invention includes the features of Example 105, wherein the tail gas equalizing device is disposed between the tail gas dedusting system entrance and the tail gas ionization dedusting electric field formed by the tail gas dedusting electric field anode and the tail gas dedusting electric field cathode, and when the tail gas dedusting electric field anode is a square body, the tail gas equalizing device includes an intake pipe located on one side of the tail gas dedusting electric field anode and an outlet pipe located on the other side, wherein the intake pipe is opposite to the outlet pipe.
107. Example 107 of the present invention includes the features of Example 105, wherein the tail gas equalizing device is disposed between the tail gas dedusting system entrance and the tail gas ionization dedusting electric field formed by the tail gas dedusting electric field anode and the tail gas dedusting electric field cathode, and when the tail gas dedusting electric field anode is a cylinder, the tail gas equalizing device is composed of a plurality of rotatable equalizing blades.
108. Example 108 of the present invention includes the features of Example 105, wherein the tail gas equalizing device includes a first venturi plate equalizing mechanism and a second venturi plate equalizing mechanism provided at an outlet end of the tail gas dedusting electric field anode, the first venturi plate equalizing mechanism is provided with intake holes, the second venturi plate equalizing mechanism is provided with outlet holes, the intake holes and the outlet holes are arranged in a staggered manner, a front surface is used for gas intake, and a side surface is used for gas discharge, thereby forming a cyclone structure.
109. Example 109 of the present invention includes the features of any one of Examples 2 to 108 and further includes an oxygen supplementing device configured to add an oxygen-containing gas before the tail gas ionization dedusting electric field.
110. Example 110 of the present invention includes the features of Example 109, wherein the oxygen supplementing device adds oxygen by purely increasing oxygen, introducing external air, introducing compressed air, and/or introducing ozone.
111. Example 111 of the present invention includes the features of Example 109 or 110, wherein an oxygen supplemental amount depends at least upon the content of particles in the tail gas.
112. Example 112 of the present invention includes the features of any one of Examples 2 to 111 and further includes a water removing device configured to remove liquid water before the tail gas electric field device entrance.
113. Example 113 of the present invention includes the features of Example 112, wherein when the tail gas temperature or the engine temperature is lower than a certain temperature, the water removing device removes liquid water in the tail gas.
114. Example 114 of the present invention includes the features of Example 113, wherein the certain temperature is above 90°C and below 100°C.
115. Example 115 of the present invention includes the features of Example 113, wherein the certain temperature is above 80°C and below 90°C.
116. Example 116 of the present invention includes the features of Example 113, wherein the certain temperature is below 80°C.
117. Example 117 of the present invention includes the features of Examples 112 to 116, wherein the water removing device is an electrocoagulation device.
118. Example 118 of the present invention includes the features of any one of Examples 2 to 117 and further includes a tail gas cooling device configured to reduce the tail gas temperature before the tail gas electric field device entrance.
119. Example 119 of the present invention includes the features of Example 118, wherein the tail gas cooling device includes a heat exchange unit configured to perform heat exchange with tail gas of the engine so as to heat a liquid heat exchange medium in the heat exchange unit to obtain a gaseous heat exchange medium.
120. Example 120 of the present invention includes the features of Example 119, wherein the heat exchange unit includes the following:
   a tail gas passing cavity which communicates with an exhaust pipeline of the engine, wherein the tail gas passing cavity is configured for the tail gas of the engine to pass through it; and
   a medium gasification cavity configured to convert the liquid heat exchange medium into a gaseous state after undergoing the heat exchange with the tail gas.
121. Example 121 of the present invention includes the features of Example 119 or 120 and further includes a driving force generating unit, wherein the driving force generating unit is configured to convert heat energy of the heat exchange medium and/or heat energy of the tail gas into mechanical energy.
122. Example 122 of the present invention includes the features of Example 121, wherein the driving force generating unit includes a turbofan.
123. Example 123 of the present invention includes the features of Example 122, wherein the turbofan includes:
   a turbofan shaft; and
   a medium cavity turbofan assembly mounted on the turbofan shaft, wherein the medium cavity turbofan assembly is located in the medium gasification cavity.
124. Example 124 of the present invention includes the features of Example 123, wherein the medium cavity turbofan assembly includes a medium cavity diversion fan and a medium cavity power fan.
125. Example 125 of the present invention includes the features of any one of Examples 122 to 124, wherein the turbofan shaft includes:
   a tail gas cavity turbofan assembly which is mounted on the turbofan shaft and located in the tail gas passing cavity.
126. Example 126 of the present invention includes the features of Example 125, wherein the tail gas cavity turbofan assembly includes a tail gas cavity diversion fan and a tail gas cavity power fan.
127. Example 127 of the present invention includes the features of any one of Examples 121 to 126, wherein the tail gas cooling device further includes an electricity generating unit which is configured to convert mechanical energy produced by the driving force generating unit into electric energy.
128. Example 128 of the present invention includes the features of Example 127, wherein the electricity generating unit includes a generator stator and a generator rotor, and the generator rotor is connected with a turbofan shaft of the driving force generating unit.
129. Example 129 of the present invention includes the features of Example 127 or 128, wherein the electricity generating unit includes a battery assembly.
130. Example 130 of the present invention includes the features of any one of Examples 127 to 129, wherein the electricity generating unit includes a generator adjusting and controlling component which is configured to adjust an electric torque of the generator.
131. Example 131 of the present invention includes the features of any one of Examples 121 to 130, wherein the tail gas cooling device further includes a medium transfer unit, and the medium transfer unit is connected between the heat exchange unit and the driving force generating unit.
132. Example 132 of the present invention includes the features of Example 131, wherein the medium transfer unit includes a reversing duct.
133. Example 133 of the present invention includes the features of Example 131, wherein the medium transfer unit includes a pressure-bearing pipeline.
134. Example 134 of the present invention includes the features of any one of Examples 127 to 133, wherein the tail gas cooling device further includes a coupling unit, and the coupling unit is electrically connected between the driving force generating unit and the electricity generating unit.
135. Example 135 of the present invention includes the features of Example 134, wherein the coupling unit includes an electromagnetic coupler.
136. Example 136 of the present invention includes the features of any one of Examples 119 to 135, wherein the tail gas cooling device further includes a thermal insulation pipeline, and the thermal insulation pipeline is connected between a tail gas pipeline and the heat exchange unit of the engine.
137. Example 137 of the present invention includes the features of any one of Examples 118 to 136, wherein the tail gas cooling device includes a blower, and the blower functions to cool the tail gas before introducing air into the tail gas electric field device entrance.
138. Example 138 of the present invention includes the features of Example 137, wherein the amount of air which is introduced is 50% to 300% of the tail gas.
139. Example 139 of the present invention includes the features of Example 137, wherein the amount of air which is introduced is 100% to 180% of the tail gas.
140. Example 140 of the present invention includes the features of Example 137, wherein the amount of air which is introduced is 120% to 150% of the tail gas.
141. Example 141 of the present invention includes the features of Example 120, wherein the oxygen supplementing device includes a blower, and the blower functions to cool the tail gas before introducing air into the tail gas electric field device entrance.
142. Example 142 of the present invention includes the features of Example 141, wherein the amount of air which is introduced is 50% to 300% of the tail gas.
143. Example 143 of the present invention includes the features of Example 141, wherein the amount of air which is introduced is 100% to 180% of the tail gas.
144. Example 144 of the present invention includes the features of Example 141, wherein the amount of air which is introduced is 120% to 150% of the tail gas.
145. Example 145 of the present invention includes the features of any one of Examples 1-144 and further includes a tail gas ozone purification system, wherein the tail gas ozone purification system includes a reaction field for mixing and reacting an ozone stream with a tail gas stream.
146. Example 146 of the present invention includes the features of Example 145, wherein the reaction field includes a pipeline and/or a reactor.
147. Example 147 of the present invention includes the features of Example 146 and further includes at least one of the following technical features:
   1) a pipe-segment diameter of the pipeline is 100-200 mm;
   2) the length of the pipeline is greater than 0.1 times the pipe diameter;
   3) the reactor is at least one type of reactor selected from the following:
      a first reactor: The first reactor has a reaction chamber in which the tail gas is mixed and reacted with the ozone;
      a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
      a third reactor: the reactor includes a plurality of carrier units which provide reaction sites; and
      a fourth reactor: The fourth reactor includes a catalyst unit which is configured to promote oxidization reaction of the tail gas.
   4) the reaction field is provided with an ozone entrance which is at least one selected from a spout, a spray grid, a nozzle, a swirl nozzle, and a spout provided with a venturi tube; and
   5) the reaction field is provided with an ozone entrance through which the ozone enters the reaction field to contact the tail gas, and the ozone entrance is provided in at least one of the following directions: a direction opposite to a flow direction of the tail gas, a direction perpendicular to the flow direction of the tail gas, a direction tangent to the flow direction of the tail gas, a direction inserted in the flow direction of the tail gas, and multiple directions overcome gravity.
148. Example 148 of the present invention includes the features of any one of Examples 145 to 147, wherein the reaction field includes an exhaust pipe, a heat retainer device, or a catalytic converter.
149. Example 149 of the present invention includes the features of any one of Examples 145 to 148, wherein the reaction field has a temperature of -50-200°C.
150. Example 150 of the present invention includes the features of Example 149, wherein the reaction field has a temperature of 60-70°C.
151. Example 151 of the present invention includes the features of any one of Examples 145 to 150, wherein the tail gas ozone purification system further includes an ozone source configured to provide an ozone stream.
152. Example 152 of the present invention includes the features of Example 151, wherein the ozone source includes an ozone storage unit and/or an ozone generator.
153. Example 153 of the present invention includes the features of Example 152, wherein the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.
154. Example 154 of the present invention includes the features of Example 152, wherein the ozone generator includes an electrode, a catalyst layer is provided on the electrode, and the catalyst layer includes an oxidation catalytic bond cracking selective catalyst layer.
155. Example 155 of the present invention includes the features of Example 154, wherein the electrode includes a high-voltage electrode or a high-voltage electrode having a barrier dielectric layer, when the electrode includes a high-voltage electrode, the oxidation catalytic bond cracking selective catalyst layer is provided on a surface of the high-voltage electrode, and when the electrode includes a high-voltage electrode having a barrier dielectric layer, the oxidation catalytic bond cracking selective catalyst layer is provided on a surface of the barrier dielectric layer.
156. Example 156 of the present invention includes the features of Example 155, wherein the barrier dielectric layer is at least one material selected from a ceramic plate, a ceramic pipe, a quartz glass plate, a quartz plate, and a quartz pipe.
157. Example 157 of the present invention includes the features of Example 155, wherein when the electrode includes a high-voltage electrode, the oxidation catalytic bond cracking selective catalyst layer has a thickness of 1-3 mm, and when the electrode includes a high-voltage electrode having a barrier dielectric layer, the load capability of the oxidation catalytic bond cracking selective catalyst layer is 1-12 wt% of the barrier dielectric layer.
158. Example 158 of the present invention includes the features of any one of Examples 154 to 157, wherein the oxidation catalytic bond cracking selective catalyst layer includes the following components in percentages by weight:
   5-15% of an active component; and
   85-95% of a coating layer,
   the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
   the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.
159. Example 159 of the present invention includes the features of Example 158, wherein the alkaline earth metal element is at least one element selected from the group consisting of magnesium, strontium, and calcium.
160. Example 160 of the present invention includes the features of Example 158, wherein the transition metal element is at least one element selected from the group consisting of titanium, manganese, zinc, copper, iron, nickel, cobalt, yttrium, and zirconium.
161. Example 161 of the present invention includes the features of Example 158, wherein the fourth main group metal element is tin.
162. Example 162 of the present invention includes the features of Example 158, wherein the noble metal element is at least one element selected from the group consisting of platinum, rhodium, palladium, gold, silver, and iridium.
163. Example 163 of the present invention includes the features of Example 158, wherein the lanthanoid rare earth element is at least one element selected from the group consisting of lanthanum, cerium, praseodymium, and samarium.
164. Example 164 of the present invention includes the features of Example 158, wherein the compound of the metallic element M is at least one compound selected from the group consisting of oxides, sulfides, sulfates, phosphates, carbonates, and perovskites.
165. Example 165 of the present invention includes the features of Example 158, wherein the porous material is at least one material selected from the group consisting of a molecular sieve, diatomaceous earth, zeolite, and a carbon nanotube.
166. Example 166 of the present invention includes the features of Example 158, wherein the layered material is at least one material selected from the group consisting of graphene and graphite.
167. Example 167 of the present invention includes the features of any one of Examples 145 to 166, wherein the tail gas ozone purification system further includes an ozone amount control device configured to control the amount of ozone so as to effectively oxidize gas components to be treated in tail gas, and the ozone amount control device includes a control unit.
168. Example 168 of the present invention includes the features of Example 167, wherein the ozone amount control device further includes a pre-ozone-treatment tail gas component detection unit configured to detect the contents of components in the tail gas before the ozone treatment.
169. Example 169 of the present invention includes the features of any one of Examples 167 to 168, wherein the control unit controls the amount of ozone required in the mixing and reaction according to the contents of components in the tail gas before the ozone treatment.
170. Example 170 of the present invention includes the features of Example 168 or 169, wherein the pre-ozone-treatment tail gas component detection unit is at least one unit selected from the following detection units:
   a first volatile organic compound detection unit configured to detect the content of volatile organic compounds in the tail gas before the ozone treatment;
   a first CO detection unit configured to detect the CO content in the tail gas before the ozone treatment; and
   a first nitrogen oxide detection unit configured to detect the nitrogen oxide content in the tail gas before the ozone treatment.
171. Example 171 of the present invention includes the features of Example 170, wherein the control unit controls the amount of ozone required in the mixing and reaction according to an output value of at least one of the pre-ozone-treatment tail gas component detection units.
172. Example 172 of the present invention includes the features of any one of Examples 167 to 171, wherein the control unit is configured to control the amount of ozone required in the mixing and reaction according to a preset mathematical model.
173. Example 173 of the present invention includes the features of any one of Examples 167 to 172, wherein the control unit is configured to control the amount of ozone required in the mixing and reaction according to a theoretically estimated value.
174. Example 174 of the present invention includes the features of any one of the above Example 173, wherein the theoretically estimated value is a molar ratio of an ozone introduction amount to a substance to be treated in the tail gas, which is in the range of 2-10.
175. Example 175 of the present invention includes the features of any one of Examples 167 to 174, wherein the ozone amount control device includes a post-ozone-treatment tail gas component detection unit configured to detect the contents of components in the tail gas after the ozone treatment.
176. Example 176 of the present invention includes the features of any one of Examples 167 to 175, wherein the control unit controls the amount of ozone required in the mixing and reaction according to the contents of components in the tail gas after the ozone treatment.
177. Example 177 of the present invention includes the features of Example 175 or 176, wherein the post-ozone-treatment tail gas component detection unit is at least one unit selected from the following detection units:
   a first ozone detection unit configured to detect the ozone content in the tail gas after the ozone treatment;
   a second volatile organic compound detection unit configured to detect the content of volatile organic compounds in the tail gas after the ozone treatment;
   a second CO detection unit configured to detect the CO content in the tail gas after the ozone treatment; and
   a second nitrogen oxide detection unit configured to detect the nitrogen oxide content in the tail gas after the ozone treatment.
178. Example 178 of the present invention includes the features of Example 177, wherein the control unit controls the amount of ozone according to an output value of at least one of the post-ozone-treatment tail gas component detection units.
179. Example 179 of the present invention includes the features of any one of Examples 145 to 178, wherein the tail gas ozone purification system further includes a denitration device configured to remove nitric acid in a product resulting from mixing and reacting the ozone stream with the tail gas stream.
180. Example 180 of the present invention includes the features of Example 179, wherein the denitration device includes an electrocoagulation device, and the electrocoagulation device includes:
   an electrocoagulation flow channel;
   a first electrode which is located in the electrocoagulation flow channel; and a second electrode.
181. Example 181 of the present invention includes the features of Example 180, wherein the first electrode is in one or a combination of more states of solid, liquid, a gas molecular group, a plasma, an electrically conductive substance in a mixed state, a natural mixed electrically conductive of organism, or an electrically conductive substance formed by manual processing of an object.
182. Example 182 of the present invention includes the features of Example 180 or 181, wherein the first electrode is solid metal, graphite, or 304 steel.
183. Example 183 of the present invention includes the features of any one of Examples 180 to 182, wherein the first electrode has a point shape, a linear shape, a net shape, a perforated plate shape, a plate shape, a needle rod shape, a ball cage shape, a box shape, a tubular shape, a natural shape of a substance, or a processed shape of a substance.
184. Example 184 of the present invention includes the features of any one of Examples 180 to 183, wherein the first electrode is provided with a front through hole.
185. Example 185 of the present invention includes the features of Example 184, wherein the front through hole has a polygonal shape, a circular shape, an oval shape, a square shape, a rectangular shape, a trapezoidal shape, or a diamond shape.
186. Example 186 of the present invention includes the features of Example 184 or 185, wherein the front through hole has a diameter of 0.1-3 mm.
187. Example 187 of the present invention includes the features of any one of Examples 180 to 186, wherein the second electrode has a multilayered net shape, a net shape, a perforated plate shape, a tubular shape, a barrel shape, a ball cage shape, a box shape, a plate shape, a particle-stacked layer shape, a bent plate shape, or a panel shape.
188. Example 188 of the present invention includes the features of any one of Examples 180 to 187, wherein the second electrode is provided with a rear through hole.
189. Example 189 of the present invention includes the features of Example 188, wherein the rear through hole has a polygonal shape, a circular shape, an oval shape, a square shape, a rectangular shape, a trapezoidal shape, or a diamond shape.
190. Example 190 of the present invention includes the features of Example 188 or 189, wherein the rear through hole has a diameter of 0.1-3 mm.
191. Example 191 of the present invention includes the features of any one of Examples 180 to 190, wherein the second electrode is made of an electrically conductive substance.
192. Example 192 of the present invention includes the features of any one of Examples 180 to 191, wherein the second electrode has an electrically conductive substance on a surface thereof.
193. Example 193 of the present invention includes the features of any one of Examples 180 to 192, wherein an electrocoagulation electric field is formed between the first electrode and the second electrode, and the electrocoagulation electric field is one or a combination of electric fields selected from a point-plane electric field, a line-plane electric field, a net-plane electric field, a point-barrel electric field, a line-barrel electric field, and a net-barrel electric field.
194. Example 194 of the present invention includes the features of any one of Examples 180 to 193, wherein the first electrode has a linear shape, and the second electrode has a planar shape.
195. Example 195 of the present invention includes the features of any one of Examples 180 to 194, wherein the first electrode is perpendicular to the second electrode.
196. Example 196 of the present invention includes the features of any one of Examples 180 to 195, wherein the first electrode is parallel to the second electrode.
197. Example 197 of the present invention includes the features of any one of Examples 180 to 196, wherein the first electrode has a curved shape or an arcuate shape.
198. Example 198 of the present invention includes the features of any one of Examples 180 to 197, wherein the first electrode and the second electrode both have a planar shape, and the first electrode is parallel to the second electrode.
199. Example 199 of the present invention includes the features of any one of Examples 180 to 198, wherein the first electrode uses a wire mesh.
200. Example 200 of the present invention includes the features of any one of Examples 180 to 199, wherein the first electrode has a flat surface shape or a spherical surface shape.
201. Example 201 of the present invention includes the features of any one of Examples 180 to 200, wherein the second electrode has a curved surface shape or a spherical surface shape.
202. Example 202 of the present invention includes the features of any one of Examples 180 to 201, wherein the first electrode has a point shape, a linear shape, or a net shape, the second electrode has a barrel shape, the first electrode is located inside the second electrode, and the first electrode is located on a central axis of symmetry of the second electrode.
203. Example 203 of the present invention includes the features of any one of Examples 180 to 202, wherein the first electrode is electrically connected with one electrode of a power supply, and the second electrode is electrically connected with the other electrode of the power supply.
204. Example 204 of the present invention includes the features of any one of Examples 180 to 203, wherein the first electrode is electrically connected with a cathode of the power supply, and the second electrode is electrically connected with an anode of the power supply.
205. Example 205 of the present invention includes the features of Example 203 or 204, wherein the power supply has a voltage of 5-50 KV.
206. Example 206 of the present invention includes the features of any one of Examples 203 to 205, wherein the voltage of the power supply is lower than a corona inception voltage.
207. Example 207 of the present invention includes the features of any one of Examples 203 to 206, wherein the voltage of the power supply is 0.1 kv/mm-2 kv/mm.
208. Example 208 of the present invention includes the features of any one of Examples 203 to 207, wherein a voltage waveform of the power supply is a direct-current waveform, a sine waveform, or a modulated waveform.
209. Example 209 of the present invention includes the features of any one of Examples 203 to 208, wherein the power supply is an alternating power supply, and a range of variable frequency pulse of the power supply is 0.1 Hz-5 GHz.
210. Example 210 of the present invention includes the features of any one of Examples 180 to 209, wherein the first electrode and the second electrode both extend along a left-right direction, and a left end of the first electrode is located to the left of a left end of the second electrode.
211. Example 211 of the present invention includes the features of any one of Examples 180 to 210, wherein there are two second electrodes, and the first electrode is located between the two second electrodes.
212. Example 212 of the present invention includes the features of any one of Examples 180 to 211, wherein the distance between the first electrode and the second electrode is 5-50 mm.
213. Example 213 of the present invention includes the features of any one of Examples 180 to 212, wherein the first electrode and the second electrode constitute an adsorption unit, and there is a plurality of the adsorption units.
214. Example 214 of the present invention includes the features of Example 213, wherein all of the adsorption units are distributed along one or more of a left-right direction, a front-back direction, an oblique direction, or a spiral direction.
215. Example 215 of the present invention includes the features of any one of Examples 180 to 214 and further includes an electrocoagulation housing, wherein the electrocoagulation housing includes an electrocoagulation entrance, an electrocoagulation exit, and the electrocoagulation flow channel, and two ends of the electrocoagulation flow channel respectively communicate with the electrocoagulation entrance and the electrocoagulation exit.
216. Example 216 of the present invention includes the features of Example 215, wherein the electrocoagulation entrance has a circular shape, and the electrocoagulation entrance has a diameter of 300 mm-1000 mm or a diameter of 500 mm.
217. Example 217 of the present invention includes the features of Example 215 or 216, wherein the electrocoagulation exit has a circular shape, and the electrocoagulation exit has a diameter of 300 mm-1000 mm or a diameter of 500 mm.
218. Example 218 of the present invention includes the features of any one of Examples to 215 to 217, wherein the electrocoagulation housing includes a first housing portion, a second housing portion, and a third housing portion disposed in sequence in a direction from the electrocoagulation entrance to the electrocoagulation exit, the electrocoagulation entrance is located at one end of the first housing portion, and the electrocoagulation exit is located at one end of the third housing portion.
219. Example 219 of the present invention includes the features of Example 218, wherein the size of an outline of the first housing portion gradually increases in the direction from the electrocoagulation entrance to the electrocoagulation exit.
220. Example 220 of the present invention includes the features of Example 218 or 219, wherein the first housing portion has a straight tube shape.
221. Example 221 of the present invention includes the features of any one of Examples 218 to 220, wherein the second housing portion has a straight tube shape, and the first electrode and the second electrode are mounted in the second housing portion.
222. Example 222 of the present invention includes the features of any one of Examples 218 to 221, wherein the size of an outline of the third housing portion gradually decreases in the direction from the electrocoagulation entrance to the electrocoagulation exit.
223. Example 223 of the present invention includes the features of any one of Examples 218 to 222, wherein cross sections of the first housing portion, the second housing portion, and the third housing portions are all rectangular.
224. Example 224 of the present invention includes the features of any one of Examples 215 to 223, wherein the electrocoagulation housing is made of stainless steel, an aluminum alloy, an iron alloy, cloth, a sponge, a molecular sieve, activated carbon, foamed iron, or foamed silicon carbide.
225. Example 225 of the present invention includes the features of any one of Examples 180 to 224, wherein the first electrode is connected to the electrocoagulation housing through an electrocoagulation insulating part.
226. Example 226 of the present invention includes the features of Example 225, wherein the electrocoagulation insulating part is made of insulating mica.
227. Example 227 of the present invention includes the features of Example 225 or 226, wherein the electrocoagulation insulating part has a columnar shape or a tower-like shape.
228. Example 228 of the present invention includes the features of any one of Examples 180 to 227, wherein the first electrode is provided with a front connecting portion having a cylindrical shape, and the front connecting portion is fixedly connected with the electrocoagulation insulating part.
229. Example 229 of the present invention includes the features of any one of Examples 180 to 228, wherein the second electrode is provided with a rear connecting portion having a cylindrical shape, and the rear connecting portion is fixedly connected with the electrocoagulation insulating part.
230. Example 230 of the present invention includes the features of any one of Examples 180 to 229, wherein the ratio of the cross-sectional area of the first electrode to the cross-sectional area of the electrocoagulation flow channel is 99%-10%, 90-10%, 80-20%, 70-30%, 60-40%, or 50%.
231. Example 231 of the present invention includes the features of any one of Examples 179 to 230, wherein the denitration device includes a condensing unit configured to condense the tail gas which has undergone the ozone treatment, thereby realizing gas-liquid separation.
232. Example 232 of the present invention includes the features of any one of Examples 179 to 231, wherein the denitration device includes a leaching unit configured to leach the tail gas which has undergone the ozone treatment.
233. Example 233 of the present invention includes the features of Example 232, wherein the denitration device further includes a leacheate unit configured to provide leacheate to the leaching unit.
234. Example 234 of the present invention includes the features of Example 233, wherein the leacheate in the leacheate unit includes water and/or an alkali.
235. Example 235 of the present invention includes the features of any one of Examples 179 to 234, wherein the denitration device further includes a denitration liquid collecting unit configured to store an aqueous nitric acid solution and/or an aqueous nitrate solution removed from the tail gas.
236. Example 236 of the present invention includes the features of Example 235, wherein the denitration liquid collecting unit stores the aqueous nitric acid solution, and the denitration liquid collecting unit is provided with an alkaline solution adding unit which is used to form nitric acid with a nitrate.
237. Example 237 of the present invention includes the features of any one of Examples 145 to 236, wherein the tail gas ozone purification system further includes an ozone digester configured to digest ozone in the tail gas which has undergone treatment in the reaction field.
238. Example 238 of the present invention includes the features of Example 237, wherein the ozone digester is at least one type of digester selected from an ultraviolet ozone digester and a catalytic ozone digester.
239. Example 239 of the present invention includes the features of any one of Examples 145 to 238, wherein the tail gas ozone purification system further includes a first denitration device configured to remove nitrogen oxides in the tail gas, and the reaction field is configured to mix and react the tail gas which has been treated by the first denitration device with the ozone stream or to mix and react the tail gas, before being treated by the first denitration device, with the ozone stream.
240. Example 240 of the present invention includes the features of Example 239, wherein the first denitration device is at least one device selected from a non-catalytic reduction device, a selective catalytic reduction device, a non-selective catalytic reduction device, and an electron beam denitration device.
241. Example 241 of the present invention includes the features of any one of Examples 1 to 240 and further includes an engine.
242. Example 242 of the present invention provides an engine tail gas electric field carbon black removing method including the following steps:
   enabling a dust-containing gas to pass through an ionization dedusting electric field generated by a tail gas dedusting electric field anode and a tail gas dedusting electric field cathode; and
   performing a carbon black cleaning treatment when dust is accumulated in the electric field.
243. Example 243 of the present invention includes the features of the engine tail gas electric field carbon black removing method of Example 242, wherein the carbon black cleaning treatment is completed using an electric field back corona discharge phenomenon.
244. Example 244 of the present invention includes the features of the engine tail gas electric field carbon black removing method of Example 242, wherein an electric field back corona discharge phenomenon is utilized, a voltage is increased, and an injection current is restricted to complete the carbon black cleaning treatment.
245. Example 245 of the present invention includes the features of the engine tail gas electric field carbon black removing method of Example 242, wherein an electric field back corona discharge phenomenon is utilized, a voltage is increased, and an injection current is restricted so that rapid discharge occurring at a deposition position of an anode generates plasmas, and the plasmas enable organic components of the carbon black to be deeply oxidized and break polymer bonds to form small molecular carbon dioxide and water, thus completing the carbon black cleaning treatment.
246. Example 246 of the present invention includes the features of the engine tail gas electric field carbon black removing method of any one of Examples 242 to 245, wherein an electric field device performs the dust cleaning treatment when the electric field device detects that an electric field current has increased to a given value.
247. Example 247 of the present invention includes the features of the engine tail gas electric field carbon black removing method of any one of Examples 242 to 246, wherein the dedusting electric field cathode includes at least one electrode bar.
248. Example 248 of the present invention includes the features of the engine tail gas electric field carbon black removing method of Example 247, wherein the electrode bar has a diameter of no more than 3 mm.
249. Example 249 of the present invention includes the features of the engine tail gas electric field carbon black removing method of Example 247 or 248, wherein the electrode bar has a needle shape, a polygonal shape, a burr shape, a threaded rod shape, or a columnar shape.
250. Example 250 of the present invention includes the features of the engine tail gas electric field carbon black removing method of any one of Examples 242 to 249, wherein the dedusting electric field anode is composed of hollow tube bundles.
251. Example 251 of the present invention includes the features of the engine tail gas electric field carbon black removing method of Example 250, wherein a hollow cross section of the tube bundle of the anode has a circular shape or a polygonal shape.
252. Example 252 of the present invention includes the features of the engine tail gas electric field carbon black removing method of Example 251, wherein the polygonal shape is a hexagonal shape.
253. Example 253 of the present invention includes the features of the engine tail gas electric field carbon black removing method of any one of Example 250 to 252, wherein each of the tube bundles of the dedusting electric field anode has a honeycomb shape.
254. Example 254 of the present invention includes the features of the engine tail gas electric field carbon black removing method of any one of Example 242 to 253, wherein the dedusting electric field cathode is provided in the dedusting electric field anode in a penetrating manner.
255. Example 255 of the present invention includes the features of the engine tail gas electric field carbon black removing method of any one of Examples 242 to 254, wherein the carbon black cleaning treatment is performed when a detected electric field current has increased to a given value.
256. Example 256 of the present invention provides a method for reducing coupling of an engine tail gas dedusting electric field, including a step of:
   selecting a parameter of a tail gas dedusting electric field anode and/or a parameter of a tail gas dedusting electric field cathode so as to reduce the coupling time of the electric field.
257. Example 257 of the present invention includes the features of the method for reducing coupling of an engine tail gas dedusting electric field of Example 256 and further includes selecting the ratio of the dust collection area of the tail gas dedusting electric field anode to the discharge area of the tail gas dedusting electric field cathode.
258. Example 258 of the present invention includes the features of the method for reducing coupling of an engine tail gas dedusting electric field of Example 257 and further includes selecting the ratio of the dust accumulation area of the tail gas dedusting electric field anode to the discharge area of the tail gas dedusting electric field cathode to be 1.667:1-1680:1.
259. Example 259 of the present invention includes the features of the method for reducing coupling of an engine tail gas dedusting electric field of Example 257 and further includes selecting the ratio of the dust accumulation area of the tail gas dedusting electric field anode to the discharge area of the tail gas dedusting electric field cathode to be 6.67:1-56.67:1.
260. Example 260 of the present invention includes the features of the method for reducing coupling of an engine tail gas dedusting electric field of any one of Examples 256 to 259, wherein the tail gas dedusting electric field cathode has a diameter of 1-3 mm, the inter-electrode distance between the tail gas dedusting electric field anode and the tail gas dedusting electric field cathode is 2.5-139.9 mm, and the ratio of the dust accumulation area of the tail gas dedusting electric field anode to the discharge area of the tail gas dedusting electric field cathode is 1.667:1-1680:1.
261. Example 261 of the present invention includes the features of the method for reducing coupling of an engine tail gas dedusting electric field of any one of Examples 256 to 260 and further includes selecting the inter-electrode distance between the tail gas dedusting electric field anode and the tail gas dedusting electric field cathode to be less than 150 mm.
262. Example 262 of the present invention includes the features of the method for reducing coupling of an engine tail gas dedusting electric field of any one of Examples 256 to 260 and further includes selecting the inter-electrode distance between the tail gas dedusting electric field anode and the tail gas dedusting electric field cathode to be 2.5-139.9 mm.
263. Example 263 of the present invention includes the features of the method for reducing coupling of an engine tail gas dedusting electric field of any one of Examples 256 to 260 and further includes selecting the inter-electrode distance between the tail gas dedusting electric field anode and the tail gas dedusting electric field cathode to be 5-100mm.
264. Example 264 of the present invention includes the features of the method for reducing coupling of an engine tail gas dedusting electric field of any one of Examples 256 to 263 and further includes selecting the tail gas dedusting electric field anode to have a length of 10-180 mm.
265. Example 265 of the present invention includes the features of the method for reducing coupling of an engine tail gas dedusting electric field of any one of Examples 256 to 263 and further includes selecting the tail gas dedusting electric field anode to have a length of 60-180 mm.
266. Example 266 of the present invention includes the features of the method for reducing coupling of an engine tail gas dedusting electric field of any one of Examples 256 to 265 and further includes selecting the tail gas dedusting electric field cathode to have a length of 30-180 mm.
267. Example 267 of the present invention includes the features of the method for reducing coupling of an engine tail gas dedusting electric field of any one of Examples 256 to 265 and further includes selecting the tail gas dedusting electric field cathode to have a length of 54-176mm.
268. Example 268 of the present invention includes the features of the method for reducing coupling of an engine tail gas dedusting electric field of any one of Examples 256 to 267 and further includes selecting the tail gas dedusting electric field cathode to include at least one electrode bar.
269. Example 269 of the present invention includes the features of the method for reducing coupling of an engine tail gas dedusting electric field of Example 268 and further includes selecting the electrode bar to have a diameter of no more than 3 mm.
270. Example 270 of the present invention includes the features of the method for reducing coupling of an engine tail gas dedusting electric field of Example 268 or 269 and further includes selecting the electrode bar to have a needle shape, a polygonal shape, a burr shape, a threaded rod shape, or a columnar shape.
271. Example 271 of the present invention includes the features of the method for reducing coupling of an engine tail gas dedusting electric field of any one of Examples 256 to 270 and further includes selecting the tail gas dedusting electric field anode to be composed of hollow tube bundles.
272. Example 272 of the present invention includes the features of the method for reducing coupling of an engine tail gas dedusting electric field of Example 271 and further includes selecting a hollow cross section of the tube bundle of the anode to have a circular shape or a polygonal shape.
273. Example 273 of the present invention includes the features of the method for reducing coupling of an engine tail gas dedusting electric field of Example 272 and further includes selecting the polygonal shape to be a hexagonal shape.
274. Example 274 of the present invention includes the features of the method for reducing coupling of an engine tail gas dedusting electric field of any one of Examples 271 to 273 and further includes selecting the tube bundles of the tail gas dedusting electric field anode to have a honeycomb shape.
275. Example 275 of the present invention includes the features of the method for reducing coupling of an engine tail gas dedusting electric field of any one of Examples 256 to 274 and further includes selecting the tail gas dedusting electric field cathode to be provided in the tail gas dedusting electric field anode in a penetrating manner.
276. Example 276 of the present invention includes the features of the method for reducing coupling of an engine tail gas dedusting electric field of any one of Examples 256 to 275 and further includes selecting a size of the tail gas dedusting electric field anode or/and the tail gas dedusting electric field cathode to allow the coupling time of the electric field to be ≤3.
277. Example 277 of the present invention provides an engine tail gas dedusting method including the following steps: removing liquid water in the tail gas when a tail gas temperature is lower than 100°C and then performing ionization dedusting.
278. Example 278 of the present invention includes the features of the engine tail gas dedusting method of Example 277, wherein ionization dedusting is performed on the tail gas when the tail gas temperature is ≥100°C.
279. Example 279 of the present invention includes the features of the engine tail gas dedusting method of Example 277 or 278, wherein liquid water in the tail gas is removed when the tail gas has a temperature of ≤90 °C and then ionization dedusting is performed.
280. Example 280 of the present invention includes the features of the engine tail gas dedusting method of Example 277 or 278, wherein liquid water in the tail gas is removed when the tail gas has a temperature of ≤80°C and then ionization dedusting is performed.
281. Example 281 of the present invention includes the features of the engine tail gas dedusting method of Example 277 or 278, wherein liquid water in the tail gas is removed when the tail gas has a temperature of ≤70°C and then ionization dedusting is performed.
282. Example 282 of the present invention includes the features of the engine tail gas dedusting method of Example 277 or 278, wherein the liquid water in the tail gas is removed with an electrocoagulation demisting method, and then ionization dedusting is performed.
283. Example 283 of the present invention provides an engine tail gas dedusting method including a step of adding an oxygen-containing gas before a tail gas ionization dedusting electric field to perform ionization dedusting.
284. Example 284 of the present invention includes the features of the engine tail gas dedusting method of Example 283, wherein oxygen is added by purely increasing oxygen, introducing external air, introducing compressed air, and/or introducing ozone.
285. Example 285 of the present invention includes the features of the engine tail gas dedusting method of Example 283 or 284, wherein the amount of supplemented oxygen depends at least upon the content of particles in the tail gas.
286. Example 286 of the present invention provides an engine tail gas dedusting method including the following steps:
   1) adsorbing particulates in the tail gas with a tail gas ionization dedusting electric field; and
   2) charging a tail gas electret element with the tail gas ionization dedusting electric field.
287. Example 287 of the present invention includes the features of the engine tail gas dedusting method of Example 286, wherein the tail gas electret element is close to a tail gas electric field device exit, or the tail gas electret element is provided at the tail gas electric field device exit.
288. Example 288 of the present invention includes the features of the engine tail gas dedusting method of Example 286, wherein the tail gas dedusting electric field anode and the tail gas dedusting electric field cathode form a tail gas flow channel, and the tail gas electret element is provided in the tail gas flow channel.
289. Example 289 of the present invention includes the features of the engine tail gas dedusting method of Example 288, wherein the tail gas flow channel includes a tail gas flow channel exit, and the tail gas electret element is close to the tail gas flow channel exit, or the tail gas electret element is provided at the tail gas flow channel exit.
290. Example 290 of the present invention includes the features of the engine tail gas dedusting method of any one of Examples 283 to 289, wherein when the tail gas ionization dedusting electric field has no power-on drive voltage, the charged tail gas electret element is used to adsorb particulates in the tail gas.
291. Example 291 of the present invention includes the features of the engine tail gas dedusting method of Example 289, wherein after adsorbing certain particulates in the tail gas, the charged tail gas electret element is replaced by a new tail gas electret element.
292. Example 292 of the present invention includes the features of the engine tail gas dedusting method of Example 291, wherein after replacement with the new tail gas electret element, the tail gas ionization dedusting electric field is restarted to adsorb particulates in the tail gas and charge the new tail gas electret element.
293. Example 293 of the present invention includes the features of the engine tail gas dedusting method of any one of Examples 286 to 292, wherein materials forming the tail gas electret element include an inorganic compound having electret properties.
294. Example 294 of the present invention includes the features of the engine tail gas dedusting method of Example 293, wherein the inorganic compound is one or a combination of compounds selected from an oxygen-containing compound, a nitrogen-containing compound, and a glass fiber.
295. Example 295 of the present invention includes the features of the engine tail gas dedusting method of Example 294, wherein the oxygen-containing compound is one or a combination of compounds selected from a metal-based oxide, an oxygen-containing complex, and an oxygen-containing inorganic heteropoly acid salt.
296. Example 296 of the present invention includes the features of the engine tail gas dedusting method of Example 295, wherein the metal-based oxide is one or a combination of oxides selected from aluminum oxide, zinc oxide, zirconium oxide, titanium oxide, barium oxide, tantalum oxide, silicon oxide, lead oxide, and tin oxide.
297. Example 297 of the present invention includes the features of the engine tail gas dedusting method of Example 295, wherein the metal-based oxide is aluminum oxide. (mjp)
298. Example 298 of the present invention includes the features of the engine tail gas dedusting method of Example 295, wherein the oxygen-containing complex is one or a combination of materials selected from titanium zirconium composite oxide and titanium barium composite oxide.
299. Example 299 of the present invention includes the features of the engine tail gas dedusting method of Example 295, wherein the oxygen-containing inorganic heteropoly acid salt is one or a combination of salts selected from zirconium titanate, lead zirconate titanate, and barium titanate.
300. Example 300 of the present invention includes the features of the engine tail gas dedusting method of Example 294, wherein the nitrogen-containing compound is silicon nitride. ( 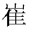 )
301. Example 301 of the present invention includes the features of the engine tail gas dedusting method of any one of Examples 286 to 292, wherein materials forming the tail gas electret element include an organic compound having electret properties.
302. Example 302 of the present invention includes the features of the engine tail gas dedusting method of Example 301, wherein the organic compound is one or a combination of compounds selected from fluoropolymers, polycarbonates, PP, PE, PVC, natural wax, resin, and rosin.
303. Example 303 of the present invention includes the features of the engine tail gas dedusting method of Example 302, wherein the fluoropolymer is one or a combination of materials selected from polytetrafluoroethylene, fluorinated ethylene propylene, soluble polytetrafluoroethylene, and polyvinylidene fluoride .
304. Example 304 of the present invention includes the features of the engine tail gas dedusting method of Example 302, wherein the fluoropolymer is polytetrafluoroethylene.

### Brief Description of the Drawings

FIG 1 is a schematic diagram of a tail gas ozone purification system in the present invention.
FIG 2 is a first schematic diagram of an ozone generator electrode in the present invention.
FIG 3 is a second schematic diagram of the ozone generator electrode in the present invention.
FIG 4 is a structural schematic diagram of a discharge-type ozone generator in the prior art.
FIG 5 is a schematic diagram of the tail gas dedusting system in Embodiment 1 of the present invention.
FIG 6 is a schematic diagram of the tail gas dedusting system in Embodiment 2 of the present invention.
FIG 7 is a perspective structural schematic diagram of an embodiment of a tail gas treatment device in the engine-based tail gas treatment system in the present invention.
FIG 8 is a structural schematic diagram of an embodiment of an umbrella-shaped tail gas insulation mechanism in the tail gas treatment device in the engine-based tail gas treatment system in the present invention.
FIG 9A is an implementation structural diagram of an intake equalizing device of the tail gas treatment device in the engine-based tail gas treatment system of the present invention.
FIG. 9B is another implementation structural diagram of a tail gas equalizing device of the tail gas treatment device in the engine-based tail gas treatment system of the present invention.
FIG 9C is a further implementation structural diagram of the tail gas equalizing device of the tail gas treatment device in the engine-based tail gas treatment system of the present invention.
FIG 10 is a schematic diagram of a tail gas ozone purification system in Embodiment 4 of the present invention.
FIG 11 is a top view of a reaction field in the tail gas ozone purification system in Embodiment 4 of the present invention.
FIG 12 is a schematic diagram of an ozone amount control device in the present invention.
FIG 13 is a structural schematic diagram of an electric field generating unit.
FIG 14 is a view taken along line A-A of the electric field generating unit in FIG 13.
FIG 15 is view taken along line A-A of the electric field generating unit in FIG 13, with lengths and an angle being marked.
FIG 16 is a structural schematic diagram of an electric field device having two electric field stages.
FIG 17 is a structural schematic diagram of the electric field device in Embodiment 24 of the present invention.
FIG 18 is a structural schematic diagram of the electric field device in Embodiment 26 of the present invention.
FIG 19 is a structural schematic diagram of the electric field device in Embodiment 27 of the present invention.
FIG 20 is a structural schematic diagram of the tail gas dedusting system in Embodiment 29 of the present invention.
FIG 21 is a structural schematic diagram of an impeller duct in Embodiment 29 of the present invention.
FIG 22 is a structural schematic diagram of the electrocoagulation device in Embodiment 30 of the present invention.
FIG 23 is a left view of the electrocoagulation device in Embodiment 30 of the present invention.
FIG 24 is a perspective view of the electrocoagulation device in Embodiment 30 of the present invention.
FIG 25 is a structural schematic diagram of the electrocoagulation device in Embodiment 31 of the present invention.
FIG 26 is a top view of the electrocoagulation device in Embodiment 31 of the present invention.
FIG 27 is a structural schematic diagram of the electrocoagulation device in Embodiment 32 of the present invention.
FIG. 28 is a structural schematic diagram of the electrocoagulation device in Embodiment 33 of the present invention.
FIG. 29 is a structural schematic diagram of the electrocoagulation device in Embodiment 34 of the present invention.
FIG 30 is a structural schematic diagram of the electrocoagulation device in Embodiment 35 of the present invention.
FIG 31 is a structural schematic diagram of the electrocoagulation device in Embodiment 36 of the present invention.
FIG 32 is a structural schematic diagram of the electrocoagulation device in Embodiment 37 of the present invention.
FIG 33 is a structural schematic diagram of the electrocoagulation device in Embodiment 38 of the present invention.
FIG 34 is a structural schematic diagram of the electrocoagulation device in Embodiment 39 of the present invention.
FIG 35 is a structural schematic diagram of the electrocoagulation device in Embodiment 40 of the present invention.
FIG 36 is a structural schematic diagram of the electrocoagulation device in Embodiment 41 of the present invention.
FIG 37 is a structural schematic diagram of the electrocoagulation device in Embodiment 42 of the present invention.
FIG 38 is a structural schematic diagram of the electrocoagulation device in Embodiment 43 of the present invention.
FIG 39 is a structural schematic diagram of the engine tail gas treatment system in Embodiment 44 of the present invention.
FIG 40 is a structural schematic diagram of the engine tail gas treatment system in Embodiment 45 of the present invention.
FIG 41 is a structural schematic diagram of the engine tail gas treatment system in Embodiment 46 of the present invention.
FIG 42 is a structural schematic diagram of the engine tail gas treatment system in Embodiment 47 of the present invention.
FIG 43 is a structural schematic diagram of the engine tail gas treatment system in Embodiment 48 of the present invention.
FIG 44 is a structural schematic diagram of the engine tail gas treatment system in Embodiment 49 of the present invention.
FIG 45 is a structural schematic diagram of the engine tail gas treatment system in Embodiment 50 of the present invention.
FIG. 46 is a structural schematic diagram of the engine tail gas treatment system in Embodiment 51 of the present invention.
FIG 47 is a structural schematic diagram of the engine tail gas treatment system in Embodiment 52 of the present invention.
FIG 48 is a structural schematic diagram of a tail gas cooling device in Embodiment 53 of the present invention.
FIG 49 is a structural schematic diagram of a tail gas cooling device in Embodiment 54 of the present invention.
FIG 50 is a structural schematic diagram of a tail gas cooling device in Embodiment 55 of the present invention.
FIG 51 is a structural schematic diagram of a heat exchange unit in Embodiment 55 of the present invention.
FIG 52 is a structural schematic diagram of a tail gas cooling device in Embodiment 56 of the present invention.
FIG 53 is a first schematic diagram of an intake electric field device in Embodiment 59 of the present invention.
FIG 54 is a second schematic diagram of the intake electric field device in Embodiment60 of the present invention.
FIG 55 is a second schematic diagram of the intake electric field device in Embodiment60 of the present invention.
FIG 56 is a schematic diagram of the cross section of an intake flow channel occupied by the cross section of an intake electret element in the intake flow channel in Embodiment 60.
FIG 57 is a structural schematic diagram of the electric field device in Embodiment 61 of the present invention.

### Detailed Description of the Invention

The embodiments of the present invention are illustrated below with respect to specific embodiments. Those familiar with the art will be able to readily understand other advantages and effects of the present invention from the disclosure in the present specification.

It should be noted that structures, ratios, sizes, and the like shown in the drawings of the present specification are only used for cooperation with the disclosure of the specification so as to be understood and read by those familiar with the art, rather than being used to limit the conditions under which the present invention can be implemented. Thus, they have no substantive technical significance, and any structural modifications, changes of ratio relationships or size adjustment still fall within the scope that can be covered by the technical contents disclosed in the present invention without affecting the effects that can be produced by the present invention and the objects that can be achieved. Terms such as "upper", "lower", "left", "right", "middle" and "one (a, an)", and the like referred to in the present specification are merely for clarity of description rather than being intended to limit the implementable scope of the present invention, and changes or alterations of relative relationships thereof without substantial technical changes should also be considered as being within the implementable scope of the present invention.

According to one aspect of the invention, the engine tail gas treatment system includes a tail gas dedusting system and a tail gas ozone purification system.

In an embodiment of the present invention, the engine tail gas treatment system includes a tail gas dedusting system. The tail gas dedusting system communicates with an exit of the engine. Tail gas emitted from the engine will flow through the tail gas dedusting system.

In an embodiment of the present invention, the tail gas dedusting system further includes a water removing device configured to remove liquid water before a tail gas electric field device entrance. In an embodiment of the present invention, when a tail gas temperature or an engine temperature is lower than a certain temperature, the tail gas of the engine may contain liquid water, and the water removing device removes the liquid water in the tail gas.

In an embodiment of the present invention, the certain temperature is above 90°C and below 100°C.

In an embodiment of the present invention, the certain temperature is above 80°C and below 90°C. In an embodiment of the present invention, the certain temperature is below 80°C.

In an embodiment of the present invention, the water removing device is an electrocoagulation device.

Those skilled in the art did not recognize the technical problem which occurs when the tail gas temperature is low. For example, when the tail gas temperature or the engine temperature is low, there will be liquid water in the tail gas, and the water is adsorbed on the tail gas dedusting electric field cathode and the tail gas dedusting electric field anode, causing nonuniform electric discharge and ignition of the tail gas ionization dedusting electric field. The inventor of the present invention discovered this problem and proposes providing the tail gas dedusting system with a water removing device configured to remove liquid water before the tail gas electric field device entrance. The liquid water has electrical conductivity, shortens an ionization distance, causes nonuniform electric discharge of the tail gas ionization dedusting electric field, and easily causes electrode breakdown. The water removing device removes drops of water, i.e., liquid water in the tail gas before the tail gas electric field device entrance during a cold start of the engine so as reduce drops of water, i.e. liquid water in the tail gas, and reduce nonuniform electric discharge of the tail gas ionization dedusting electric field and breakdown of the tail gas dedusting electric field cathode and the tail gas dedusting electric field anode, thereby improving the ionization dedusting efficiency and achieving an unexpected technical effect. There is no particular limitation on the water removing device, and any prior art water removing device capable of removing the liquid water in the tail gas is suitable for use in the present invention.

In an embodiment of the present invention, the tail gas dedusting system further includes an oxygen supplementing device configured to add an oxygen-containing gas, e.g., air before the tail gas ionization dedusting electric field.

In an embodiment of the present invention, the oxygen supplementing device adds oxygen by purely increasing oxygen, introducing external air, introducing compressed air, and/or introducing ozone.

In an embodiment of the present invention, the amount of supplemented oxygen depends at least upon the content of particles in the tail gas.

Those skilled in the art did not recognize the following technical problem. Under certain circumstances, there may not be enough oxygen in tail gas to produce sufficient oxygen ions, leading to an unfavorable dedusting effect. Namely, those skilled in the art did not recognize that the oxygen in engine tail gas may not be sufficient to support effective ionization. The inventor of the present application discovered this problem and proposes that the tail gas dedusting system in the present invention include an oxygen supplementing device which can add oxygen by purely increasing oxygen, introducing external air, introducing compressed air, and/or introducing ozone, thus increasing the oxygen content of the tail gas entering the tail gas ionization dedusting electric field. Consequently, when the tail gas flows through the tail gas ionization dedusting electric field between the tail gas dedusting electric field cathode and the tail gas dedusting electric field anode, ionized oxygen is increased such that more dust in the tail gas is charged, and further more charged dust is collected under the action of the tail gas dedusting electric field anode, resulting in a higher dedusting efficiency of the tail gas electric field device, facilitating the tail gas ionization dedusting electric field in collecting particulates in the tail gas, achieving an unexpected technical effect and further obtaining the following new technical effects. Namely, the present invention is capable of serving a cooling effect and improving the efficiency of a power system. Moreover, the ozone content of the tail gas ionization dedusting electric field can also be increased through oxygen supplementation, facilitating an improvement of the efficiency in the tail gas ionization dedusting electric field in purifying, self-cleaning, denitrating, and other treatment of organic matter in the tail gas.

### Tail gas equalizing

In an embodiment of the present invention, the tail gas dedusting system may include a tail gas equalizing device. The tail gas equalizing device is provided in front of the tail gas electric field device and can enable airflow entering the tail gas electric field device to uniformly pass through it.

In an embodiment of the present invention, the tail gas dedusting electric field anode of the tail gas electric field device can be a cubic body, the tail gas equalizing device can include an intake pipe located at one side of a cathode supporting plate, and an outlet pipe located at the other side of the cathode supporting plate, and the cathode supporting plate is located at an intake end of the tail gas dedusting electric field anode, wherein the side on which the intake pipe is mounted is opposite to the side on which the outlet pipe is mounted. The tail gas equalizing device can enable airflow entering the tail gas electric field device to uniformly pass through an electrostatic field. In an embodiment of the present invention, the tail gas dedusting electric field anode may be a cylindrical body, the tail gas equalizing device is between the tail gas dedusting system entrance and the tail gas ionization dedusting electric field formed by the tail gas dedusting electric field anode and the tail gas dedusting electric field cathode, and the tail gas equalizing device includes a plurality of equalizing blades rotating around a center of the tail gas electric field device entrance. The tail gas equalizing device can enable varied amounts of tail gas to uniformly pass through the electric field generated by the tail gas dedusting electric field anode, and at the same time can maintain a constant internal temperature and sufficient oxygen for the tail gas dedusting electric field anode. The tail gas equalizing device can enable airflow entering the tail gas electric field device to uniformly pass through an electrostatic field.

In an embodiment of the present invention, the tail gas equalizing device includes an air inlet plate provided at the intake end of the tail gas dedusting electric field anode and an air outlet plate provided at an outlet end of the tail gas dedusting electric field anode. The air inlet plate is provided with intake holes, the air outlet plate is provided with outlet holes, and the intake holes and the outlet holes are arranged in a staggered manner, moreover. A front surface is used for gas intake, and a side surface is used for gas discharge, thereby forming a cyclone structure. The tail gas equalizing device can enable airflow entering the tail gas electric field device to uniformly pass through an electrostatic field.

In an embodiment of the present invention, a tail gas dedusting system may include a tail gas dedusting system entrance, a tail gas dedusting system exit, and a tail gas electric field device. Moreover, in an embodiment of the present invention, the tail gas electric field device may include a tail gas electric field device entrance, a tail gas electric field device exit, and a tail gas front electrode located between the tail gas electric field device entrance and the tail gas electric field device exit. When a tail gas emitted from the engine flows through the tail gas front electrode from the tail gas electric field device entrance, particulates and the like in the tail gas will be charged.

In an embodiment of the present invention, the tail gas electric field device further includes a tail gas front electrode. The tail gas front electrode is located between the tail gas ionization dedusting electric field formed by the tail gas dedusting electric field anode and the tail gas dedusting electric field cathode. When a gas flows through the tail gas front electrode from the tail gas electric field device entrance, particulates and the like in the gas will be charged.

In an embodiment of the present invention, the shape of the tail gas front electrode may be a point shape, a linear shape, a net shape, a perforated plate shape, a plate shape, a needle rod shape, a ball cage shape, a box shape, a tubular shape, a natural shape of a substance, or a processed shape of a substance. When the tail gas front electrode is a porous structure, the tail gas front electrode is provided with one or more tail gas through holes. In an embodiment of the present invention, each tail gas through hole may have a polygonal shape, a circular shape, an oval shape, a square shape, a rectangular shape, a trapezoidal shape, or a diamond shape. In an embodiment of the present invention, an outline of each tail gas through hole may have a size of 0.1-3 mm, 0.1-0.2 mm, 0.2-0.5 mm, 0.5-1 mm, 1-1.2 mm, 1.2-1.5 mm, 1.5-2 mm, 2-2.5 mm, 2.5-2.8 mm, or 2.8-3 mm.

In an embodiment of the present invention, the tail gas front electrode may be in one or a combination of more states of solid, liquid, a gas molecular group, a plasma, an electrically conductive substance in a mixed state, a natural mixed electrically conductive of organism, or an electrically conductive substance formed by manual processing of an object. When the tail gas front electrode is a solid, a solid metal, such as 304 steel, or other solid conductors such as graphite can be used. When the tail gas front electrode is liquid, it may be an ion-containing electrically conductive liquid.

During working, before a gas carrying pollutants enters the tail gas ionization dedusting electric field formed by the tail gas dedusting electric field anode and the tail gas dedusting electric field cathode. When the gas carrying pollutants passes through the tail gas front electrode, the tail gas front electrode enables the pollutants in the gas to be charged. When the gas carrying pollutants enters the tail gas ionization dedusting electric field, the tail gas dedusting electric field anode applies an attractive force to the charged pollutants such that the pollutants move towards the tail gas dedusting electric field anode until the pollutants are attached to the tail gas dedusting electric field anode.

In an embodiment of the present invention, the tail gas front electrode directs electrons into the pollutants, and the electrons are transferred among the pollutants located between the tail gas front electrode and the tail gas dedusting electric field anode to enable more pollutants to be charged. The tail gas front electrode and the tail gas dedusting electric field anode conduct electrons therebetween through the pollutants and form a current.

In an embodiment of the present invention, the tail gas front electrode enables the pollutants to be charged by contacting the pollutants. In an embodiment of the present invention, the tail gas front electrode enables the pollutants to be charged by energy fluctuation. In an embodiment of the present invention, the tail gas front electrode transfers the electrons to the pollutants by contacting the pollutants and enables the pollutants to be charged. In an embodiment of the present invention, the tail gas front electrode transfers the electrons to the pollutants by energy fluctuation and enables the pollutants to be charged.

In an embodiment of the present invention, the tail gas front electrode has a linear shape, and the tail gas dedusting electric field anode has a planar shape. In an embodiment of the present invention, the tail gas front electrode is perpendicular to the tail gas dedusting electric field anode. In an embodiment of the present invention, the tail gas front electrode is parallel to the tail gas dedusting electric field anode. In an embodiment of the present invention, the tail gas front electrode has a curved shape or an arcuate shape. In an embodiment of the present invention, the tail gas front electrode uses a wire mesh. In an embodiment of the present invention, the voltage between the tail gas front electrode and the tail gas dedusting electric field anode is different from the voltage between the tail gas dedusting electric field cathode and the tail gas dedusting electric field anode. In an embodiment of the present invention, the voltage between the tail gas front electrode and the tail gas dedusting electric field anode is lower than a corona inception voltage. The corona inception voltage is a minimal value of the voltage between the tail gas dedusting electric field cathode and the tail gas dedusting electric field anode. In an embodiment of the present invention, the voltage between the tail gas front electrode and the tail gas dedusting electric field anode may be 0.1-2 kv/mm.

In an embodiment of the present invention, the tail gas electric field device includes a tail gas flow channel, and the tail gas front electrode is located in the tail gas flow channel. In an embodiment of the present invention, the cross-sectional area of the tail gas front electrode to the cross-sectional area of the tail gas flow channel is 99%-10%, 90-10%, 80-20%, 70-30%, 60-40%, or 50%. The cross-sectional area of the tail gas front electrode refers to the sum of the areas of entity parts of the front electrode along a cross section. In an embodiment of the present invention, the tail gas front electrode carries a negative potential.

In an embodiment of the present invention, when the exhaust gas flows into the exhaust gas flow channel through the exhaust gas electric field device entrance, when pollutants in the exhaust gas with relatively strong electrical conductivity, such as metal dust, mist drops, or aerosols, contact the exhaust gas front electrode or the distance between the pollutants and the exhaust gas front electrode reaches a certain range, the pollutants will be directly negatively charged. Subsequently, all of the pollutants enter the exhaust gas ionization dedusting electric field with a gas flow, and the exhaust gas dedusting electric field anode applies an attractive force to the negatively charged metal dust, mist drops, aerosols and the like and enables the negatively charged pollutants to move towards the exhaust gas dedusting electric field anode until this part of the pollutants is attached to the exhaust gas dedusting electric field anode, realizing collection of this part of pollutants. The exhaust gas ionization dedusting electric field formed between the exhaust gas dedusting electric field anode and the exhaust gas dedusting electric field cathode obtains oxygen ions by ionizing oxygen in the gas, and the negatively charged oxygen ions, after being combined with common dust, enable common dust to be negatively charged. The exhaust gas dedusting electric field anode applies an attractive force to this part of the negatively charged dust and other pollutants and enables the pollutants such as dust to move towards the exhaust gas dedusting electric field anode until this part of the pollutants is attached to the exhaust gas dedusting electric field anode, realizing collection of this part of pollutants such as common dust such that all pollutants with relatively strong electrical conductivity and pollutants with relatively weak electrical conductivity in the gas are collected. The exhaust gas dedusting electric field anode is made capable of collecting a wider variety of pollutants in the gas and having a stronger collecting capability and higher collecting efficiency.

In an embodiment of the present invention, the tail gas electric field device entrance communicates with the exit of the engine.

In an embodiment of the present invention, the tail gas electric field device may include a tail gas dedusting electric field cathode and a tail gas dedusting electric field anode. An ionization dedusting electric field is formed between the tail gas dedusting electric field cathode and the tail gas dedusting electric field anode. When the tail gas enters the ionization dedusting electric field, oxygen ions in the tail gas will be ionized, and a large amount of charged oxygen ions will be formed. The oxygen ions are combined with dust and other particulates in the tail gas such that the particulates are charged. The tail gas dedusting electric field anode applies an attractive force to the negatively charged particulates such that the particulates are attached to the tail gas dedusting electric field anode so as to eliminate the particulates in the tail gas.

In an embodiment of the present invention, the tail gas dedusting electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments which can easily discharge electricity, are resistant to high temperatures, are capable of supporting their own weight, and are electrochemically stable. In an embodiment of the present invention, titanium is selected as the material of the cathode filaments. The specific shape of the cathode filaments is adjusted according to the shape of the tail gas dedusting electric field anode. For example, if a dust accumulation surface of the tail gas dedusting electric field anode is a flat surface, the cross section of each cathode filament is circular. If a dust accumulation surface of the tail gas dedusting electric field anode is an arcuate surface, the cathode filament needs to be designed with a polyhedral shape. The length of the cathode filaments is adjusted according to the tail gas dedusting electric field anode.

In an embodiment of the present invention, the tail gas dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the tail gas dedusting electric field anode. For example, if a dust accumulation surface of the tail gas dedusting electric field anode is a flat surface, the cross section of each cathode bar needs to be designed to have a circular shape. If a dust accumulation surface of the tail gas dedusting electric field anode is an arcuate surface, each cathode bar needs to be designed to have a polyhedral shape.

In an embodiment of the present invention, the tail gas dedusting electric field cathode is provided in the tail gas dedusting electric field anode in a penetrating manner.

In an embodiment of the present invention, the tail gas dedusting electric field anode includes one or more hollow anode tubes provided in parallel. When there is a plurality of hollow anode tubes, all of the hollow anode tubes constitute a honeycomb-shaped tail gas dedusting electric field anode. In an embodiment of the present invention, the cross section of each hollow anode tube may be circular or polygonal. If the cross section of each hollow anode tube is circular, a uniform electric field can be formed between the tail gas dedusting electric field anode and the tail gas dedusting electric field cathode, and dust is not easily accumulated on the inner walls of the hollow anode tubes. If the cross section of each hollow anode tube is triangular, 3 dust accumulation surfaces and 3 distant-angle dust holding corner can be formed on the inner wall of the hollow anode tube, and the hollow anode tube with such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

In an embodiment of the present invention, the tail gas dedusting electric field cathode is mounted on a cathode supporting plate, and the cathode supporting plate is connected with the tail gas dedusting electric field anode through a tail gas insulation mechanism. In an embodiment of the present invention, the tail gas dedusting electric field anode includes a third anode portion and a fourth anode portion. The third anode portion is close to the tail gas electric field device entrance, and the fourth anode portion is close to the tail gas electric field device exit. The cathode supporting plate and the tail gas insulation mechanism are between the third anode portion and the fourth anode portion. Namely, the tail gas insulation mechanism is mounted in the middle of the ionization electric field or in the middle of the tail gas dedusting electric field cathode and can well serve the function of supporting the tail gas dedusting electric field cathode, and functions to fix the tail gas dedusting electric field cathode with respect to the tail gas dedusting electric field anode such that a set distance is maintained between the tail gas dedusting electric field cathode and the tail gas dedusting electric field anode. In the prior art, a support point of a cathode is at an end point of the cathode, and the distance between the cathode and an anode cannot be reliably maintained. In an embodiment of the present invention, the tail gas insulation mechanism is provided outside a dedusting flow channel, i.e., outside a second-stage flow channel so as to prevent or reduce aggregation of dust and the like in the tail gas on the tail gas insulation mechanism, which can cause breakdown or electrical conduction of the tail gas insulation mechanism.

In an embodiment of the present invention, the tail gas insulation mechanism uses a high-pressure-resistant ceramic insulator for insulation between the tail gas dedusting electric field cathode and the tail gas dedusting electric field anode. The tail gas dedusting electric field anode is also referred to as a housing.

In an embodiment of the present invention, the third anode portion is located in front of the cathode supporting plate and the tail gas insulation mechanism in a gas flow direction. The third anode portion can remove water in the tail gas, thus preventing water from entering the tail gas insulation mechanism to cause a short circuit and ignition of the tail gas insulation mechanism. The third anode portion can also remove a considerable part of dust in the tail gas. When the tail gas passes through the tail gas insulation mechanism, a considerable part of dust has been removed, thus reducing the possibility of a short circuit of the tail gas insulation mechanism caused by the dust. In an embodiment of the present invention, the tail gas insulation mechanism includes an insulating porcelain pillar. The design of the first anode portion is mainly for the purpose of protecting the insulating porcelain pillar against pollution by particulates and the like in the gas, since once the gas pollutes the insulating porcelain pillar, it will cause breakover of the tail gas dedusting electric field anode and the tail gas dedusting electric field cathode, thus disabling the dust accumulation function of the tail gas dedusting electric field anode. Therefore, the design of the first anode portion can effectively reduce pollution of the insulating porcelain pillar and increase the service life of the product. In a process in which the tail gas flows through the second-stage flow channel, the third anode portion and the tail gas dedusting electric field cathode first contact the polluting gas, and then the tail gas insulation mechanism contacts the gas. As a result, the purpose is achieved of first removing dust and then passing through the tail gas insulation mechanism, pollution of the tail gas insulation mechanism is reduced, prolonging the cleaning maintenance cycle, and the corresponding electrodes are supported in an insulating manner after use. In an embodiment of the present invention, the third anode portion has a sufficient length to remove a part of the dust, reduce the dust accumulated on the tail gas insulation mechanism and the cathode supporting plate, and reduce electric breakdown caused by the dust. In an embodiment of the present invention, the length of the third anode portion accounts for 1/10 to 1/4, 1/4 to 1/3, 1/3 to 1/2, 1/2 to 2/3, 2/3 to 3/4, or 3/4 to 9/10 of the total length of the tail gas dedusting electric field anode.

In an embodiment of the present invention, the fourth anode portion is located behind the cathode supporting plate and the tail gas insulation mechanism in a flow direction of tail gas. The fourth anode portion includes a dust accumulation section and a reserved dust accumulation section, wherein the dust accumulation section adsorbs particulates in the tail gas utilizing static electricity. The dust accumulation section is for the purpose of increasing the dust accumulation area and prolonging the service life of the tail gas electric field device. The reserved dust accumulation section can provide fault protection for the dust accumulation section. The reserved dust accumulation section aims at further increasing the dust accumulation area with the goal of meeting the design dedusting requirements. The reserved dust accumulation section is used for supplementing dust accumulation in the front section. In an embodiment of the present invention, the reserved dust accumulation section and the third anode portion may use different power supplies.

In an embodiment of the present invention, as there is an extremely high potential difference between the tail gas dedusting electric field cathode and the tail gas dedusting electric field anode, in order to prevent breakover of the tail gas dedusting electric field cathode and the tail gas dedusting electric field anode, the tail gas insulation mechanism is provided outside the second-stage flow channel between the tail gas dedusting electric field cathode and the tail gas dedusting electric field anode. Therefore, the tail gas insulation mechanism is suspended outside the tail gas dedusting electric field anode. In an embodiment of the present invention, the tail gas insulation mechanism may be made of a non-conductive, temperature-resistant material such as ceramic or glass. In an embodiment of the present invention, insulation with a completely air-free material requires an isolation thickness of >0.3 mm/kv for insulation; while air insulation requires >1.4 mm/kv. The insulation distance can be set to 1.4 times the inter-electrode distance between the tail gas dedusting electric field cathode and the tail gas dedusting electric field anode. In an embodiment of the present invention, the tail gas insulation mechanism is made of a ceramic, with a surface thereof being glazed. No glue or organic material filling can be used for connection, and the tail gas insulation mechanism should be resistant to a temperature higher than 350 °C.

In an embodiment of the present invention, the tail gas insulation mechanism includes an insulation portion and a heat-protection portion. In order to enable the tail gas insulation mechanism to have an anti-fouling function, the insulation portion is made of a ceramic material or a glass material. In an embodiment of the present invention, the insulation portion may be an umbrella-shaped string ceramic column or glass column, with the interior and exterior of the umbrella being glazed. The distance between an outer edge of the umbrella-shaped string ceramic column or the umbrella-shaped string glass column and the tail gas dedusting electric field anode is greater than 1.4 times an electric field distance, i.e., greater than 1.4 times the inter-electrode distance. The sum of the distances between the umbrella protruding edges of the umbrella-shaped string ceramic column or glass column is greater than 1.4 times the insulation distance of the umbrella-shaped string ceramic column. The total length of the inner depth of the umbrella edge of the umbrella-shaped string ceramic column or glass column is greater than 1.4 times the insulation distance of the umbrella-shaped string ceramic column. The insulation portion may also be a column-shaped string ceramic column or a glass column, with the interior and exterior of the column being glazed. In an embodiment of the present invention, the insulation portion may also have a tower-like shape.

In an embodiment of the present invention, a heating rod is provided inside the insulation portion. When the temperature around the insulation portion is close to the dew point, the heating rod is started and heats up. Due to the temperature difference between the inside and the outside of the insulation portion during use, condensation is easily created inside and outside the insulation portion. An outer surface of the insulating portion may spontaneously or be heated by gas to generate high temperatures. Necessary isolation and protection are required to prevent burns. The heat-protection portion includes a protective enclosure baffle and a denitration purification reaction chamber located outside the second insulation portion. In an embodiment of the present invention, a position of a tail portion of the insulation portion that needs condensation also needs heat insulation to prevent the environment and heat radiation high temperature from heating a condensation component.

In an embodiment of the present invention, a lead-out wire of a power supply of the tail gas electric field device is connected by passing through a wall using an umbrella-shaped string ceramic column or glass column. The cathode supporting plate is connected inside the wall using a flexible contact. An airtight insulation protective wiring cap is used outside the wall for plug-in connection. The insulation distance between a lead-out wire conductor running through the wall and the wall is greater than the ceramic insulation distance of the umbrella-shaped string ceramic column or glass column. In an embodiment of the present invention, a high-voltage part, without a lead wire, is directly installed on an end socket to ensure safety. The overall external insulation of a high-voltage module has an IP (Ingress Protection) Rating of 68, and heat is exchanged and dissipated by a medium.

In an embodiment of the present invention, the tail gas dedusting electric field cathode and the tail gas dedusting electric field anode are asymmetric with respect to each other. In a symmetric electric field, polar particles are subjected to forces of the same magnitude but in opposite directions, and the polar particles reciprocate in the electric field. In an asymmetric electric field, polar particles are subjected to forces of different magnitudes, and the polar particles move in the direction with a greater force, thereby avoiding generation of coupling.

An ionization dedusting electric field is formed between the tail gas dedusting electric field cathode and the tail gas dedusting electric field anode of the tail gas electric field device in the present invention. In order to reduce electric field coupling of the ionization dedusting electric field, in an embodiment of the present invention, a method for reducing electric field coupling includes a step of selecting the ratio of the dust collection area of the tail gas dedusting electric field anode to the discharge area of the tail gas dedusting electric field cathode to enable the coupling time of the electric field to be ≤3. In an embodiment of the present invention, the ratio of the dust collection area of the tail gas dedusting electric field anode to the discharge area of the tail gas dedusting electric field cathode may be 1.667:1-1680:1, 3.334:1-113.34:1, 6.67:1-56.67:1, or 13.34:1-28.33:1. In this embodiment, a relatively large dust collection area of the tail gas dedusting electric field anode and a relatively minute discharge area of the tail gas dedusting electric field cathode are selected. By specifically selecting the above area ratios, the discharge area of the tail gas dedusting electric field cathode can be reduced to decrease the suction force. In addition, enlarging the dust collection area of the tail gas dedusting electric field anode increases the suction force. Namely, an asymmetric electrode suction force is generated between the tail gas dedusting electric field cathode and the tail gas dedusting electric field anode such that the dust, after being charged, falls onto a dust collecting surface of the tail gas dedusting electric field anode. Then although the polarity of the dust has been changed, the dust can no longer be sucked away by the tail gas dedusting electric field cathode, thus reducing electric field coupling and realizing a coupling time of the electric field of ≤3. That is, when the inter-electrode distance of the electric field is less than 150 mm, the coupling time of the electric field is ≤3, the energy consumption of the electric field is low, and coupling consumption of the electric field to aerosols, water mist, oil mist, and loose smooth particulates can be reduced, thereby saving the electric energy consumption of the electric field by 30-50%. The dust collection area refers to the area of a working surface of the tail gas dedusting electric field anode. For example, if the tail gas dedusting electric field anode has the shape of a hollow regular hexagonal tube, the dust collection area is just the inner surface area of the hollow regular hexagonal tube. The dust collection area is also referred to as the dust accumulation area. The discharge area refers to the area of a working surface of the tail gas dedusting electric field cathode. For example, if the tail gas dedusting electric field cathode has a rod shape, the discharge area is just the outer surface area of the rod shape.

In an embodiment of the present invention, the tail gas dedusting electric field anode may have a length of 10-180 mm, 10-20 mm, 20-30 mm, 60-180 mm, 30-40 mm, 40-50 mm, 50-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-180 mm, 60 mm, 180 mm, 10 mm, or 30 mm. The length of the tail gas dedusting electric field anode refers to a minimal length of the working surface of the tail gas dedusting electric field anode from one end to the other end. By selecting such a length for the tail gas dedusting electric field anode, electric field coupling can be effectively reduced.

In an embodiment of the present invention, the tail gas dedusting electric field anode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm, or 85-90 mm. Selecting such a length can enable the tail gas dedusting electric field anode and the tail gas electric field device to have resistance to high temperatures and allows the tail gas electric field device to have a high-efficiency dust collecting capability under the impact of high temperatures. In an embodiment of the present invention, the tail gas dedusting electric field cathode may have a length of 30-180 mm, 54-176 mm, 30-40 mm, 40-50 mm, 50-54 mm, 54-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-176 mm, 170-180 mm, 54 mm, 180 mm, or 30 mm. The length of the tail gas dedusting electric field cathode refers to a minimal length of the working surface of the tail gas dedusting electric field cathode from one end to the other end. By selecting such a length for the tail gas dedusting electric field cathode, electric field coupling can be effectively reduced.

In an embodiment of the present invention, the tail gas dedusting electric field cathode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm, or 85-90 mm. Selecting such a length can enable the tail gas dedusting electric field cathode and the tail gas electric field device to have resistance to high temperatures and allows the tail gas electric field device to have a high-efficiency dust collecting capability under the impact of high temperatures. When the electric field has a temperature of 200 °C, the corresponding dust collecting efficiency is 99.9%. When the electric field has a temperature of 400 °C, the corresponding dust collecting efficiency is 90%. When the electric field has a temperature of 500 °C, the corresponding dust collecting efficiency is 50%.

In an embodiment of the present invention, the distance between the tail gas dedusting electric field anode and the tail gas dedusting electric field cathode may be 5-30 mm, 2.5-139.9 mm, 9.9-139.9 mm, 2.5-9.9 mm, 9.9-20 mm, 20-30 mm, 30-40 mm, 40-50 mm, 50-60 mm, 60-70 mm, 70-80 mm, 80-90 mm, 90-100 mm, 100-110 mm, 110-120 mm, 120-130 mm, 130-139.9 mm, 9.9 mm, 139.9 mm, or 2.5 mm. The distance between the tail gas dedusting electric field anode and the tail gas dedusting electric field cathode is also referred to as the inter-electrode distance. The inter-electrode distance refers to a minimal vertical distance between the working surfaces of the tail gas dedusting electric field anode and the tail gas dedusting electric field cathode. Selection of the inter-electrode distance in this manner can effectively reduce electric field coupling and allow the tail gas electric field device to have resistance to high temperatures.

In view of the special performance of ionization dedusting, ionization dedusting is suitable for removing particulates in gas. For example, it can be used to remove particulates in engine tail gas. However, years of research by many universities, research institutes, and enterprises have shown that existing electric field dedusting devices are still not suitable for use in vehicles. First, prior art electric field dedusting devices are too bulky in volume and it is difficult to install prior art electric field dedusting devices in a vehicle. Secondly and more importantly, prior art electric field dedusting devices only can remove about 70% of particulates and therefore fail to meet emission standards in many countries.

The inventor of the present invention found that the defects of the prior art electric field dedusting devices are caused by electric field coupling. In the present invention, by reducing the coupling time of the electric field, the dimensions (i.e., the volume) of the electric field dedusting devices can be significantly reduced. For example, the dimensions of the ionization dedusting device of the present invention are about one-fifth of the dimensions of existing ionization dedusting devices. In order to obtain an acceptable particle removal rate, existing ionization dedusting devices are set to have a gas flow velocity of about 1 m/s. However, in the present invention, when the gas flow velocity is increased to 6 m/s, a higher particle removal rate can still be obtained. When dealing with a gas at a given flow rate, increasing the gas speed makes it possible to reduce the dimensions of the electric field dedusting device.

The present invention can also significantly improve the particle removal rate. For example, when the gas flow velocity is about 1 m/s, a prior art electric field dedusting device can remove about 70% of the particulates in engine emission, while the present invention can remove about 99% of particulates, even if the gas flow velocity is 6 m/s. Therefore, the present invention can meet the latest emission standards.

As a result of the inventor discovering the effect of electric field coupling and discovering a method for reducing the times of electric field coupling, the present invention achieves the above-described unexpected results. Therefore, the present invention can be used to manufacture an electric field dedusting device for vehicles.

The ionization dedusting electric field between the tail gas dedusting electric field anode and the tail gas dedusting electric field cathode is also referred to as a third electric field. In an embodiment of the present invention, a fourth electric field that is not parallel to the third electric field is further formed between the tail gas dedusting electric field anode and the tail gas dedusting electric field cathode. In another embodiment of the present invention, the fourth electric field is not perpendicular to a flow channel of the ionization dedusting electric field. The fourth electric field, which is also referred to as an auxiliary electric field, can be formed by one or two second auxiliary electrodes. When the fourth electric field is formed by one second auxiliary electrode, the second auxiliary electrode can be placed at an entrance or an exit of the ionization dedusting electric field, and the second auxiliary electric field may carry a negative potential or a positive potential. When the second auxiliary electrode is a cathode, it is provided at or close to the entrance of the ionization dedusting electric field. The second auxiliary electrode and the tail gas dedusting electric field anode have an included angle α, wherein 0°<α≤125°, 45°≤α≤125°, 60 °≤α≤100°, or α=90°. When the second auxiliary electrode is an anode, it is provided at or close to the exit of the ionization dedusting electric field, and the second auxiliary electrode and the tail gas dedusting electric field cathode have an included angle α, wherein 0°<α≤125°, 45 °≤α≤125°, 60 °≤α≤100°, or α=90°. When the fourth electric field is formed by two second auxiliary electrodes, one of the second auxiliary electrodes may carry a negative potential, and the other one of the second auxiliary electrodes may carry a positive potential. One of the second auxiliary electrodes may be placed at the entrance of the ionization electric field, and the other one of the second auxiliary electrodes is placed at the exit of the ionization electric field. The second auxiliary electrode may be a part of the tail gas dedusting electric field cathode or the tail gas dedusting electric field anode. Namely, the second auxiliary electrode may be constituted by an extended section of the tail gas dedusting electric field cathode or the tail gas dedusting electric field anode, in which case the tail gas dedusting electric field cathode and the tail gas dedusting electric field anode may have different lengths. The second auxiliary electrode may also be an independent electrode, which is to say that the second auxiliary electrode need not be a part of the tail gas dedusting electric field cathode or the tail gas dedusting electric field anode, in which case the fourth electric field and the third electric field have different voltages and can be independently controlled according to working conditions.

The fourth electric field can apply a force toward the exit of the ionization electric field to negatively charged oxygen ions between the tail gas dedusting electric field anode and the tail gas dedusting electric field cathode such that the negatively charged oxygen ions between the tail gas dedusting electric field anode and the tail gas dedusting electric field cathode have a speed of movement toward the exit. In a process in which the tail gas flows into the ionization electric field and flows towards the exit of the ionization electric field, the negatively charged oxygen ions also move towards the exit of the ionization electric field and the tail gas dedusting electric field anode. The negatively charged oxygen ions will be combined with particulates and the like in the tail gas in the process of moving toward the exit of the ionization electric field and the tail gas dedusting electric field anode. As the oxygen ions have a speed of movement toward the exit, when the oxygen ions are combined with the particulates, no stronger collision will be created therebetween, thus avoiding higher energy consumption due to stronger collision, ensuring that the oxygen ions are more readily combined with the particulates, and leading to a higher charging efficiency of the particulates in the gas. In addition, under the action of the exhaust gas dedusting electric field anode, more particulates can be collected, ensuring a higher dedusting efficiency of the exhaust gas electric field device. For the tail gas electric field device, the collection rate of particulates entering the electric field along an ion flow direction is improved by nearly 100% compared with the collection rate of particulates entering the electric field in a direction countering the ion flow direction, thereby improving the dust accumulating efficiency of the electric field and reducing the power consumption of the electric field. A main reason for the relatively low dedusting efficiency of the prior art dust collecting electric fields is also that the direction of dust entering the electric field is opposite to or perpendicular to the direction of the ion flow in the electric field so that the dust and the ion flow collide violently with each other and generate relatively high energy consumption. In addition, the charging efficiency is also affected, further reducing the dust collecting efficiency of the prior art electric fields and increasing the power consumption. When the tail gas electric field device collects dust in a gas, the gas and the dust enter the electric field along the ion flow direction, the dust is sufficiently charged, and the consumption of the electric field is low. The dust collecting efficiency of a unipolar electric field will reach 99.99%. When the gas and the dust enter the electric field in a direction countering the ion flow direction, the dust is insufficiently charged, the power consumption by the electric field will also be increased, and the dust collecting efficiency will be 40%-75%. In an embodiment of the present invention, the ion flow formed by the tail gas electric field device facilitates fluid transportation, increasing of oxygen to a gas intake, heat exchange and so on by an unpowered fan.

As the tail gas dedusting electric field anode continuously collects particulates and the like in the tail gas, the particulates and the like are accumulated on the tail gas dedusting electric field anode and form carbon black. The thickness of the carbon black is increased continuously such that the inter-electrode distance is reduced. In an embodiment of the present invention, when it is detected that the electric field current has increased, an electric field back corona discharge phenomenon is used in cooperation with an increase in a voltage and restriction of an injection current, so that rapid discharge occurring at a deposition position of generates a large amount of plasma. The low-temperature plasmas enable organic components of the carbon black to be deeply oxidized and break polymer bonds to form small molecular carbon dioxide and water, thus completing the cleaning of carbon black. As oxygen in the air participates in ionization at the same time, ozone is formed, the ozone molecular groups capture the deposited oil stain molecular groups at the same time, the carbon-hydrogen bond breakage in the oil stain molecules is accelerated, and a part of oil molecules are carbonized, so the purpose of purifying volatile matter in the tail gas is achieved. In addition, carbon black cleaning is achieved using plasma to achieve an effect that cannot be achieved by conventional cleaning methods. Plasma is a state of matter and is also referred to as the fourth state of matter. It does not belong to the three common states, i.e., solid state, liquid state, and gas state. Sufficient energy applied to gas enables the gas to be ionized into a plasma state. The "active" components of the plasma include ions, electrons, atoms, reactive groups, excited state species (metastable species), photons, and the like. In an embodiment of the present invention, when dust is accumulated in the electric field, the tail gas electric field device detects the electric field current and realizes carbon black cleaning in any one of the following manners:
(1) the tail gas electric field device increases the electric field voltage when the electric field current has increased to a given value;
(2) the tail gas electric field device uses an electric field back corona discharge phenomenon when the electric field current has increased to a given value to complete the carbon black cleaning;
(3) the tail gas electric field device uses an electric field back corona discharge phenomenon, increases the electric field voltage, and restricts an injection current when the electric field current has increased to a given value to complete the carbon black cleaning; and
(4) the tail gas electric field device uses an electric field back corona discharge phenomenon, increases the electric field voltage, and restricts an injection current, when the electric field current has increased to a given value so that rapid discharge occurring at a deposition position of the anode generates plasmas, and the plasmas enable organic components of the carbon black to be deeply oxidized and break polymer bonds to form small molecular carbon dioxide and water, thus completing the carbon black cleaning.

In an embodiment of the present invention, the tail gas dedusting electric field anode and the tail gas dedusting electric field cathode are each electrically connected to a different one of two electrodes of a power supply. A suitable voltage level should be selected for the voltage applied to the tail gas dedusting electric field anode and the tail gas dedusting electric field cathode. The specifically selected voltage level depends upon the volume, the temperature resistance, the dust holding rate, and other parameters of the tail gas electric field device. For example, the voltage ranges from 1 kv to 50 kv. In designing, the temperature resistance conditions and parameters of the inter-electrode distance and temperature are considered first: 1 MM<30 degrees, the dust accumulation area is greater than 0.1 square/kilocubic meter/hour, the length of the electric field is greater than 5 times the diameter of an inscribed circle of a single tube, and the gas flow velocity in the electric field is controlled to be less than 9 m/s. In an embodiment of the present invention, the tail gas dedusting electric field anode is comprised of second hollow anode tubes and has a honeycomb shape. An end opening of each second hollow anode tube may be circular or polygonal. In an embodiment of the present invention, an inscribed circle inside the second hollow anode tube has a diameter in the range of 5-400 mm, a corresponding voltage is 0.1-120 kv, and a corresponding current of the second hollow anode tube is 0.1-30 A. Different inscribed circles corresponding to different corona voltages, about 1 KV/1 MM.

In an embodiment of the present invention, the tail gas electric field device includes a second electric field stage. The second electric field stage includes a plurality of second electric field generating units, and the second electric field generating unit may be in one or plural. The second electric field generating unit, which is also referred to as a second dust collecting unit, includes the tail gas dedusting electric field anode and the tail gas dedusting electric field cathode. There may be one or more second dust collecting units. When there is a plurality of second electric field stages, the dust collecting efficiency of the tail gas electric field device can be effectively improved. In the same second electric field stage, each tail gas dedusting electric field anode has the same polarity, and each tail gas dedusting electric field cathode has the same polarity. When there is a plurality of second electric field stages, the second electric field stages are connected in series. In an embodiment of the present invention, the tail gas electric field device further includes a plurality of connection housings, and the serially connected second electric field stages are connected by the connection housings. The distance between two adjacent electric field stages is greater than 1.4 times the inter-electrode distance.

In an embodiment of the present invention, the electric field is used to charge an electret material. When the tail gas electric field device fails, the charged electret material is used to remove dust.

In an embodiment of the present invention, the tail gas electric field device includes a tail gas electret element.

In an embodiment of the present invention, the tail gas electret element is provided inside the tail gas dedusting electric field anode.

In an embodiment of the present invention, when the tail gas dedusting electric field anode and the tail gas dedusting electric field cathode are powered on, the tail gas electret element is in the tail gas ionization dedusting electric field.

In an embodiment of the present invention, the tail gas electret element is close to a tail gas electric field device exit, or the tail gas electret element is provided at the tail gas electric field device exit.

In an embodiment of the present invention, the tail gas dedusting electric field anode and the tail gas dedusting electric field cathode form a tail gas flow channel, and the tail gas electret element is provided in the tail gas flow channel.

In an embodiment of the present invention, the tail gas flow channel includes a tail gas flow channel exit, and the tail gas electret element is close to the tail gas flow channel exit, or the tail gas electret element is provided at the tail gas flow channel exit.

In an embodiment of the present invention, the cross section of the tail gas electret element in the tail gas flow channel occupies 5%-100% of the cross section of the tail gas flow channel.

In an embodiment of the present invention, the cross section of the tail gas electret element in the tail gas flow channel occupies 10%-90%, 20%-80%, or 40%-60% of the cross section of the tail gas flow channel.

In an embodiment of the present invention, the tail gas ionization dedusting electric field charges the tail gas electret element.

In an embodiment of the present invention, the tail gas electret element has a porous structure.

In an embodiment of the present invention, the tail gas electret element is a textile.

In an embodiment of the present invention, the tail gas dedusting electric field anode has a tubular interior, the tail gas electret element has a tubular exterior, and the tail gas dedusting electric field anode is disposed around the tail gas electret element like a sleeve.

In an embodiment of the present invention, the tail gas electret element is detachably connected to the tail gas dedusting electric field anode.

In an embodiment of the present invention, materials forming the tail gas electret element include an inorganic compound having electret properties. Electret properties refer to the ability of the tail gas electret element to carry electric charges after being charged by an external power supply and still retain certain charges after being completely disconnected from the power supply so as to act as an electrode and play the role of an electric field electrode.

In an embodiment of the present invention, the inorganic compound is one or a combination of compounds selected from an oxygen-containing compounds, nitrogen-containing compounds, and glass fibers.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of materials selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the tail gas electret element include an organic compound having electret properties. Electret properties refer to the ability of the tail gas electret element to carry electric charges after being charged by an external power supply and still retain certain charges after being completely disconnected from the power supply so as to act as an electrode and play the role of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

The tail gas ionization dedusting electric field is generated in a condition with a power-on drive voltage. The tail gas ionization dedusting electric field is used to ionize a part of the substance to be treated, adsorb particulates in the substance to be treated, and meanwhile charge the tail gas electret element. When the tail gas electric field device fails. Namely, when there is no power-on drive voltage, the charged tail gas electret element generates an electric field, and the particulates in the substance to be treated are adsorbed using the electric field generated by the charged tail gas electret element. Namely, the particulates can still be adsorbed when the tail gas ionization dedusting electric field is in trouble.

A tail gas dedusting method includes a step of removing liquid water in the tail gas when the tail gas has a temperature of lower than 100°C and then performing ionization dedusting.

In an embodiment of the present invention, when the tail gas has a temperature of ≥100 °C, ionization dedusting is performed on the tail gas.

In an embodiment of the present invention, when the tail gas has a temperature of ≤90 °C, liquid water in the tail gas is removed, and then ionization dedusting is performed.

In an embodiment of the present invention, when the tail gas has a temperature of ≤80°C, liquid water in the tail gas is removed, and then ionization dedusting is performed.

In an embodiment of the present invention, when the tail gas has a temperature of ≤70°C, liquid water in the tail gas is removed, and then ionization dedusting is performed.

In an embodiment of the present invention, the liquid water in the tail gas is removed with an electrocoagulation demisting method, and then ionization dedusting is performed.

A tail gas dedusting method includes a step of adding an oxygen-containing gas before a tail gas ionization dedusting electric field to perform ionization dedusting.

In an embodiment of the present invention, oxygen is added by purely increasing oxygen, introducing external air, introducing compressed air, and/or introducing ozone.

In an embodiment of the present invention, the amount of supplemented oxygen depends at least upon the content of particles in the tail gas.

For the tail gas system, in an embodiment of the present invention, the present invention provides an electric field dedusting method including the following steps:
enabling a dust-containing gas to pass through an ionization dedusting electric field generated by a dedusting electric field anode and a dedusting electric field cathode; and
performing a dust cleaning treatment when dust is accumulated in the electric field.

In an embodiment of the present invention, the dust cleaning treatment is performed when a detected electric field current has increased to a given value.

In an embodiment of the present invention, when the dust is accumulated in the electric field, dust cleaning is performed in any one of the following manners:
(1) using an electric field back corona discharge phenomenon to complete the dust cleaning treatment;
(2) using an electric field back corona discharge phenomenon, increasing a voltage, and restricting an injection current to complete the dust cleaning treatment; and
(3) using an electric field back corona discharge phenomenon increasing a voltage, and restricting an injection current so that rapid discharge occurring at a deposition position of the anode generates plasmas, and the plasmas enable organic components of the dust to be deeply oxidized and break polymer bonds to form small molecular carbon dioxide and water, thereby completing the dust cleaning treatment.

Preferably, the dust is carbon black.

In an embodiment of the present invention, the dedusting electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments which can easily discharge electricity, are resistant to high temperatures, are capable of supporting their own weight, and are electrochemically stable. In an embodiment of the present invention, titanium is selected as the material of the cathode filaments. The specific shape of the cathode filaments is adjusted according to the shape of the dedusting electric field anode. For example, if a dust accumulation surface of the dedusting electric field anode is a flat surface, the cross section of each cathode filament is circular. If a dust accumulation surface of the dedusting electric field anode is an arcuate surface, the cathode filament needs to be designed to have a polyhedral shape. The length of the cathode filaments is adjusted according to the dedusting electric field anode.

In an embodiment of the present invention, the dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the tail gas dedusting electric field anode. For example, if a dust accumulation surface of the dedusting electric field anode is a flat surface, the cross section of each cathode bar needs to be designed with a circular shape. If a dust accumulation surface of the dedusting electric field anode is an arcuate surface, each cathode bar needs to be designed with a polyhedral shape.

In an embodiment of the present invention, the dedusting electric field cathode is provided in the dedusting electric field anode in a penetrating manner.

In an embodiment of the present invention, the dedusting electric field anode includes one or more hollow anode tubes provided in parallel. When there is a plurality of hollow anode tubes, all of the hollow anode tubes constitute a honeycomb-shaped dedusting electric field anode. In an embodiment of the present invention, the cross section of each hollow anode tube may be circular or polygonal. If the cross section of each hollow anode tube is circular, a uniform electric field can be formed between the dedusting electric field anode and the dedusting electric field cathode, and dust is not easily accumulated on the inner walls of the hollow anode tubes. If the cross section of each hollow anode tube is triangular, 3 dust accumulation surfaces and 3 dust holding corners can be formed on the inner wall of the hollow anode tube, and the hollow anode tube with such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

For the tail gas system, in an embodiment, the present invention provides a method for reducing coupling of a tail gas dedusting electric field including the following steps:
enabling the tail gas to pass through the tail gas ionization dedusting electric field generated by the tail gas dedusting electric field anode and the tail gas dedusting electric field cathode; and
selecting the tail gas dedusting electric field anode or/and the tail gas dedusting electric field cathode.

In an embodiment of the present invention, the size selected for the tail gas dedusting electric field anode or/and the tail gas dedusting electric field cathode allows the coupling time of the electric field to be ≤3.

Specifically, the ratio of the dust collection area of the tail gas dedusting electric field anode to the discharge area of the tail gas dedusting electric field cathode is selected. Preferably, the ratio of a dust accumulation area of the tail gas dedusting electric field anode to the discharge area of the tail gas dedusting electric field cathode is selected to be 1.667:1-1680:1.

More preferably, the ratio of the dust accumulation area of the tail gas dedusting electric field anode to the discharge area of the tail gas dedusting electric field cathode is selected to be 6.67:1-56.67:1.

In an embodiment of the invention, the relative distance between the tail gas dedusting electric field anode and the tail gas dedusting electric field cathode is adjusted according to the temperature; wherein the temperature corresponds adjustment range with 120-200°C corresponding to 20-72 millimeters.

Preferably, the inter-electrode distance between the tail gas dedusting electric field anode and the tail gas dedusting electric field cathode is selected to be less than 150 mm.

Preferably, the inter-electrode distance between the tail gas dedusting electric field anode and the tail gas dedusting electric field cathode is selected to be 2.5-139.9 mm. More preferably, the inter-electrode distance between the tail gas dedusting electric field anode and the tail gas dedusting electric field cathode is selected to be 5.0-100 mm.

Preferably, the tail gas dedusting electric field anode is selected to have a length of 10-180 mm. More preferably, the tail gas dedusting electric field anode is selected to have a length of 60-180 mm.

Preferably, the tail gas dedusting electric field cathode is selected to have a length of 30-180 mm. More preferably, the tail gas dedusting electric field cathode is selected to have a length of 54-176 mm.

In an embodiment of the present invention, the tail gas dedusting electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments which can easily discharge electricity, are resistant to high temperatures, are capable of supporting their own weight, and are electrochemically stable. In an embodiment of the present invention, titanium is selected as the material of the cathode filaments. The specific shape of the cathode filaments is adjusted according to the shape of the tail gas dedusting electric field anode. For example, if a dust accumulation surface of the tail gas dedusting electric field anode is a flat surface, the cross section of each cathode filament is circular. If a dust accumulation surface of the tail gas dedusting electric field anode is an arcuate surface, the cathode filament needs to be designed with a polyhedral shape. The length of the cathode filaments is adjusted according to the tail gas dedusting electric field anode.

In an embodiment of the present invention, the tail gas dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the tail gas dedusting electric field anode. For example, if a dust accumulation surface of the tail gas dedusting electric field anode is a flat surface, the cross section of each cathode bar needs to be designed to have a circular shape. If a dust accumulation surface of the tail gas dedusting electric field anode is an arcuate surface, each cathode bar needs to be designed to have a polyhedral shape.

In an embodiment of the present invention, the tail gas dedusting electric field cathode is provided in the tail gas dedusting electric field anode in a penetrating manner.

In an embodiment of the present invention, the tail gas dedusting electric field anode includes one or more hollow anode tubes provided in parallel. When there is a plurality of hollow anode tubes, all of the hollow anode tubes constitute a honeycomb-shaped dedusting electric field anode. In an embodiment of the present invention, the cross section of each hollow anode tube may be circular or polygonal. If the cross section of each hollow anode tube is circular, a uniform electric field can be formed between the tail gas dedusting electric field anode and the tail gas dedusting electric field cathode, and dust is not easily accumulated on the inner walls of the hollow anode tubes. If the cross section of each hollow anode tube is triangular, 3 dust accumulation surfaces and 3 dust holding corners can be formed on the inner wall of the hollow anode tube, and the hollow anode tube with such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

A tail gas dedusting method includes the following steps:
1) adsorbing particulates in the tail gas with a tail gas ionization dedusting electric field; and
2) charging a tail gas electret element with the tail gas ionization dedusting electric field.

In an embodiment of the present invention, the tail gas electret element is close to a tail gas electric field device exit, or the tail gas electret element is provided at the tail gas electric field device exit.

In an embodiment of the present invention, the tail gas dedusting electric field anode and the tail gas dedusting electric field cathode form a tail gas flow channel, and the tail gas electret element is provided in the tail gas flow channel.

In an embodiment of the present invention, the tail gas flow channel includes a tail gas flow channel exit, and the tail gas electret element is close to the tail gas flow channel exit, or the tail gas electret element is provided at the tail gas flow channel exit.

In an embodiment of the present invention, when the tail gas ionization dedusting electric field has no power-on drive voltage, the charged tail gas electret element is used to adsorb particulates in the tail gas.

In an embodiment of the present invention, after adsorbing certain particulates in the tail gas, the charged tail gas electret element is replaced by a new tail gas electret element.

In an embodiment of the present invention, after replacement with the new tail gas electret element, the tail gas ionization dedusting electric field is restarted to adsorb particulates in the tail gas and charge the new tail gas electret element.

In an embodiment of the present invention, materials forming the tail gas electret element include an inorganic compound having electret properties. Electret properties refer to the ability of the tail gas electret element to carry electric charges after being charged by an external power supply and still retain certain charges after being completely disconnected from the power supply so as to act as an electrode and play the role of an electric field electrode.

In an embodiment of the present invention, the inorganic compound is one or a combination of compounds selected from an oxygen-containing compounds, nitrogen-containing compounds, and glass fibers.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of materials selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the tail gas electret element include an organic compound having electret properties. Electret properties refer to the ability of the tail gas electret element to carry electric charges after being charged by an external power supply and still retain certain charges after being completely disconnected from the power supply so as to act as an electrode and play the role of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

In an embodiment of the present invention, the engine tail gas treatment system includes a tail gas ozone purification system.

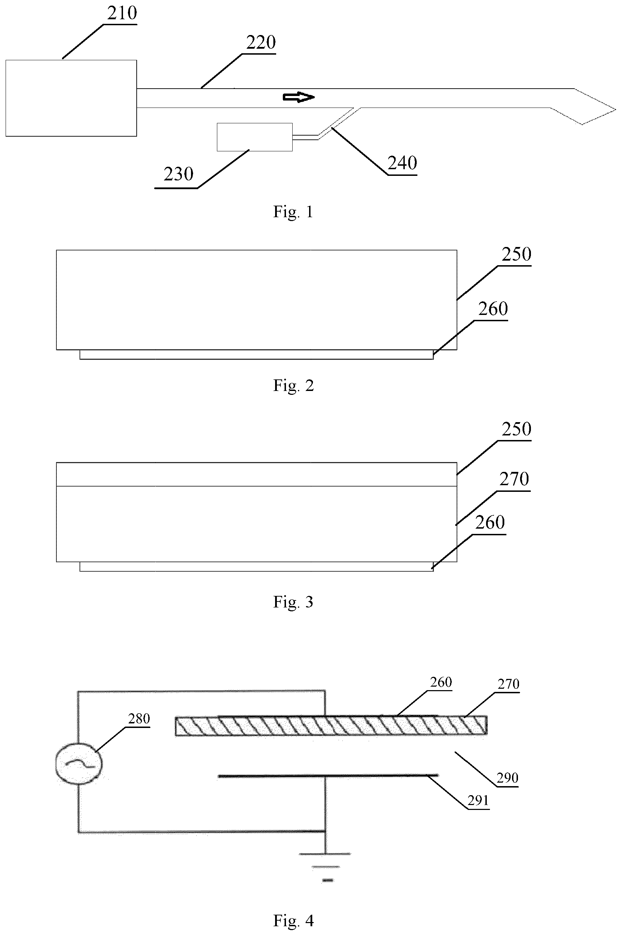

In an embodiment of the present invention, the tail gas ozone purification system includes a reaction field for mixing and reacting an ozone stream with a tail gas stream. For example, the tail gas ozone purification system can be used to treat tail gas of an automobile engine 210, using the water in the tail gas and a tail gas pipe 220 to generate an oxidation reaction and oxidize organic volatiles in the tail gas to carbon dioxide and water. Sulfur, nitrates, and the like are collected in a harmless way. The tail gas ozone purification system may further include an external ozone generator 230 which provides ozone to the tail gas pipe 220 through an ozone delivery pipe 240. The arrow in FIG 1 indicates the flow direction of tail gas.

The molar ratio of the ozone stream to the tail gas stream may be 2-10, such as 5-6, 5.5-6.5, 5-7, 4.5-7.5, 4-8, 3.5-8.5, 3-9, 2.5-9.5, or 2-10.

In an embodiment of the present invention, ozone can be obtained in a different manner. For example, ozone generation by means of extended-surface discharge is realized by tube-type or plate-type discharge components and an alternating high-voltage power supply. Air, from which dust is adsorbed by means of electrostatic adsorption, from which water is removed, and which is enriched with oxygen, enters a discharge channel. Oxygen in the air is ionized to generate ozone, high-energy ions, and high-energy particles, which are introduced into a reaction field such as a tail gas channel through a positive pressure or a negative pressure. A tube-type extended surface discharge structure is used, a cooling liquid is introduced inside the discharge tube and outside an outer discharge tube, an electrode is formed between the electrode inside the tube and a conductor of the outer tube, a 18 kHz and 10 kV high-voltage alternating current is introduced between the electrodes, high-energy ionization is generated on an inner wall of the outer tube and an outer wall surface of an inner tube, oxygen is ionized, and ozone is generated. Ozone is fed into the reaction field such as the tail gas channel using a positive pressure. When the molar ratio of the ozone stream to the tail gas stream is 2, the removal rate of VOCs is 50%. When the molar ratio of the ozone stream to the tail gas stream is 5, the removal rate of VOCs is more than 95%. The gas concentration of nitrogen oxides gas is then reduced, and the removal rate of nitrogen oxides is 90%. When the molar ratio of the ozone stream to the tail gas stream is greater than 10, the removal rate of VOCs is more than 99%. The gas concentration of nitrogen oxides is then reduced, and the removal rate of nitrogen oxides is 99%. The electricity consumption is increased to 30 w/g.

Generating the ozone using an ultraviolet lamp tube is performed as follows. Ultraviolet rays with a wavelength of 11-195 nanometers are generated by means of gas discharge. Air around a lamp tube is directly irradiated with the ultraviolet rays to generate ozone, high-energy ions, and high-energy particles which are introduced into the reaction field such as the tail gas channel through a positive pressure or a negative pressure. When an ultraviolet discharge tube with a 172 nm wavelength and a 185 nm wavelength is used, by illuminating the lamp tube, oxygen in the gas at the outer wall of the lamp tube is ionized to generate a large amount of oxygen ions, which are combined into ozone. The ozone is fed into the reaction field such as the tail gas channel through a positive pressure. When the molar ratio of the ozone stream obtained from 185 nm ultraviolet light to the tail gas stream is 2, the removal rate of VOCs is 40%. When the molar ratio of the ozone stream obtained from 185 nm ultraviolet light to the tail gas stream is 5, the removal rate of VOCs is more than 85%. The gas concentration of nitrogen oxides is then reduced, and the removal rate of nitrogen oxides is 70%. When the molar ratio of the ozone stream obtained from 185 nm ultraviolet light to the tail gas stream is greater than 10, the removal rate of VOCs is more than 95%. The gas concentration of nitrogen oxides is then reduced, and the removal rate of nitrogen oxides is 95%. The electricity consumption is increased to 25 w/g.

When the molar ratio of the ozone stream obtained from 172 nm ultraviolet light to the tail gas stream is 2, the removal rate of VOCs is 45%. When the molar ratio of the ozone stream obtained from 172 nm ultraviolet light to the tail gas stream is 5, the removal rate of VOCs is more than 89%, then the gas concentration of nitrogen oxides is reduced, and the removal rate of nitrogen oxides is 75%. When the molar ratio of the ozone stream obtained from 172 nm ultraviolet light to the tail gas stream is greater than 10, the removal rate of VOCs is more than 97%. The gas concentration of nitrogen oxides is then reduced, and the removal rate of nitrogen oxides is 95%. The electricity consumption is increased to 22 w/g.

In an embodiment of the present invention, the reaction field includes a pipeline and/or a reactor. In an embodiment of the present invention, the reaction field further includes at least one of the following technical features:
1) the diameter of the pipeline is 100-200 mm.
2) the length of the pipeline is greater than 0.1 times the diameter of the pipeline.
3) the reactor is at least one type of reactor selected from the following:
   a first reactor: The first reactor has a reaction chamber in which the tail gas is mixed and reacted with the ozone;
   a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
   a third reactor: The third reactor includes a plurality of carrier units which provide reaction sites (for example, a honeycomb-shaped mesoporous ceramic carrier), when there is no carrier unit, the reaction is in the gas phase, and when there is a carrier unit, the reaction is an interface reaction, which shortens the reaction time.
   a fourth reactor: The fourth reactor includes a catalyst unit which is configured to promote oxidization reaction of the tail gas.
      1) The reaction field is provided with an ozone entrance, which is at least one selected from a spout, a spray grid, a nozzle, a swirl nozzle, and a spout provided with a venturi tube. For a spout provided with a venturi tube, the venturi tube is provided in the spout, and ozone is mixed by the venturi principle.
      2) The reaction field is provided with an ozone entrance through which the ozone enters the reaction field to contact the tail gas. The ozone entrance is provided in at least one of the following directions: a direction opposite to the flow direction of the tail gas, a direction perpendicular to the flow direction of the tail gas, a direction tangent to the flow direction of the tail gas, a direction inserted in the flow direction of the tail gas, and multiple directions in order to overcome gravity. A direction opposite to the flow direction of the tail gas means entering in the opposite direction, thereby increasing the reaction time and reducing the volume. A direction perpendicular to the flow direction of the tail gas means using the venturi effect. A direction tangent to the flow direction of the tail gas facilitates mixing. A direction inserted in the flow direction of the tail gas overcomes vortices. In addition, providing the ozone entrance in multiple directions overcomes gravity.

In an embodiment of the present invention, the reaction field includes an exhaust pipe, a heat retainer device, or a catalytic converter. Ozone can clean and regenerate the heat retainer, the catalyst, and the ceramic body.

In an embodiment of the present invention, the temperature of the reaction field is -50-200 °C, which may be 60-70 °C, 50-80 °C, 40-90 °C, 30-100 °C, 20-110 °C, 10-120 °C, 0-130 °C, -10-140 °C, -20-150 °C, -30-160 °C, -40-170 °C, -50-180 °C, -180-190 °C, or 190-200 °C.

In an embodiment of the present invention, the temperature of the reaction field is 60-70 °C.

In an embodiment of the present invention, the tail gas ozone purification system further includes an ozone source configured to provide an ozone stream. The ozone stream may be generated instantly by the ozone generator. The ozone stream may also be stored ozone. The reaction field can be in fluid communication with the ozone source, and the ozone stream provided by the ozone source can be introduced into the reaction field so as to be mixed with the tail gas stream such that the tail gas stream undergoes oxidation treatment.

In an embodiment of the present invention, the ozone source includes an ozone storage unit and/or an ozone generator. The ozone source can include an ozone introduction pipeline and may also include an ozone generator. The ozone generator may include, but is not limited to, one or a combination of generators selected from an arc ozone generator, i.e., an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone generator includes an electrode. A catalyst layer is provided on the electrode. The catalyst layer includes an oxidation catalytic bond cracking selective catalyst layer.

In an embodiment of the present invention, the electrode includes a high-voltage electrode or a high-voltage electrode having a barrier dielectric layer. When the electrode includes a high-voltage electrode, the oxidation catalytic bond cracking selective catalyst layer 250 is provided on a surface of the high-voltage electrode 260 (as shown in FIG. 2). When the electrode includes a high-voltage electrode 260 provided with a barrier dielectric layer 270, the oxidation catalytic bond cracking selective catalyst layer 250 is provided on a surface of the barrier dielectric layer 270 (as shown in FIG 3).

The high-voltage electrode refers to a direct-current or alternating-current electrode with a voltage higher than 500 V. An electrode is a polar plate that is used as an electrically conductive medium (a solid, gas, vacuum, or electrolyte solution) to input or export a current. The pole that inputs a current is referred to as an anode or a positive electrode, and the pole that emits a current is referred to as a cathode or a negative electrode.

The discharge-type ozone generation mechanism is mainly a physical (electrical) method. There are many types of discharge-type ozone generators, but the basic principle thereof is to use a high voltage to generate an electric field and then use the electric energy of the electric field to weaken or even break double bonds of oxygen to generate ozone. A structural schematic diagram of existing discharge-type ozone generator is shown in FIG 4. This discharge-type ozone generator includes a high voltage alternating-current power supply 280, a high-voltage electrode 260, a barrier dielectric layer 270, an air gap 290, and a ground electrode 291. Under the action of the high-voltage electric field, double oxygen bonds of the oxygen molecules in the air gap 290 are broken by electric energy, and ozone is generated. However, there are limits to the use of electric field energy to generate ozone. At present, industry standards require that the electricity consumption per kg of ozone should not exceed 8 kWh, and the industry average level is about 7.5 kWh

In an embodiment of the present invention, the barrier dielectric layer is at least one material selected from a ceramic plate, a ceramic pipe, a quartz glass plate, a quartz plate, and a quartz pipe. The ceramic plate and the ceramic pipe may be a ceramic plate and a ceramic pipe made of an oxide such as aluminum oxide, zirconium oxide, and silicon oxide or a composite oxide thereof. In an embodiment of the present invention, when the electrode includes a high-voltage electrode, the oxidation catalytic bond cracking selective catalyst layer has a thickness of 1-3 mm, such as 1-1.5 mm or 1.5-3 mm. The oxidation catalytic bond cracking selective catalyst layer also serves as a barrier medium. When the electrode includes a high-voltage electrode having a barrier dielectric layer, the load capability of the oxidation catalytic bond cracking selective catalyst layer is 1-12 wt%, e.g., 1-5 wt% or 5-12 wt% of the barrier dielectric layer.

In an embodiment of the present invention, the oxidation catalytic bond cracking selective catalyst layer includes the following components in percentages by weight:
5-15%, e.g., 5-8%, 8-10%, 10-12%, 12-14% or 14-15% of an active component; and
85-95%, e.g., 85-86%, 86-88%, 88-90%, 90-92%, or 92-95% of a coating layer,
wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.

In an embodiment of the present invention, the alkaline earth metal element is at least one element selected from the group consisting of magnesium, strontium, and calcium.

In an embodiment of the present invention, the transition metal element is at least one element selected from the group consisting of titanium, manganese, zinc, copper, iron, nickel, cobalt, yttrium, and zirconium.

In an embodiment of the present invention, the fourth main group metal element is tin.

In an embodiment of the present invention, the noble metal element is at least one element selected from the group consisting of platinum, rhodium, palladium, gold, silver and iridium.

In an embodiment of the present invention, the lanthanoid rare earth element is at least one element selected from the group consisting of lanthanum, cerium, praseodymium and samarium. In an embodiment of the present invention, the compound of the metallic element M is at least one material selected from the group consisting of oxides, sulfides, sulfates, phosphates, carbonates, and perovskites.

In an embodiment of the present invention, the porous material is at least one material selected from the group consisting of a molecular sieve, diatomaceous earth, zeolite, and a carbon nanotube. The porous material has the porosity of more than 60%, such as 60-80%, a specific surface area of 300-500 m2/g, and an average pore size of 10-100 nm.

In an embodiment of the present invention, the layered material is at least one material selected from the group consisting of graphene and graphite.

The oxidation catalytic bond cracking selective catalyst layer combines chemical and physical methods to reduce, weaken, or even directly break the double oxygen bond and fully exerts and uses the synergistic effect of an electric field and catalysis to achieve the purpose of significantly increasing the rate of ozone generation and the amount of ozone produced. Compared with existing discharge-type ozone generators, under the same conditions, the ozone generator of the present invention increases the amount of ozone generated by 10-30% and the rate of generation by 10-20%.

In an embodiment of the present invention, the tail gas ozone purification system further includes an ozone amount control device configured to control the amount of ozone so as to effectively oxidize gas components to be treated in tail gas. The ozone amount control device includes a control unit.

In an embodiment of the present invention, the ozone amount control device further includes a pre-ozone-treatment tail gas component detection unit configured to detect the contents of components in the tail gas before the ozone treatment.

In an embodiment of the present invention, the control unit controls the amount of ozone required in the mixing and reaction according to the contents of components in the tail gas before the ozone treatment.

In an embodiment of the present invention, the pre-ozone-treatment tail gas component detection unit is at least one selected from the following detection units:
a first volatile organic compound detection unit configured to detect the content of volatile organic compounds in the tail gas before the ozone treatment, such as a volatile organic compound sensor;
a first CO detection unit configured to detect the CO content in the tail gas before the ozone treatment, such as a CO sensor; and
a first nitrogen oxide detection unit configured to detect the nitrogen oxide content in the tail gas before the ozone treatment, such as a nitrogen oxide (NOx) sensor.

In an embodiment of the present invention, the control unit controls the amount of ozone required in the mixing and reaction according to an output value of at least one of the pre-ozone-treatment tail gas component detection units.

In an embodiment of the present invention, the control unit is configured to control the amount of ozone required in the mixing and reaction according to a preset mathematical model. The preset mathematical model is related to the content of tail gas components before ozone treatment. The amount of ozone required in the mixing and reaction is determined according to the above-mentioned content and the reaction molar ratio of the tail gas components to ozone. When the amount of ozone required in the mixing and reaction is determined, the amount of ozone can be increased to make the ozone excessive.

In an embodiment of the present invention, the control unit is configured to control the amount of ozone required in the mixing and reaction according to a theoretically estimated value.

In an embodiment of the present invention, the theoretically estimated value is a molar ratio of an ozone introduction amount to a substance to be treated in the tail gas, which is 2-10. For example, a controllable ozone introduction amount of a 13-L diesel engine is 300-500 g. and a controllable ozone introduction amount of a 2-L diesel engine is 5-20 g.

In an embodiment of the present invention, the ozone amount control device includes a post-ozone-treatment tail gas component detection unit configured to detect the contents of components in the tail gas after the ozone treatment.

In an embodiment of the present invention, the control unit controls the amount of ozone required in the mixing and reaction according to the contents of components in the tail gas after the ozone treatment.

In an embodiment of the present invention, the post-ozone-treatment tail gas component detection unit is at least one unit selected from the following detection units:
a first ozone detection unit configured to detect the ozone content in the tail gas after the ozone treatment;
a second volatile organic compound detection unit configured to detect the content of volatile organic compounds in the tail gas after the ozone treatment;
a second CO detection unit configured to detect the CO content in the tail gas after the ozone treatment; and
a second nitrogen oxide detection unit configured to detect the nitrogen oxide content in the tail gas after the ozone treatment.

In an embodiment of the present invention, the control unit controls the amount of ozone according to the output value of at least one of the post-ozone-treatment tail gas component detection units.

In an embodiment of the present invention, the tail gas ozone purification system further includes a denitration device configured to remove nitric acid in a product resulting from mixing and reacting the ozone stream with the tail gas stream.

In an embodiment of the present invention, the denitration device includes an electrocoagulation device, and the electrocoagulation device includes an electrocoagulation flow channel, a first electrode located in the electrocoagulation flow channel, and a second electrode.

In an embodiment of the present invention, the denitration device includes a condensing unit configured to condense the tail gas which has undergone the ozone treatment, thereby realizing gas-liquid separation.

In an embodiment of the present invention, the denitration device includes a leaching unit configured to leach the tail gas which has undergone the ozone treatment. The leaching is carried out with water and/or an alkali, for example.

In an embodiment of the present invention, the denitration device further includes a leacheate unit configured to provide leacheate to the leaching unit.

In an embodiment of the present invention, the leacheate in the leacheate unit includes water and/or an alkali.

In an embodiment of the present invention, the denitration device further includes a denitration liquid collecting unit configured to store an aqueous nitric acid solution and/or an aqueous nitrate solution removed from the tail gas.

In an embodiment of the present invention, the denitration liquid collecting unit stores the aqueous nitric acid solution, and the denitration liquid collecting unit is provided with an alkaline solution adding unit configured to form a nitrate with nitric acid.

In an embodiment of the present invention, the tail gas ozone purification system further includes an ozone digester configured to digest ozone in the tail gas which has undergone treatment in the reaction field. The ozone digester can perform ozone digestion by means of ultraviolet rays, catalysis, and the like.

In an embodiment of the present invention, the ozone digester is at least one type of digester selected from an ultraviolet ozone digester and a catalytic ozone digester.

In an embodiment of the present invention, the tail gas ozone purification system further includes a first denitration device configured to remove nitrogen oxides in the tail gas. The reaction field is configured to mix and react the tail gas which has been treated by the first denitration device with the ozone stream, or to mix and react the tail gas before being treated by the first denitration device with the ozone stream.

The first denitration device may be a prior art device that realizes denitration, such as at least one of a non-catalytic reduction device (e.g. ammonia gas denitration), a selective catalytic reduction device (SCR: ammonia gas plus catalyst denitration), a non-selective catalytic reduction device (SNCR), and an electron beam denitration device. The nitrogen oxide content (NOₓ) in the tail gas of the engine after treatment by the first denitration device does not meet the latest standards, but mixing and reacting the tail gas after or before the treatment by the first denitration device with the ozone stream can satisfy the latest standards.

In an embodiment of the present invention, the first denitration device is at least one selected from a non-catalytic reduction device, a selective catalytic reduction device, a non-selective catalytic reduction device, and an electron beam denitration device.

Based on the prior art, those skilled in the art believed that when nitrogen oxides NOX in engine tail gas are treated by ozone, the nitrogen oxides NOₓ are oxidized by ozone to high-valence nitrogen oxides such as NO₂, N₂O₅, and NO₃. The high-valence nitrogen oxides are still gases and cannot be removed from the engine tail gas. Namely, treatment of the nitrogen oxides NOx in the engine tail gas with the ozone is ineffective. However, the applicant found that the high-valence nitrogen oxides generated by the reaction between ozone and nitrogen oxides in tail gas are not final products. The high-valence nitrogen oxides will react with water to produce nitric acid, and the nitric acid is more easily removed from the engine tail gas, such as through use of electrocoagulation and condensation. This effect is unexpected to those skilled in the art. This unexpected technical effect is due to the fact that those skilled in the art did not realize that ozone would also react with VOC in the engine tail gas to produce sufficient water and high-valence nitrogen oxides to generate nitric acid.

When ozone is used to treat the engine tail gas, ozone reacts most preferentially with volatile organic compounds VOC to be oxidized into CO₂ and water. It is then oxidized with nitrogen oxides NOx into high-valence nitrogen oxides such as NO₂, N₂O₅, and NO₃, and finally reacts with carbon monoxide CO to be oxidized into CO₂. Thus, the order of priority of reactions is volatile organic compounds VOC > nitrogen oxides NOx > carbon monoxide CO. There are enough volatile organic compounds VOC in the tail gas to generate sufficient water, which can be fully reacted with high-valence nitrogen oxides to generate nitric acid. Therefore, the treatment of engine tail gas with ozone results in a better effect of removing NOₓ with ozone. This effect is an unexpected technical effect to those skilled in the art.

The following removal effect can be achieved by treating the engine tail gas with ozone: removal efficiency of nitrogen oxides NOₓ: 60-99.97%; removal efficiency of carbon monoxide CO: 1-50%; and removal efficiency of volatile organic compounds VOC: 60-99.97%. These are unexpected technical effects to those skilled in the art.

Nitric acid obtained from reaction of the high-valence nitrogen oxides with water obtained from oxidation of volatile organic compounds VOC is more easily removed, and the nitric acid obtained by the removal can be recycled. For example, the nitric acid can be removed by the electrocoagulation device in the present invention. The nitric acid can also be removed with a prior art method for removing nitric acid, such as alkaline washing. The electrocoagulation device in the present invention includes a first electrode and a second electrode. When water mist containing nitric acid flows through the first electrode, the water mist containing nitric acid is charged. The second electrode applies an attractive force to the charged water mist containing nitric acid, and the water mist containing nitric acid moves towards the second electrode until the water mist containing nitric acid is attached to the second electrode and then is collected. The electrocoagulation device in the present invention has a stronger collecting capability and a higher collecting efficiency for a water mist containing nitric acid.

Oxygen in the air participates in ionization during tail gas ionization dedusting to form ozone. After the tail gas ionization dedusting system is combined with the tail gas ozone purification system, ozone formed by ionization can be used to oxidize pollutants in the tail gas, such as nitrogen oxides NOₓ, volatile organic compounds VOC, and carbon monoxide CO. Namely, ozone resulting from ionization can be used in ozone treatment of NOx to treat pollutants, and while oxidizing nitrogen oxide compound NOx, the ozone will also oxidize volatile organic compounds VOC and carbon monoxide CO, thereby saving ozone consumption during ozone treatment of NOₓ without the need to add an ozone removing mechanism to digest the ozone formed by ionization and without causing the greenhouse effect or destroying ultraviolet rays in the atmosphere. It can be seen that after the tail gas ionization dedusting system and the tail gas ozone purification system are combined, they functionally support each other, and new technical effects are obtained. Namely, the ozone formed by ionization is used by the tail gas ozone purification system to treat pollutants, the ozone consumption for treating pollutants with ozone is saved, and it is not necessary to add an ozone removing mechanism to digest the ozone formed by ionization, thereby avoiding the greenhouse effect and destruction of ultraviolet rays in the atmosphere. As a result, the ozone dedusting system has prominent substantive features and provides notable progress.

A tail gas ozone purification method includes a step of mixing and reacting an ozone stream with a tail gas stream.

In an embodiment of the present invention, the tail gas stream includes nitrogen oxides and volatile organic compounds. The tail gas stream may be engine tail gas. The engine generally is a device converting chemical energy of fuel into mechanical energy. Specifically, it can be an internal combustion engine or the like. More specifically, the tail gas stream may be a diesel engine tail gas, for example. Nitrogen oxides (NOx) in the tail gas stream are mixed and reacted with the ozone stream to be oxidized into high-valence nitrogen oxides such as NO₂, N₂O₅, and NO₃. Volatile organic compounds (VOC) in the tail gas stream are mixed and reacted with the ozone stream to be oxidized into CO₂ and water. The high-valence nitrogen oxides react with water obtained from oxidation of the volatile organic compounds (VOC) to obtain nitric acid. Through the above reaction, the nitrogen oxides (NOx) in the tail gas stream are removed and exist in the waste gas in the form of nitric acid.

In an embodiment of the present invention, the ozone stream is mixed and reacted with the tail gas stream in a low-temperature section of the tail gas.

In an embodiment of the present invention, the ozone stream is mixed and reacted with the tail gas stream at a temperature of -50-200 °C, which may be 60-70 °C, 50-80 °C, 40-90 °C, 30-100 °C, 20-110 °C, 10-120 °C, 0-130 °C, -10-140 °C, -20-150 °C, -30-160 °C, -40-170 °C, -50-180 °C, -180-190 °C, or 190-200 °C.

In an embodiment of the present invention, the ozone stream is mixed and reacted with the tail gas stream at a temperature of 60-70 °C.

In an embodiment of the present invention, a mixing mode of the ozone stream with the tail gas stream is at least one mode selected from venturi mixing, positive pressure mixing, insertion mixing, dynamic mixing, and fluid mixing.

In an embodiment of the present invention, when the mixing mode of the ozone stream with the tail gas stream is positive pressure mixing, the pressure of an ozone intake is greater than the pressure of the tail gas. When the intake pressure of the ozone stream is lower than the outlet pressure of the tail gas stream, the venturi mixing mode can be used at the same time.

In an embodiment of the present invention, before the ozone stream is mixed and reacted with the tail gas stream, the flow velocity of the tail gas stream is increased, and the tail gas stream is mixed into the ozone stream by the venturi principle.

In an embodiment of the present invention, the mixing mode of the ozone stream with the tail gas stream is at least one mode selected from countercurrent introduction at a tail gas outlet, mixing in a front section of a reaction field, insertion before and after a deduster, mixing before and after a denitration device, mixing before and after a catalytic device, introduction before and after a water washing device, mixing before and after a filtering device, mixing before and after a silencing device, mixing in a tail gas pipeline, mixing outside of an adsorption device, and mixing before and after a condensation device. The ozone stream can be mixed in a low-temperature section of the engine tail gas to avoid decomposition of ozone.

In an embodiment of the present invention, a reaction field for mixing and reacting the ozone stream with the tail gas stream includes a pipeline and/or a reactor.

In an embodiment of the present invention, the reaction field includes an exhaust pipe, a heat retainer device or a catalytic converter.

In an embodiment of the present invention, at least one of the following technical features is further included:
1) the diameter of the pipeline is 100-200 mm.
2) the length of the pipeline is greater than 0.1 times the diameter of the pipeline.
3) the reactor is at least one type of reactor selected from the following:
   a first reactor: The first reactor has a reaction chamber in which the tail gas is mixed and reacted with the ozone;
   a second reactor: The second reactor includes a plurality of honeycomb-shaped cavities configured to provide spaces for mixing and reacting the tail gas with the ozone, wherein the honeycomb-shaped cavities are provided with gaps therebetween which are configured to introduce a cold medium and control a reaction temperature of the tail gas with the ozone.
   a third reactor: The third reactor includes a plurality of carrier units which provide reaction sites (for example, a honeycomb-shaped mesoporous ceramic carrier), when there is no carrier unit, the reaction is in the gas phase, and when there is a carrier unit, the reaction is an interface reaction,
   which shortens the reaction time.
   a fourth reactor: The fourth reactor includes a catalyst unit which is configured to promote oxidization reaction of the tail gas.
      1) The reaction field is provided with an ozone entrance, which is at least one selected from a spout, a spray grid, a nozzle, a swirl nozzle, and a spout provided with a venturi tube. For a spout provided with a venturi tube, the venturi tube is provided in the spout, and ozone is mixed by the venturi principle.
      2) The reaction field is provided with an ozone entrance through which the ozone enters the reaction field to contact the tail gas. The ozone entrance is provided in at least one of the following directions: a direction opposite to the flow direction of the tail gas, a direction perpendicular to the flow direction of the tail gas, a direction tangent to the flow direction of the tail gas, a direction inserted in the flow direction of the tail gas, and multiple directions in order to overcome gravity. A direction opposite to the flow direction of the tail gas means entering in the opposite direction, thereby increasing the reaction time and reducing the volume. A direction perpendicular to the flow direction of the tail gas means using the venturi effect. A direction tangent to the flow direction of the tail gas facilitates mixing. A direction inserted in the flow direction of the tail gas overcomes vortices. In addition, providing the ozone entrance in multiple directions overcomes gravity.

In an embodiment of the present invention, the ozone stream is provided by an ozone storage unit and/or an ozone generator.

In an embodiment of the present invention, the ozone generator includes one or a combination of generators selected from an extended-surface discharge ozone generator, a power frequency arc ozone generator, a high-frequency induction ozone generator, a low-pressure ozone generator, an ultraviolet ozone generator, an electrolyte ozone generator, a chemical agent ozone generator, and a ray irradiation particle generator.

In an embodiment of the present invention, the ozone stream is provided by the following method: under the effect of an electric field and an oxidation catalytic bond cracking selective catalyst layer, generating ozone from an oxygen-containing gas, wherein the oxidation catalytic bond cracking selective catalyst layer is loaded on an electrode forming the electric field.

In an embodiment of the present invention, the electrode includes a high-voltage electrode or an electrode provided with a barrier dielectric layer, when the electrode includes a high-voltage electrode, the oxidation catalytic bond cracking selective catalyst layer is loaded on a surface of the high-voltage electrode, and when the electrode includes a high-voltage electrode having a barrier dielectric layer, the oxidation catalytic bond cracking selective catalyst layer is loaded on a surface of the barrier dielectric layer.

In an embodiment of the present invention, when the electrode includes a high-voltage electrode, the oxidation catalytic bond cracking selective catalyst layer has a thickness of 1-3 mm, such as 1-1.5 mm or 1.5-3 mm. The oxidation catalytic bond cracking selective catalyst layer also serves as a barrier medium. When the electrode includes a high-voltage electrode having a barrier dielectric layer, the load capability of the oxidation catalytic bond cracking selective catalyst layer is 1-12 wt%, e.g., 1-5 wt% or 5-12 wt% of the barrier dielectric layer.

In an embodiment of the present invention, the oxidation catalytic bond cracking selective catalyst layer includes the following components in percentages by weight:
5-15%, e.g., 5-8%, 8-10%, 10-12%, 12-14% or 14-15% of an active component; and
85-95%, e.g., 85-86%, 86-88%, 88-90%, 90-92%, or 92-95% of a coating layer,
wherein, the active component is at least one material selected from compounds of a metal M and a metallic element M, and the metallic element M is at least one element selected from the group consisting of an alkaline earth metal element, a transition metal element, a fourth main group metal element, a noble metal element and a lanthanoid rare earth element;
the coating layer is at least one material selected from the group consisting of aluminum oxide, cerium oxide, zirconium oxide, manganese oxide, metal composite oxide, a porous material, and a layered material, and the metal composite oxide includes a composite oxide of one or more metals selected from aluminum, cerium, zirconium, and manganese.

In an embodiment of the present invention, the alkaline earth metal element is at least one element selected from the group consisting of magnesium, strontium, and calcium.

In an embodiment of the present invention, the transition metal element is at least one element selected from the group consisting of titanium, manganese, zinc, copper, iron, nickel, cobalt, yttrium, and zirconium.

In an embodiment of the present invention, the fourth main group metal element is tin.

In an embodiment of the present invention, the noble metal element is at least one element selected from the group consisting of platinum, rhodium, palladium, gold, silver and iridium.

In an embodiment of the present invention, the lanthanoid rare earth element is at least one element selected from the group consisting of lanthanum, cerium, praseodymium and samarium. In an embodiment of the present invention, the compound of the metallic element M is at least one material selected from the group consisting of oxides, sulfides, sulfates, phosphates, carbonates, and perovskites.

In an embodiment of the present invention, the porous material is at least one material selected from the group consisting of a molecular sieve, diatomaceous earth, zeolite, and a carbon nanotube. The porous material has the porosity of more than 60%, such as 60-80%, a specific surface area of 300-500 m2/g, and an average pore size of 10-100 nm.

In an embodiment of the present invention, the layered material is at least one material selected from the group consisting of graphene and graphite.

In an embodiment of the present invention, the electrode is loaded with an oxidation catalytic bond cracking selective catalyst layer through an impregnation and/or spraying method.

In an embodiment of the present invention, the following steps are included:
1) loading, according to the ratio of components of the catalyst, a slurry of raw materials of the coating layer on a surface of the high-voltage electrode or a surface of the barrier dielectric layer, followed by drying and calcination to obtain the high-voltage electrode or the barrier dielectric layer loaded with the coating layer; and
2) loading, according to the ratio of compositions of the catalyst, a raw solution or slurry containing the metallic element M on the coating layer obtained in step 1), followed by drying and calcination, when the coating layer is loaded on the surface of the barrier dielectric layer, after the calcination, providing the high-voltage electrode on another surface of the barrier dielectric layer opposite to the surface loaded with the coating layer, to obtain the ozone generator electrode; or according to the ratio of compositions of the catalyst, loading a raw solution or slurry containing the metallic element M on the coating layer obtained in step 1), followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer, to obtain the ozone generator electrode,
wherein control over the form of active components in the electrode catalyst is realized by adjusting a calcination temperature and ambient conditions and through the post-treatment.

In an embodiment of the present invention, the following steps are included:
1) loading, according to the ratio of components of the catalyst, a raw solution or slurry containing the metallic element M on raw materials of the coating layer, followed by drying and calcination to obtain the coating layer material loaded with the active components; and
2) preparing, according to the ratio of components of the catalyst, the coating layer material loaded with the active components obtained in step 1) into a slurry, loading the slurry on the surface of the high-voltage electrode or a surface of the barrier dielectric layer, followed by drying and calcination, when the coating layer is loaded on the surface of the barrier dielectric layer, after the calcination, providing the high-voltage electrode on another surface of the barrier dielectric layer opposite to the surface loaded with the coating layer to obtain the ozone generator electrode; or according to the ratio of components of the catalyst, preparing the coating layer material loaded with the active components obtained in step 1) into a slurry, loading the slurry on the surface of the high-voltage electrode or the surface of the barrier dielectric layer, followed by drying, calcination and post-treatment, when the coating layer is loaded on the surface of the barrier dielectric layer, after the post-treatment, providing the high-voltage electrode on another surface of the barrier dielectric layer opposite to the surface loaded with the coating layer to obtain the ozone generator electrode,
wherein control over the form of active components in the electrode catalyst is realized by adjusting a calcination temperature and ambient conditions, and through the post-treatment.

The above-described loading mode may be impregnation, spraying, painting, and the like, as long as the loading can be realized.

When the active component includes at least one of sulfates, phosphates, and carbonates of a metallic element M, a solution or a slurry containing at least one of sulfates, phosphates, and carbonates of the metallic element M is loaded on raw materials of the coating layer, followed by drying and calcination, with a calcination temperature of no more than the decomposition temperature of the active component, for example to obtain sulfates of the metallic element M. The calcination temperature cannot exceed the decomposition temperature of sulfates. (The decomposition temperature is usually above 600°C).

Control over the form of active components in the electrode catalyst is realized by adjusting the calcination temperature and ambient conditions and through the post-treatment. For example, when the active component includes the metal M, after the calcination, reduction (post treatment) can be carried out with a reducing gas, and the calcination temperature may be 200-550 °C. When the active component includes a sulfide of the metallic element M, after the calcination, reaction (post treatment) can be carried out with hydrogen sulfide, and the calcination temperature may be 200-550 °C.

An embodiment of the present invention includes controlling the amount of ozone in the ozone stream so as to effectively oxidize gas components to be treated in tail gas.

In an embodiment of the present invention, the amount of ozone in the ozone stream is controlled to achieve the following removal efficiency:
removal efficiency of nitrogen oxides: 60-99.97%;
removal efficiency of CO: 1-50%; and
removal efficiency of volatile organic compounds: 60-99.97%.

An embodiment of the present invention includes detecting contents of components in the tail gas before the ozone treatment.

In an embodiment of the present invention, the amount of ozone required in the mixing and reaction is controlled according to the contents of components in the tail gas before the ozone treatment.

In an embodiment of the present invention, detecting contents of components in the tail gas before the ozone treatment is at least one method selected from:
detecting the content of volatile organic compounds in the tail gas before the ozone treatment;
detecting the CO content in the tail gas before the ozone treatment; and
detecting the nitrogen oxide content in the tail gas before the ozone treatment.

In an embodiment of the present invention, the amount of ozone required in the mixing and reaction is controlled according to an output value of at least one of the contents of components in the tail gas before the ozone treatment.

In an embodiment of the present invention, the amount of ozone required in the mixing and reaction is controlled according to a preset mathematical model. The preset mathematical model is related to the content of tail gas components before ozone treatment. The amount of ozone required in the mixing and reaction is determined according to the above-mentioned content and the reaction molar ratio of the tail gas components to ozone. When the amount of ozone required in the mixing and reaction is determined, the amount of ozone can be increased to make the ozone excessive.

In an embodiment of the present invention, the amount of ozone required in the mixing and reaction is controlled according to a theoretically estimated value.

In an embodiment of the present invention, the theoretically estimated value is a molar ratio of an ozone introduction amount to a substance to be treated in the tail gas, which is 2-10such as 5-6, 5.5-6.5, 5-7, 4.5-7.5, 4-8, 3.5-8.5, 3-9, 2.5-9.5, 2-10. For example, a controllable ozone introduction amount of a 13-L diesel engine is 300-500 g. and a controllable ozone introduction amount of a 2-L diesel engine is 5-20 g.

An embodiment of the present invention includes detecting contents of components in the tail gas after the ozone treatment.

In an embodiment of the present invention, the amount of ozone required in the mixing and reaction is controlled according to the contents of components in the tail gas after the ozone treatment.

In an embodiment of the present invention, detecting contents of components in the tail gas after the ozone treatment is performed by at least one method selected from:
detecting the ozone content in the tail gas after the ozone treatment;
detecting the content of volatile organic compounds in the tail gas after the ozone treatment;
detecting the CO content in the tail gas after the ozone treatment; and
detecting the nitrogen oxide content in the tail gas after the ozone treatment.

In an embodiment of the present invention, the amount of ozone is controlled according to an output value of at least one of the detected contents of components in the tail gas after the ozone treatment.

In an embodiment of the present invention, the tail gas ozone purification method further includes a step of removing nitric acid in a product resulting from mixing and reacting the ozone stream with the tail gas stream.

In an embodiment of the present invention, a gas carrying nitric acid mist is enabled to flow through the first electrode. When the gas carrying nitric acid mist flows through the first electrode, the first electrode enables the nitric acid mist in the gas to be charged, and the second electrode applies an attractive force to the charged nitric acid mist such that the nitric acid mist moves towards the second electrode until the nitric acid mist is attached to the second electrode.

In an embodiment of the present invention, a method for removing the nitric acid in the product resulting from mixing and reacting the ozone stream with the tail gas stream comprises condensing the product resulting from mixing and reacting the ozone stream with the tail gas stream.

In an embodiment of the present invention, a method for removing the nitric acid in the product resulting from mixing and reacting the ozone stream with the tail gas stream comprises leaching the product resulting from mixing and reacting the ozone stream with the tail gas stream.

In an embodiment of the present invention, the method for removing the nitric acid in the product resulting from mixing and reacting the ozone stream with the tail gas stream further includes supplying leacheate to the product resulting from mixing and reacting the ozone stream with the tail gas stream.

In an embodiment of the present invention, the leacheate is water and/or an alkali.

In an embodiment of the present invention, the method for removing the nitric acid in the product resulting from mixing and reacting the ozone stream with the tail gas stream further includes storing an aqueous nitric acid solution and/or an aqueous nitrate solution removed from the tail gas.

In an embodiment of the present invention, when the aqueous nitric acid solution is stored, an alkaline solution is added to form a nitrate with nitric acid.

In an embodiment of the present invention, the tail gas ozone purification method further includes a step of performing ozone digestion on the tail gas from which the nitric acid is removed. For example, digestion can be performed by means of ultraviolet rays, catalysis, and the like.

In an embodiment of the present invention, the ozone digestion is at least one type of digestion selected from ultraviolet digestion and catalytic digestion.

In an embodiment of the present invention, the tail gas ozone purification method further includes the following steps: removing nitrogen oxides in the tail gas a first time; and mixing and reacting the tail gas stream, from which the nitrogen oxides were removed the first time, with the ozone stream, or mixing and reacting the tail gas stream with the ozone stream before removing the nitrogen oxides in the tail gas the first time.

The method for removing nitrogen oxides in the tail gas a first time may be a prior art method that realizes denitration, such as at least one of a non-catalytic reduction method (e.g. ammonia gas denitration), a selective catalytic reduction method (SCR: ammonia gas plus catalyst denitration), a non-selective catalytic reduction method (SNCR) and an electron beam denitration method. The nitrogen oxide content (NOₓ) in the tail gas after the nitrogen oxides in the tail gas are removed the first time does not meet the latest standards, but mixing and reacting the nitrogen oxides after or before removing the tail gas the first time with the ozone can satisfy the latest standards. In an embodiment of the present invention, the method for removing nitrogen oxides in the tail gas the first time is at least one method selected from a non-catalytic reduction method, a selective catalytic reduction method, a non-selective catalytic reduction method, and an electron beam denitration method.

In an embodiment of the present invention, an electrocoagulation device is provided, including an electrocoagulation flow channel, a first electrode located in the electrocoagulation flow channel, and a second electrode. When the tail gas flows through the first electrode in the electrocoagulation flow channel, water mist containing nitric acid, i.e., a nitric acid solution in the tail gas is charged, the second electrode applies an attractive force to the charged nitric acid solution, and the water mist containing nitric acid moves towards the second electrode until the water mist containing nitric acid is attached to the second electrode, thus removing the nitric acid solution in the tail gas. The electrocoagulation device is also referred to as an electrocoagulation demisting device.

In an embodiment of the present invention, the first electrode of the electrocoagulation device may be in one or a combination of more states of solid, liquid, a gas molecular group, a plasma, an electrically conductive substance in a mixed state, a natural mixed electrically conductive of organism, or an electrically conductive substance formed by manual processing of an object. When the first electrode is a solid, a solid metal such as 304 steel or other solid conductor such as graphite can be used for the first electrode. When the first electrode is a liquid, the first electrode may be an ion-containing electrically conductive liquid.

In an embodiment of the present invention, the shape of the first electrode may be a point shape, a linear shape, a net shape, a perforated plate shape, a plate shape, a needle rod shape, a ball cage shape, a box shape, a tubular shape, a natural shape of a substance, or a processed shape of a substance. When the first electrode has a plate shape, a ball cage shape, a box shape, or a tubular shape, the first electrode may have a non-porous structure, or it may have a porous structure. When the first electrode has a porous structure, the first electrode can be provided with one or more front through holes. In an embodiment of the present invention, the front through hole may have a polygonal shape, a circular shape, an oval shape, a square shape, a rectangular shape, a trapezoidal shape, or a diamond shape. In an embodiment of the present invention, the front through hole may have a diameter of 10-100 mm, 10-20 mm, 20-30 mm, 30-40 mm, 40-50 mm, 50-60 mm, 60-70 mm, 70-80 mm, 80-90 mm, or 90-100 mm. In other embodiments, the first electrode may also have other shapes.

In an embodiment of the present invention, the shape of the second electrode of the electrocoagulation device may be a multilayered net shape, a net shape, a perforated plate shape, a tubular shape, a barrel shape, a ball cage shape, a box shape, a plate shape, a particle-stacked layer shape, a bent plate shape, or a panel shape. When the second electrode has a plate shape, a ball cage shape, a box shape, or a tubular shape, the second electrode may also have a non-porous structure or a porous structure. When the second electrode has a porous structure, the second electrode can be provided with one or more rear through holes. In an embodiment of the present invention, the rear through hole may have a polygonal shape, a circular shape, an oval shape, a square shape, a rectangular shape, a trapezoidal shape, or a diamond shape. The rear through hole may have a diameter of 10-100 mm, 10-20 mm, 20-30 mm, 30-40 mm, 40-50 mm, 50-60 mm, 60-70 mm, 70-80 mm, 80-90 mm, or 90-100 mm.

In an embodiment of the present invention, the second electrode of the electrocoagulation device is made of an electrically conductive substance. In an embodiment of the present invention, the second electrode has an electrically conductive substance on a surface thereof.

In an embodiment of the present invention, an electrocoagulation electric field is provided between the first electrode and the second electrode of the electrocoagulation device. The electrocoagulation electric field may be one or a combination of electric fields selected from a point-plane electric field, a line-plane electric field, a net-plane electric field, a point-barrel electric field, a line-barrel electric field, and a net-barrel electric field. For example, the first electrode may have a needle shape or a linear shape, the second electrode may have a planar shape, and the first electrode may be perpendicular or parallel to the second electrode so as to form a line-plane electric field. Alternatively, the first electrode may have a net shape, the second electrode may have a planar shape, and the first electrode may be parallel to the second electrode so as to form a net-plane electric field. As another alternative, the first electrode may have a point shape and be held in place by a metal wire or a metal needle, the second electrode may have a barrel shape, and the first electrode may be located at a geometric center of symmetry of the second electrode so as to form a point-barrel electric field. As still another alternative, the first electrode may have a linear shape and be held in place by a metal wire or a metal needle, the second electrode may have a barrel shape, and the first electrode may be located at a geometric axis of symmetry of the second electrode so as to form a line-barrel electric field. As a further alternative, the first electrode may have a net shape and be held in place by a metal wire or a metal needle, the second electrode may have a barrel shape, and the first electrode may be located at a geometric center of symmetry of the second electrode so as to form a net-barrel electric field. When the second electrode has a planar shape, it specifically may have a flat surface shape, a curved surface shape, or a spherical surface shape. When the first electrode has a linear shape, it specifically may have a straight line shape, a curved shape, or a circular shape. The first electrode may further have an arcuate shape. When the first electrode has a net shape, it specifically may have a flat surface shape, a spherical surface shape, or other geometric surface shapes. It may also have a rectangular shape or an irregular shape. The first electrode may also have a point shape, it which case it may be a real point with a very small diameter, or it may be a small ball or a net-shaped ball. When the second electrode has a barrel shape, the second electrode may also be further evolved into various box shapes. The first electrode can also be changed accordingly to form an electrode and a layer of electrocoagulation electric field.

In an embodiment of the present invention, the first electrode has a linear shape, and the second electrode has a planar shape. In an embodiment of the present invention, the first electrode is perpendicular to the second electrode. In an embodiment of the present invention, the first electrode is parallel to the second electrode. In an embodiment of the present invention, the first electrode and the second electrode both have a planar shape, and the first electrode is parallel to the second electrode. In an embodiment of the present invention, the first electrode uses a wire mesh. In an embodiment of the present invention, the first electrode has a flat surface shape or a spherical surface shape. In an embodiment of the present invention, the second electrode has a curved surface shape or a spherical surface shape. In an embodiment of the present invention, the first electrode has a point shape, a linear shape, or a net shape, the second electrode has a barrel shape, the first electrode is located inside the second electrode, and the first electrode is located on a central axis of symmetry of the second electrode.

In an embodiment of the present invention, the first electrode of the electrocoagulation device is electrically connected with one electrode of a power supply, and the second electrode is electrically connected with the other electrode of the power supply. In an embodiment of the present invention, the first electrode is specifically electrically connected with a cathode of the power supply, and the second electrode is specifically electrically connected with an anode of the power supply.

In some embodiments of the present invention, the first electrode of the electrocoagulation device may have a positive potential or a negative potential. When the first electrode has a positive potential, the second electrode has a negative potential. When the first electrode has a negative potential, the second electrode has a positive potential. The first electrode and the second electrode are both electrically connected with a power supply. Specifically, the first electrode and the second electrode can be electrically connected with positive and negative poles, respectively, of the power supply. The voltage of this power supply is referred to as a power-on drive voltage. Selection of the magnitude of the power-on drive voltage is base on the environmental temperature, the temperature of a medium, and the like. For example, a range of the power-on drive voltage of the power supply may be 5-50 KV, 10-50 KV, 5-10 KV, 10-20 KV, 20-30 KV, 30-40 KV, or 40-50 KV, from bioelectricity to electricity for space haze management. The power supply may be a direct-current power supply or an alternating-current power supply, and a waveform of the power-on drive voltage is a direct-current waveform, a sine waveform, or a modulated waveform. A direct-current power supply is basically used for adsorption, and a sine wave is used for movement. For example, when the power-on drive voltage of between the first electrode and the second electrode is a sine wave, the electrocoagulation electric field generated will drive the charged particles, e.g., mist drops in the electrocoagulation electric field to move toward the second electrode. An oblique wave is used for pulling. The waveform needs to be modulated according to a pulling force, such as at edges of two ends of an asymmetric electrocoagulation electric field. Tension generated by a medium therein has obvious directionality so as to drive the medium in the electrocoagulation electric field to move in this direction. When the power supply is an alternating-current power supply, the range of a variable frequency pulse thereof may be 0.1 Hz-5 GHz, 0.1 Hz-1 Hz, 0.5 Hz-10 Hz, 5 Hz-100 Hz, 50 Hz-1 KHz, 1 KHz-100 KHz, 50 KHz-1 MHz, 1 MHz -100 MHz, 50 MHz-1 GHz, 500 MHz-2 GHz, or 1 GHz-5 GHz, which is suitable for adsorption of living organisms to pollutants. The first electrode may serve as a lead, and when contacting the nitric acid-containing water mist, it directly introduces positive and negative electrodes into the nitric acid-containing water mist, in which case the nitric acid-containing water mist itself can serve as an electrode. The first electrode can transfer electrons to the nitric acid-containing water mist or electrode by the method of energy fluctuation, so that the first electrode can be kept away from the nitric acid-containing water mist. During the movement of the nitric acid-containing water mist from the first electrode to the second electrode, electrons will be repeatedly obtained and lost. At the same time, a large number of electrons are transferred among a plurality of nitric acid-containing water mists located between the first electrode and the second electrode so that more mist drops are charged and finally reach the second electrode, thereby forming a current, which is also referred to as a power-on drive current. The magnitude of the power-on drive current is related to the temperature of the environment, the medium temperature, the amount of electrons, the mass of the adsorbed material, and the escape amount. For example, as the number of electrons increases, the number of movable particles such as mist drops increases, and the current generated by the moving charged particles is increased thereby. The more charged substances such as mist drops that are adsorbed per unit time, the greater the current is. The escaping mist drops only carry electricity, but they do not reach the second electrode. Namely, no effective electrical neutralization occurs. Thus, under the same conditions, the more escaping mist drops there are, the smaller the current is. Under the same conditions, the higher the temperature of the environment is, the faster the gas particles and mist drops are and the higher their own kinetic energy is, so the greater is the probability of their collision with the first electrode and the second electrode, and the less likely it is that they are adsorbed by the second electrode so as to escape. However, as they escape after electrical neutralization and possibly after repeated electrical neutralization, the electron conduction speed is accordingly increased, and the current is also increased accordingly. At the same time, the higher the temperature of the environment is, the higher is the momentum of gas molecules, mist drops, etc, and the less likely they are to be adsorbed by the second electrode. Even if they are adsorbed by the second electrode, the probability of their escaping from the second electrode again, namely, the probability of their escaping after electrical neutralization is also larger. Therefore, when the distance between the first electrode and the second electrode is not changed, it is necessary to increase the power-on drive voltage. The limit on the power-on drive voltage is the voltage which achieves the effect of air breakdown. In addition, the influence of the medium temperature is basically equivalent to the influence of the temperature of the environment. The is lower the temperature of the medium, the smaller is the energy required to excite the medium such as the mist drops to be charged, and the smaller is the kinetic energy of the medium. Under the action of the same electrocoagulation electric field force, the medium is more likely to be adsorbed on the second electrode, thereby forming a larger current. The electrocoagulation device has a better adsorption effect on a cold nitric acid-containing water mist. As the concentration of the medium such as mist drops increases, the greater is the probability that a charged medium has an electron transfer with another medium before colliding with the second electrode, the greater is the chance of performing effective electrical neutralization, and the larger the formed current correspondingly will be. Therefore, the higher the concentration of the medium, the greater is the current generated. The relationship between the power-on drive voltage and the medium temperature is basically the same as the relationship between the power-on drive voltage and the temperature of the environment.

In an embodiment of the present invention, the power-on drive voltage of the power supply connected with the first electrode and the second electrode may be lower than a corona inception voltage. The corona inception voltage is the minimum voltage capable of generating electrical discharge between the first electrode and the second electrode and ionizing the gas. The magnitude of the corona inception voltage may be different for different gases, different working environments, and the like. However, for those skilled in the art, the corresponding corona inception voltage is determined for a certain gas and working environment. In one embodiment of the present invention, the power-on drive voltage of the power supply specifically may be 0.1-2 kv/mm. The power-on drive voltage of the power supply is less than the air corona onset voltage. In an embodiment of the present invention, the first electrode and the second electrode both extend along a left-right direction, and a left end of the first electrode is located to the left of a left end of the second electrode.

In an embodiment of the present invention, there are two second electrodes, and the first electrode is located between the two second electrodes.

The distance between the first electrode and the second electrode can be set in accordance with the magnitude of the power-on drive voltage between the two electrodes, the flow velocity of the water mist, the charging ability of the nitric acid-containing water mist, and the like. For example, the distance between the first electrode and the second electrode may be 5-50 mm, 5-10 mm, 10-20 mm, 20-30 mm, 30-40 mm, or 40-50 mm. The greater the distance between the first electrode and the second electrode, the higher is the power-on drive voltage required to form a sufficiently strong electrocoagulation electric field for driving the charged medium to move quickly toward the second electrode so as to avoid medium escape. Under the same conditions, the larger the distance between the first electrode and the second electrode is, along the airflow direction, the faster the flow velocity of the substance closer to the central position is; the slower the flow velocity of the substance closer to the second electrode is. In a direction perpendicular to the direction of airflow, the charged medium particles, such as mist particles, are accelerated by the electrocoagulation electric field for a longer time without collision as the distance between the first electrode and the second electrode is increased. Under the same conditions, if the power-on drive voltage is unchanged, as the distance is increased, the strength of the electrocoagulation electric field is continuously reduced, and the medium in the electrocoagulation electric field has a weaker charging ability.

The first electrode and the second electrode constitute an adsorption unit. There may be one or a plurality of adsorption units. In one embodiment, there is one adsorption unit. In another embodiment, there is a plurality of adsorption units so as to adsorb more nitric acid solution using the plurality of adsorption units, thereby improving the effect of collecting the nitric acid solution. When there is a plurality of adsorption units, the distribution of all of the adsorption units can be flexibly adjusted as required. All the adsorption units may be the same or different from each other. For example, all the adsorption units can be distributed along one or more of a left-right direction, a front-back direction, an oblique direction, or a spiral direction so as to meet requirements of different air volumes. All the adsorption units may be distributed in a rectangular array, and may also be distributed in a pyramid shape. A first electrode and a second electrode of various shapes above can be combined freely to form the adsorption unit. For example, a linear first electrode may be inserted into a tubular second electrode to form an adsorption unit which is then combined with a linear first electrode to form a new adsorption unit, in which case the two linear first electrodes can be electrically connected. The new adsorption unit is then distributed in one or more of a left-right direction, an up-down direction, an oblique direction, or a spiral direction. As another example, a linear first electrode may be inserted into a tubular second electrode to form an adsorption unit which is distributed in one or more of a left-right direction, an up-down direction, an oblique direction, or a spiral direction to form a new adsorption unit. This new adsorption unit is then combined with the first electrode of various shapes described above so as to form a new adsorption unit. The distance between the first electrode and the second electrode in the adsorption unit can be arbitrarily adjusted so as to meet requirements of different working voltages and adsorption objects. Different adsorption units can be combined with each other. Different adsorption units can use a single power supply and may also use different power supplies. When different power supplies are used, the respective power supplies may have the same or different power-on drive voltages. In addition, there may a plurality of the present electrocoagulation device, and all the electrocoagulation devices may be distributed in one or more of a left-right direction, an up-down direction, a spiral direction, and an oblique direction.

In an embodiment of the present invention, the electrocoagulation device further includes an electrocoagulation housing. The electrocoagulation housing includes an electrocoagulation entrance, an electrocoagulation exit, and the electrocoagulation flow channel. Two ends of the electrocoagulation flow channel respectively communicate with the electrocoagulation entrance and the electrocoagulation exit. In an embodiment of the present invention, the electrocoagulation entrance has a circular shape, and the electrocoagulation entrance has a diameter of 300 mm-1000 mm or a diameter of 500 mm. In an embodiment of the present invention, the electrocoagulation exit has a circular shape, and the electrocoagulation exit has a diameter of 300 mm-1000 mm or a diameter of 500 mm. In an embodiment of the present invention, the electrocoagulation housing includes a first housing portion, a second housing portion, and a third housing portion distributed in sequence in a direction from the electrocoagulation entrance to the electrocoagulation exit. The electrocoagulation entrance is located at one end of the first housing portion, and the electrocoagulation exit is located at one end of the third housing portion. In an embodiment of the present invention, the size of an outline of the first housing portion gradually increases in the direction from the electrocoagulation entrance to the electrocoagulation exit. In an embodiment of the present invention, the first housing portion has a straight tube shape. In an embodiment of the present invention, the second housing portion has a straight tube shape, and the first electrode and the second electrode are mounted in the second housing portion. In an embodiment of the present invention, the size of the outline of the third housing portion gradually decreases in the direction from the electrocoagulation entrance to the electrocoagulation exit. In an embodiment of the present invention, cross sections of the first housing portion, the second housing portion, and the third housing portions are all rectangular. In an embodiment of the present invention, the electrocoagulation housing is made of stainless steel, an aluminum alloy, an iron alloy, cloth, a sponge, a molecular sieve, activated carbon, foamed iron, or foamed silicon carbide. In an embodiment of the present invention, the first electrode is connected to the electrocoagulation housing through an electrocoagulation insulating part. In an embodiment of the present invention, the electrocoagulation insulating part is made of insulating mica. In an embodiment of the present invention, the electrocoagulation insulating part has a columnar shape or a tower-like shape. In an embodiment of the present invention, the first electrode is provided with a front connecting portion having a cylindrical shape, and the front connecting portion is fixedly connected with the electrocoagulation insulating part. In an embodiment of the present invention, the second electrode is provided with a rear connecting portion having a cylindrical shape, and the rear connecting portion is fixedly connected with the electrocoagulation insulating part.

In an embodiment of the present invention, the first electrode is located in the electrocoagulation flow channel. In an embodiment of the present invention, the ratio of the cross-sectional area of the first electrode to the cross-sectional area of the electrocoagulation flow channel is 99%-10%, 90-10%, 80-20%, 70-30%, 60-40%, or 50%. The cross-sectional area of the first electrode refers to the sum of the areas of entity parts of the first electrode along a cross section.

In the process of collecting the nitric acid-containing water mist, the nitric acid-containing water mist enters the electrocoagulation housing through the electrocoagulation entrance and moves towards the electrocoagulation exit. In the process of moving towards the electrocoagulation exit, the nitric acid-containing water mist passes through the first electrode and is charged. The second electrode adsorbs the charged nitric acid-containing water mist so as to collect the nitric acid-containing water mist on the second electrode. In the present invention, the electrocoagulation housing guides the tail gas and the nitric acid-containing water mist to flow through the first electrode to enable the nitric acid-containing water mist to be charged using the first electrode, and the nitric acid-containing water mist is collected using the second electrode, thus effectively reducing the nitric acid-containing water mist flowing out from the electrocoagulation exit. In some embodiments of the present invention, the electrocoagulation housing can be made of a metal, a nonmetal, a conductor, a nonconductor, water, various electrically conductive liquids, various porous materials, various foam materials, and the like. When the electrocoagulation housing is made of metal, specific examples of the metal are stainless steel, an aluminum alloy, and the like. When the electrocoagulation housing is made of a nonmetal, specific examples of the material of the electrocoagulation housing are cloth, a sponge, and the like. When the material forming the electrocoagulation housing is a conductor, specific examples of the material are iron alloys or the like. When the electrocoagulation housing is a made of a nonconductor, a water layer is formed on a surface thereof, and the water becomes an electrode, such as a sand layer after absorbing water. When the electrocoagulation housing is made of water and various electrically conductive liquids, the electrocoagulation housing is stationary or flowing. When the material forming the electrocoagulation housing is various porous materials, specific examples of the material are a molecular sieve and activated carbon. When the material forming the electrocoagulation housing is various foam materials, specific examples of the material are foamed iron, foamed silicon carbide, and the like. In an embodiment, the first electrode is fixedly connected to the electrocoagulation housing through an electrocoagulation insulating part, and the material forming the electrocoagulation insulating part is insulating mica. In an embodiment, the second electrode is directly electrically connected with the electrocoagulation housing. This manner of connection can allow the electrocoagulation housing to have the same potential as the second electrode. Thus, the electrocoagulation housing can also adsorb the charged nitric acid-containing water mist, and the electrocoagulation housing also constitutes a kind of second electrode. The above-described electrocoagulation flow channel in which the first electrode is mounted is provided in the electrocoagulation housing.

When the nitric acid-containing water mist is attached to the second electrode, condensation will be formed. In some embodiments of the present invention, the second electrode can extend in an up-down direction. In this way, when the condensation accumulated on the second electrode reaches a certain weight, the condensation will flow downward along the second electrode under the effect of gravity and finally gather in a set position or device, thus realizing recovery of the nitric acid solution attached to the second electrode. The present electrocoagulation device can be used for refrigeration and demisting. In addition, the substance attached to the second electrode may also be collected by externally applying an electrocoagulation electric field. The direction of collecting substance on the second electrode may be the same as or different from the direction of the airflow. In specific implementation, the gravity effect is fully utilized to enable water drops or a water layer on the second electrode to flow into the collecting tank as soon as possible. At the same time, the speed of the water flow on the second electrode is accelerated using the direction and force of the airflow as much as possible. Therefore, the above objects can be achieved as much as possible according to various installation conditions, convenience, economy, feasibility and the like of insulation, regardless of a specific direction.

The existing electrostatic field charging theory is that corona discharge is utilized to ionize oxygen, a large amount of negative oxygen ions are generated, the negative oxygen ions contact dust, the dust is charged, and the charged dust is adsorbed by an electrode of opposing polarity. However, with a low specific resistance substance such as nitric acid-containing water mist, the existing electric field adsorption effect is almost gone. Because a low specific resistance substance easily loses power after being electrified, when the moving negative oxygen ions charge the low specific resistance substance, the low specific resistance substance quickly loses electricity, and the negative oxygen ions move only once. Therefore, a low specific resistance substance such as the nitric acid-containing water mist is difficult to charge again after losing electricity, or this charging mode greatly reduces the charging probability of the low specific resistance substance. As a result, the low specific resistance substance is in an uncharged state as a whole, so it is difficult for an electrode of opposing polarity to continuously apply an adsorption force to the low specific resistance substance. In the end, the adsorption efficiency of the existing electric field with respect to a low specific resistance substance such as a nitric acid-containing water mist is extremely low. With the electrocoagulation device and the electrocoagulation method described above, the water mist is not electrified in a charging mode. Instead, electrons are directly transmitted to the nitric acid-containing water mist to charge the water mist, and after a certain mist drop is electrified and loses electricity, new electrons are quickly transmitted to the mist drop that loses electricity by the first electrode through other mist drops such that the mist drop can be quickly electrified after losing electricity. As a result, the electrification probability of the mist drop is greatly increased. If this process is repeated, the whole mist drop is in an electrified state, and the second electrode can continuously apply an attractive force to the mist drop until the mist drop is adsorbed, thereby ensuring a higher collection efficiency of the present electrocoagulation device with respect to the nitric acid-containing water mist. The above-described method for charging the mist drops used in the present invention, without using corona wires, corona electrodes, corona plates or the like, simplifies the integral structure of the present electrocoagulation device and reduces the manufacturing cost of the present electrocoagulation device. Using the above-described electrifying mode in the present invention also enables a large number of electrons on the first electrode to be transferred to the second electrode through the mist drops and form a current. When the concentration of the water mist flowing through the present electrocoagulation device is higher, electrons on the first electrode are more easily transferred to the second electrode through the nitric acid-containing water mist, and more electrons are transferred among the mist drops. As a result, the current formed between the first electrode and the second electrode is bigger, the electrification probability of the mist drops is higher, and the present electrocoagulation device has higher water mist collection efficiency.

In an embodiment of the present invention, an electrocoagulation demisting method is provided, including the following steps:
enabling a gas carrying water mist to flow through a first electrode; and
enabling the water mist in the gas to be charged by the first electrode when the gas carrying water mist flows through the first electrode, and applying an attractive force to the charged water mist by the second electrode such that the water mist moves towards the second electrode until the water mist is attached to the second electrode.

In an embodiment of the present invention, the first electrode directs the electrons into the water mist, and the electrons are transferred among the mist drops located between the first electrode and the second electrode to enable more mist drops to be charged.

In an embodiment of the present invention, electrons are conducted between the first electrode and the second electrode through the water mist and form a current.

In an embodiment of the present invention, the first electrode enables the water mist to be charged by contacting the water mist.

In an embodiment of the present invention, the first electrode enables the water mist to be charged by energy fluctuation.

In an embodiment of the present invention, the water mist attached to the second electrode forms water drops, and the water drops on the second electrode flow into a collecting tank.

In an embodiment of the present invention, the water drops on the second electrode flow into the collecting tank under the effect of gravity.

In an embodiment of the present invention, the gas, when flowing, will blow the water drops so as to flow into the collecting tank.

In an embodiment of the present invention, a gas carrying nitric acid mist is enabled to flow through the first electrode. When the gas carrying nitric acid mist flows through the first electrode, the first electrode enables the nitric acid mist in the gas to be charged, and the second electrode applies an attractive force to the charged nitric acid mist such that the nitric acid mist moves towards the second electrode until the nitric acid mist is attached to the second electrode.

In an embodiment of the present invention, the first electrode directs electrons into the nitric acid mist, and the electrons are transferred among the mist drops located between the first electrode and the second electrode to enable more mist drops to be charged.

In an embodiment of the present invention, electrons are conducted between the first electrode and the second electrode through the nitric acid mist and form a current.

In an embodiment of the present invention, the first electrode enables the nitric acid mist to be charged by contacting the nitric acid mist.

In an embodiment of the present invention, the first electrode enables the nitric acid mist to be charged by energy fluctuation.

In an embodiment of the present invention, the nitric acid mist attached to the second electrode forms water drops, and the water drops on the second electrode flow into a collecting tank.

In an embodiment of the present invention, the water drops on the second electrode flow into the collecting tank under the effect of gravity.

In an embodiment of the present invention, the gas, when flowing, will blow the water drops so as to flow into the collecting tank.

### Embodiment 1

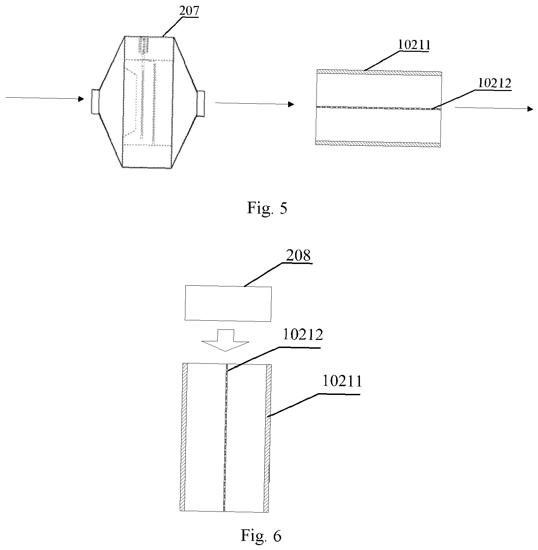

As shown in FIG. 5, a tail gas dedusting system includes a water removing device 207 and a tail gas electric field device. The tail gas electric field device includes a tail gas dedusting electric field anode 10211 and a tail gas dedusting electric field cathode 10212. The tail gas dedusting electric field anode 10211 and the tail gas dedusting electric field cathode 10212 are used to generate a tail gas ionization dedusting electric field. The water removing device 207 is used to remove liquid water before a tail gas electric field device entrance. When the tail gas has a temperature of lower than 100°C, the water removing device 207 removes liquid water in the tail gas. The water removing device 207 is an electrocoagulation device. The arrow in the figure shows the flow direction of tail gas.

A tail gas dedusting method includes the following steps. When the tail gas has a temperature of lower than 100°C, liquid water in the tail gas is removed, and then ionization dedusting is performed, wherein the liquid water in the tail gas is removed by an electrocoagulation demisting method. When the tail gas is tail gas of a gasoline engine during a cold start, water drops, i.e., liquid water in the tail gas is reduced, uneven discharge of the tail gas ionization dedusting electric field and breakdown of the tail gas dedusting electric field cathode and the tail gas dedusting electric field anode are reduced, and the ionization dedusting efficiency is improved to more than 99.9%. In contrast, the ionization dedusting efficiency of a dedusting method in which liquid water in the exhaust gas is not removed is below 70%. Therefore, when the tail gas has a temperature of lower than 100 °C, the liquid water in the tail gas is removed, and then ionization dedusting is carried out to reduce water drops, i.e., liquid water, in the tail gas to reduce uneven discharge of the tail gas ionization dedusting electric field and breakdown of the tail gas dedusting electric field cathode and the tail gas dedusting electric field anode, thus improving the ionization dedusting efficiency.

### Embodiment 2

As shown in FIG. 6, a tail gas dedusting system includes an oxygen supplementing device 208 and a tail gas electric field device. The tail gas electric field device includes a tail gas dedusting electric field anode 10211 and a tail gas dedusting electric field cathode 10212. The tail gas dedusting electric field anode 10211 and the tail gas dedusting electric field cathode 10212 are used to generate a tail gas ionization dedusting electric field. The oxygen supplementing device 208 is used to add an oxygen-containing gas before the tail gas ionization dedusting electric field. The oxygen supplementing device 208 adds oxygen by introducing external air, with the amount of supplemented oxygen depending upon the content of particles in the tail gas. The arrow in the figure shows the flow direction of the oxygen-containing gas added by the oxygen supplementing device.

A tail gas dedusting method includes a step of adding an oxygen-containing gas before a tail gas ionization dedusting electric field to perform ionization dedusting, wherein the oxygen is added by introducing external air, with the amount of supplemented oxygen depending upon the content of particles in the tail gas.

The tail gas dedusting system of the present invention includes the oxygen supplementing device, which can add oxygen by purely increasing oxygen, introducing external air, introducing compressed air, and/or introducing ozone to improve the oxygen content of the tail gas entering the tail gas ionization dedusting electric field. Consequently, when the tail gas flows through the tail gas ionization dedusting electric field between the tail gas dedusting electric field cathode and the tail gas dedusting electric field anode, ionized oxygen is increased such that more dust in the tail gas is charged. In addition, more charged dust is collected under the action of the tail gas dedusting electric field anode, resulting in a higher dedusting efficiency of the tail gas electric field device and facilitating the tail gas ionization dedusting electric field in collecting particulates in the tail gas. Furthermore, the tail gas dedusting system is capable of serving a cooling function and improving the efficiency of a power system. The ozone content of the tail gas ionization dedusting electric field can also be increased through oxygen supplementation, facilitating an improvement in the efficiency of the tail gas ionization dedusting electric field in purification, self-cleaning, denitration, and other types of treatment of organic matter in the tail gas.

### Embodiment 3

An engine tail gas treatment system of the present embodiment further includes a tail gas treatment device which is configured to treat an exhaust gas to be emitted into the atmosphere.

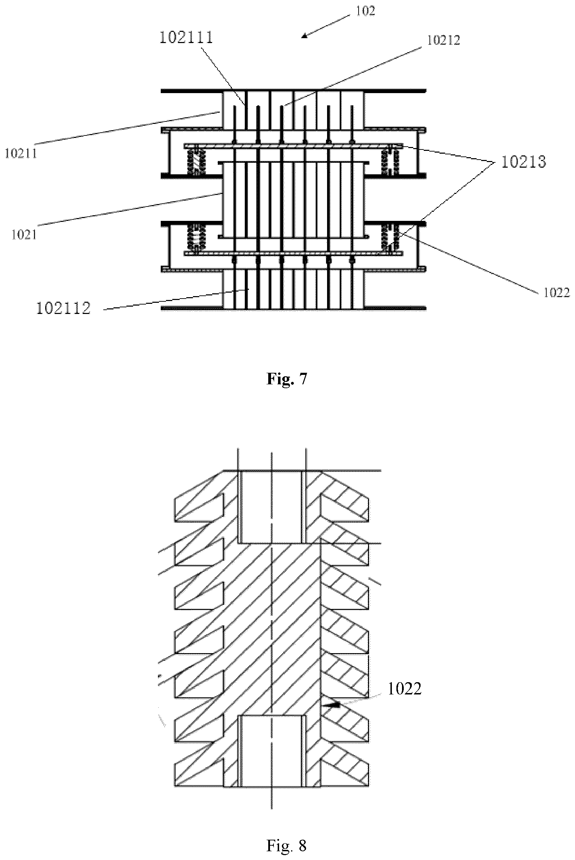

FIG. 7 shows a structural schematic diagram of an embodiment of a tail gas treatment device. As shown in FIG. 7, the tail gas treatment device 102 includes a tail gas electric field device 1021, a tail gas insulation mechanism 1022, a tail gas equalizing device, a tail gas water filtering mechanism, and a tail gas ozone mechanism. The tail gas water filtering mechanism in the present invention is optional. Namely, the tail gas dedusting system provided in the present invention may include the tail gas water filtering mechanism, or the tail gas water filtering mechanism may be omitted.

The tail gas electric field device 1021 includes a tail gas dedusting electric field anode 10211 and a tail gas dedusting electric field cathode 10212 provided inside the tail gas dedusting electric field anode 10211. An asymmetric electrostatic field is formed between the tail gas dedusting electric field anode 10211 and the tail gas dedusting electric field cathode 10212. After a gas containing particulates enters the tail gas electric field device 1021 through an exhaust port of the tail gas equalizing device, as the tail gas dedusting electric field cathode 10212 discharges electricity and ionizes the gas, the particulates are able to obtain a negative charge and move towards the tail gas dedusting electric field anode 10211 and be deposited on the tail gas dedusting electric field cathode 10212.

Specifically, the interior of the tail gas dedusting electric field cathode 10212 has a honeycomb shape and is composed of an anode tube bundle group of honeycomb-shaped hollow anode tube bundles. An end opening of each anode tube bundle has a hexagonal shape.

The tail gas dedusting electric field cathode 10212 includes a plurality of electrode bars which penetrate through each anode tube bundle of the anode tube bundle group in one-to-one correspondence. Each electrode bar has a needle shape, a polygonal shape, a burr shape, a threaded rod shape, or a columnar shape.

In the present embodiment, an intake end of the tail gas dedusting electric field cathode 10212 is lower than an intake end of the tail gas dedusting electric field anode 10211, and an outlet end of the tail gas dedusting electric field cathode 10212 is flush with an outlet end of the tail gas dedusting electric field anode 10211 such that an acceleration electric field is formed inside the tail gas electric field device 1021.

The tail gas insulation mechanism 1022 suspended outside of the gas flow path includes an insulation portion and a heat-protection portion. The insulation portion is made of a ceramic material or a glass material. The insulation portion is an umbrella-shaped string ceramic column, with the interior and the exterior of the umbrella being glazed. FIG. 8 shows a structural schematic diagram of an embodiment of an umbrella-shaped tail gas insulation mechanism.

As shown in FIG. 7, in an embodiment of the present invention, the tail gas dedusting electric field cathode 10212 is mounted on a tail gas cathode supporting plate 10213, and the tail gas cathode supporting plate 10213 is connected to the tail gas dedusting electric field anode 10211 through the tail gas insulation mechanism 1022. In an embodiment of the present invention, the tail gas dedusting electric field anode 10211 includes a third anode portion 102112 and a fourth anode portion 102111. The third anode portion 102112 is close to an entrance of a tail gas dedusting device, and the fourth anode portion 102111 is close to an exit of the tail gas dedusting device. The tail gas cathode supporting plate 10213 and the tail gas insulation mechanism 1022 are between the third anode portion 102112 and the fourth anode portion 102111. The tail gas insulation mechanism 1022, which is mounted in the middle of the tail gas ionization electric field or in the middle of the tail gas dedusting electric field cathode 10212, can play a good role in supporting the tail gas dedusting electric field cathode 10212 and can function to secure the tail gas dedusting electric field cathode 10212 relative to the tail gas dedusting electric field anode 10211 such that a set distance is maintained between the tail gas dedusting electric field cathode 10212 and the tail gas dedusting electric field anode 10211.

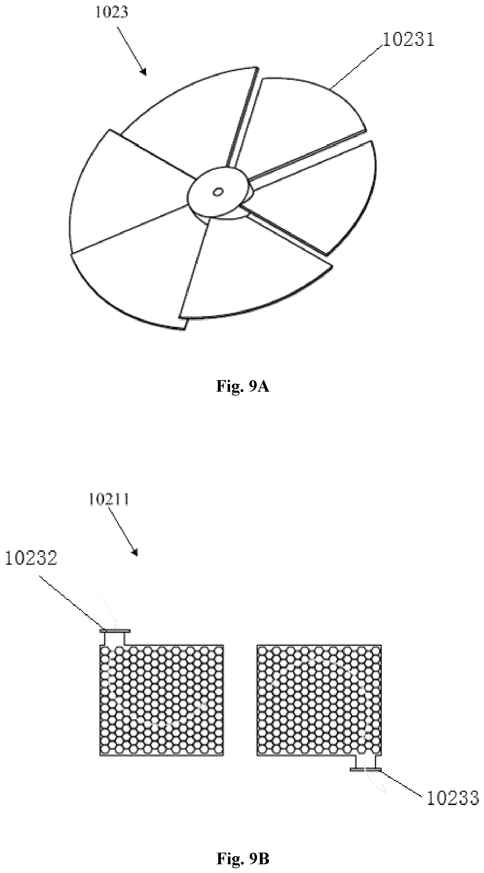

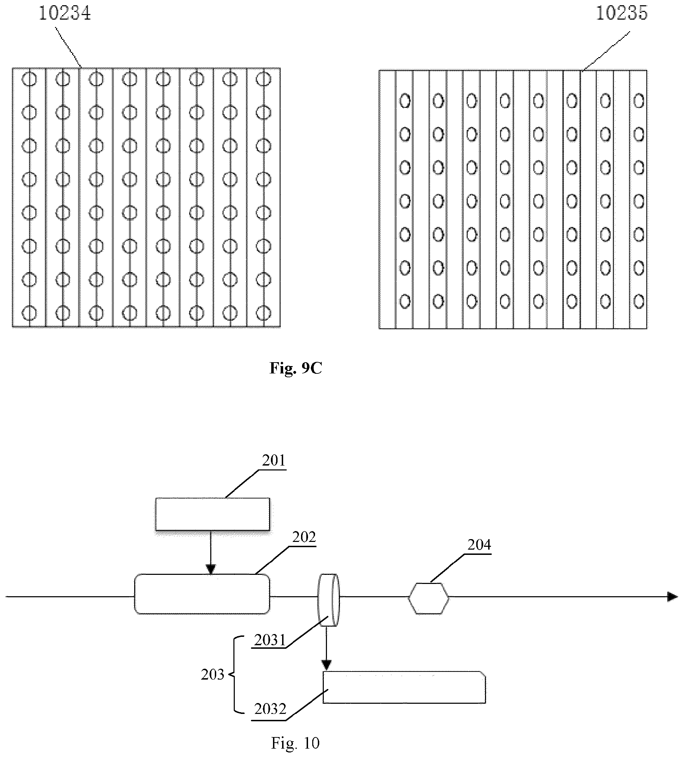

The tail gas equalizing device 1023 is provided at an intake end of the tail gas electric field device 1021. FIG. 9A, FIG. 9B, and FIG. 9C show three implementation structural diagrams of the tail gas equalizing device.

As shown in FIG. 9A, when the tail gas dedusting electric field anode 10211 has a cylindrical outer shape, the tail gas equalizing device 1023 is located between a tail gas dedusting system entrance and a tail gas ionization dedusting electric field formed by the tail gas dedusting electric field anode 10211 and the tail gas dedusting electric field cathode 10212. It is composed of a plurality of equalizing blades 10231 rotating around a center of the tail gas dedusting system entrance. The tail gas equalizing device 1023 can enable varied air inflows of the engine at various rotational speeds to uniformly pass through the electric field generated by the tail gas dedusting electric field anode and at the same time can keep a constant internal temperature and sufficient oxygen for the tail gas dedusting electric field anode.

As shown in FIG. 9B, when the tail gas dedusting electric field anode 10211 has a cubic outer shape, the tail gas equalizing device includes the following:
an intake pipe 10232 provided at one side of the tail gas dedusting electric field anode; and
an outlet pipe 10233 provided at the other side of the dedusting electric field anode, wherein the one side on which the intake pipe 10232 is mounted is opposite to the other side on which the outlet pipe 10233 is mounted.

As shown in FIG. 9C, the tail gas equalizing device may further include a second venturi plate equalizing mechanism 10234 provided at the intake end of the tail gas dedusting electric field anode and a third venturi plate equalizing mechanism 10235 (the third venturi plate equalizing mechanism has a folded shape when viewed from above) provided at the outlet end of the tail gas dedusting electric field anode. The third venturi plate equalizing mechanism is provided with intake holes and the third venturi plate equalizing mechanism is provided with outlet holes. The intake holes and the outlet holes are arranged in a staggered manner. A front surface is used for gas intake, and a side surface is used for gas discharge, thereby forming a cyclone structure.

The tail gas water filtering mechanism provided inside the tail gas electric field device 1021 includes an electrically conductive screen plate as a first electrode. The electrically conductive screen plate is used to conduct electrons to water (a low specific resistance substance) after being powered on. In the present embodiment, a second electrode for adsorbing charged water is the tail gas dedusting electric field anode 10211 of the tail gas electric field device.

The first electrode of the tail gas water filtering mechanism is provided at the gas inlet. The first electrode is an electrically conductive screen plate with a negative potential. In the present embodiment, the second electrode is provided in the intake device and has a planar net shape. The second electrode, which carries a positive potential, is referred to as a collector. In the present embodiment, the second electrode specifically has a flat-surface net shape, and the first electrode is parallel to the second electrode. In the present embodiment, a net-plane electric field is formed between the first electrode and the second electrode. The first electrode is a net-shaped structure made of metal wires and forms a wire mesh. In the present embodiment, the area of the second electrode is greater than the area of the first electrode.

### Embodiment 4

As shown in FIG. 10, a tail gas ozone purification system includes the following:
an ozone source 201 configured to provide an ozone stream that is generated instantly by an ozone generator,
a reaction field 2 configured to mix and react the ozone stream with a tail gas stream,
a denitration device 203 configured to remove nitric acid in a product resulting from mixing and reacting the ozone stream with the exhaust gas stream, wherein the denitration device 203 includes an electrocoagulation device 2031 configured to perform electrocoagulation on the ozone-treated exhaust gas of the engine, and nitric acid-containing water mist is accumulated on a second electrode of the electrocoagulation device 2031, the denitration device 203 further including a denitration liquid collecting unit 2032 configured to store an aqueous nitric acid solution and/or an aqueous nitrate solution removed from the exhaust gas, and when the denitration liquid collecting unit stores the aqueous nitric acid solution, the denitration liquid collecting unit 2032 is provided with an alkaline solution adding unit configured to form a nitrate with nitric acid, and
an ozone digester 204 configured to digest ozone in the exhaust gas which has undergone treatment in the reaction field, wherein the ozone digester can perform ozone digestion by means of ultraviolet rays, catalysis, and the like.

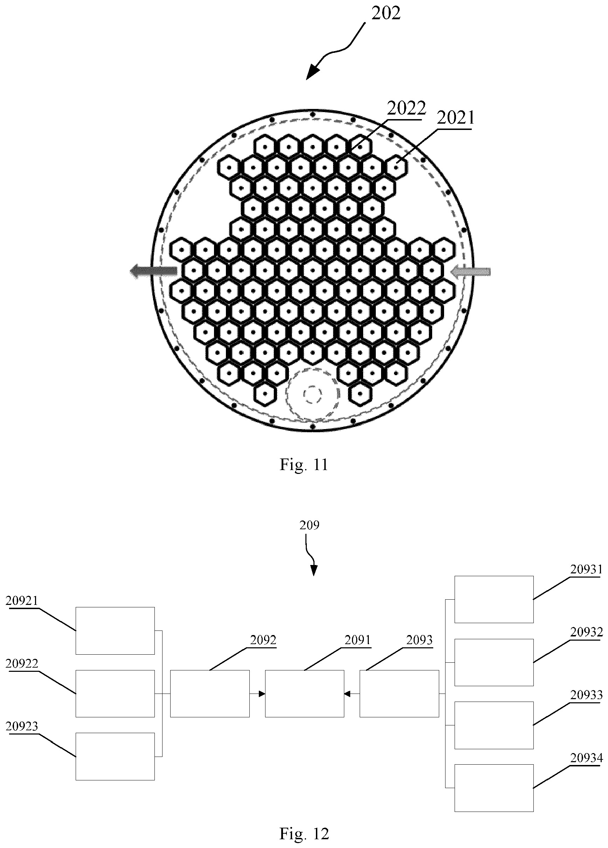

As shown in FIG. 11, the reaction field 202 is a second reactor provided therein with a plurality of honeycomb-shaped cavities 2021 configured to provide spaces for mixing and reacting the tail gas with the ozone. The honeycomb-shaped cavities are provided with gaps 2022 therebetween which are configured to introduce a cold medium and control a reaction temperature of the tail gas with the ozone. In the figure, the arrow on the right side indicates a cold medium inlet, and the arrow on the left side indicates a cold medium outlet.

The electrocoagulation device includes the following:
a first electrode 301 capable of conducting electrons to a nitric acid-containing water mist (a low specific resistance substance), wherein when the electrons are conducted to the nitric acid-containing water mist, the nitric acid-containing water mist is charged; and
a second electrode 302 capable of applying an attractive force to the charged nitric acid-containing water mist.

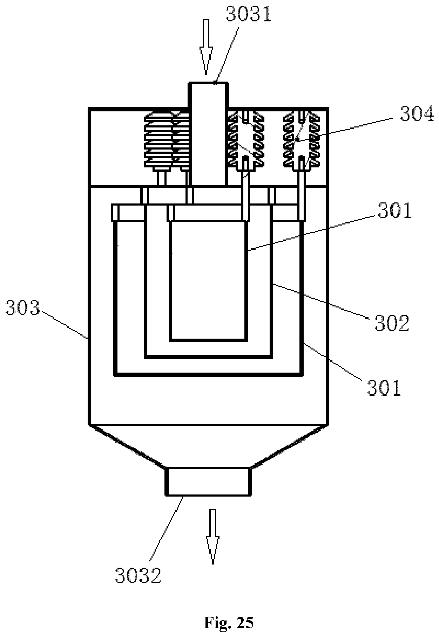

In the present embodiment, there are two first electrodes 301, and the two first electrodes 301 both have a net shape and a ball-cage shape. In the present embodiment, there is one second electrode 302, which has a net shape and a ball-cage shape. The second electrode 302 is located between the two first electrodes 301. As shown in FIG. 25, the electrocoagulation device in the present embodiment further includes a housing 303 having an entrance 3031 and an exit 3032. The first electrodes 301 and the second electrode 302 are all mounted in the housing 303. The first electrodes 301 are fixedly connected to an inner wall of the housing 303 through insulating parts 304, and the second electrode 302 is directly fixedly connected to the housing 303. In the present embodiment, the insulating parts 304 are in the shape of columns, which are also referred to as insulating columns. In the present embodiment, the first electrodes 301 have a negative potential, and the second electrode 302 has a positive potential. In the present embodiment, the housing 303 and the second electrode 302 have the same potential, and the housing 303 also plays a role in adsorbing charged substances.

In the present embodiment, the electrocoagulation device is configured to treat acid mist-containing industrial tail gas. In the present embodiment, the entrance 3031 communicates with a port for discharging industrial tail gas. The working principle of the electrocoagulation device in the present embodiment is as follows. The industrial tail gas flows into the housing 303 through the entrance 3031 and flows out through the exit 3032. In this process, the industrial tail gas will first flow through one of the first electrodes 301. When the acid mist in the industrial tail gas contacts the first electrode 301 or the distance between the industrial tail gas and the first electrode 301 reaches a certain value, the first electrode 301 will transfer electrons to the acid mist, and a part of the acid mist is charged. The second electrode 302 applies an attractive force to the charged acid mist, and the acid mist then moves towards the second electrode 302 and is attached to the second electrode 302. Another part of the acid mist is not attached to the second electrode 302. This part of the acid mist continues to flow in the direction of the exit 3032. When this part of the acid mist contacts the other first electrode 301 or the distance between this part of the acid mist and the other first electrode 301 reaches a certain value, this part of the acid mist is charged, and the housing 303 applies an adsorption force to this part of charged acid mist such that this part of the charged acid mist is attached to the inner wall of the housing 303, thereby greatly reducing the emission of the acid mist in the industrial tail gas. The treatment device in the present embodiment can remove 90% of the acid mist in the industrial tail gas, so the effect of removing the acid mist is quite significant. In the present embodiment, the entrance 3031 and the exit 3032 both have a circular shape. The entrance 3031 may also be referred to as a gas inlet, and the exit 3032 may also be referred to as a gas outlet.

### Embodiment 5

As shown in FIG. 12, a tail gas ozone purification system in Embodiment 4 further includes the ozone amount control device 209 configured to control the amount of ozone so as to effectively oxidize gas components to be treated in the tail gas. The ozone amount control device 209 includes a control unit 2091. The ozone amount control device 209 further includes a pre-ozone-treatment tail gas component detection unit 2092 configured to detect the contents of components in the tail gas before the ozone treatment. The control unit controls the amount of ozone required in the mixing and reaction according to the contents of components in the tail gas before the ozone treatment.

The pre-ozone-treatment tail gas component detection unit 2092 is at least one selected from the following detection units:
a first volatile organic compound detection unit 20921 configured to detect the content of volatile organic compounds in the tail gas before the ozone treatment, such as a volatile organic compound sensor;
a first CO detection unit 20922 configured to detect the CO content in the tail gas before the ozone treatment, such as a CO sensor; and
a first nitrogen oxide detection unit 20923 configured to detect the nitrogen oxide content in the tail gas before the ozone treatment, such as a nitrogen oxide (NOₓ) sensor.

The control unit 2091 controls the amount of ozone required in the mixing and reaction according to an output value of at least one of the pre-ozone-treatment tail gas component detection units 2092.

The control unit is configured to control the amount of ozone required in the mixing and reaction according to a theoretically estimated value. The theoretically estimated value is a molar ratio of an ozone introduction amount to a substance to be treated in the tail gas, which is 2-10.

The ozone amount control device 209 includes a post-ozone-treatment tail gas component detection unit 2093 configured to detect the contents of components in the tail gas after the ozone treatment. The control unit 2091 controls the amount of ozone required in the mixing and reaction according to the contents of components in the tail gas after the ozone treatment.

The post-ozone-treatment tail gas component detection unit 2093 is at least one selected from the following detection units:
a first ozone detection unit 20931 configured to detect the ozone content in the tail gas after the ozone treatment;
a second volatile organic compound detection unit 20932 configured to detect the content of volatile organic compounds in the tail gas after the ozone treatment;
a second CO detection unit 20933 configured to detect the CO content in the tail gas after the ozone treatment; and
a second nitrogen oxide detection unit 20934 configured to detect the nitrogen oxide content in the tail gas after the ozone treatment.

The control unit 2091 controls the amount of ozone according to an output value of at least one of the post-ozone-treatment tail gas component detection units 2093.

### Embodiment 6

An ozone generator electrode is prepared by the following steps:
using an α-alumina panel with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 12% of the mass of the barrier dielectric layer, and wherein the catalyst includes the following components in percentages by weight: 12 wt% of the active component and 88 wt% of the coating layer, and wherein the active component is cerium oxide and zirconium oxide (the ratio of the amount of cerium oxide to zirconium oxide is 1:1.3), and the coating layer is gama alumina; and
pasting a copper foil on the other surface of the barrier dielectric layer coated with the catalyst to prepare an electrode.

A method for coating the catalyst in the above method is as follows:
(1) pouring 200 g of 800-mesh gama alumina powder, 5 g of cerous nitrate, 4 g of zirconium nitrate, 4 g of oxalic acid, 5 g of pseudoboehmite, 1 g of aluminum nitrate, and 0.5 g of EDTA (for decomposition) into an agate mill, then adding 1300 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed;
(3) loading the catalyst slurry into a high pressure spray gun to be uniformly sprayed onto a surface of the dried barrier dielectric layer and drying the sprayed barrier dielectric layer in a vacuum drier in the shade for 2 hours; and
(4) after the drying in the shade, heating the copper foil in a muffle furnace to 500 °C at a heating rate of 5 °C per minute, maintaining the temperature for two hours, and naturally cooling the copper foil to room temperature while keeping the furnace door closed, thus completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h. After the replacement of electrodes, the amount of ozone generation was 160 g/h under the same test conditions. Under the experimental conditions, the power consumption was 830 W.

### Embodiment 7

An ozone generator electrode is prepared by the following steps:
using an α-alumina panel with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 5% of the mass of the barrier dielectric layer, and wherein the catalyst includes the following components in percentages by weight: 15 wt% of the active component and 85 wt% of the coating layer in the total weight of the catalyst, and wherein the active component is MnO and CuO, and the coating layer is gama alumina; and
pasting a copper foil on the other surface of the barrier dielectric layer coated with the catalyst to prepare an electrode.

A method for coating the catalyst in the above method is as follows:
(1) pouring 200 g of 800-mesh gama alumina powder, 4 g of oxalic acid, 5 g of pseudoboehmite, 1 g of aluminum nitrate, and 0.5 g of a surfactant (for decomposition) into an agate mill, then adding 1300 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed, wherein the water absorption capacity (A) of the barrier dielectric layer is measured by measuring the change in mass between before and after the drying;
(3) loading the above-described slurry into a high pressure spray gun to be uniformly sprayed onto a surface of the dried barrier dielectric layer and drying the sprayed barrier dielectric layer in a vacuum drier in the shade for 2 hours;
(4) after the drying in the shade, heating the copper foil in a muffle furnace to 500 °C at a heating rate of 5 °C per minute, maintaining the temperature for two hours, naturally cooling the copper foil to room temperature while keeping the furnace door closed, and weighting.
(5) immersing the above-described barrier dielectric layer loaded with the coating layer in water for 1 minute, then taking out the barrier dielectric layer, blowing off surface floating water, and weighing to calculate the water absorption capacity (B) thereof;
(6) calculating the net water absorption capacity C (C=B-A) of the coating layer, and based on a target loading amount of the active component and the net water absorption capacity C of the coating layer, calculating the concentration of an aqueous solution of the active component, thereby preparing the solution of the active component; (the target load capacity of the active component is 0.1 g of CuO; 0.2 g of MnO);
(7) drying the barrier dielectric layer loaded with the coating layer at 150 for 2 hours, and cooling the barrier dielectric layer to room temperature while keeping the oven door closed, wherein the surface that does not need to be loaded with the active component is protected against water; and
(8) loading a solution of the active component (copper nitrate and manganese nitrate) prepared in step (6) into the coating layer by a dipping method, blowing off surface floating liquid, drying the barrier dielectric layer at 150 for 2 hours, transferring the barrier dielectric layer into a muffle furnace to be roasted, heating the barrier dielectric layer to 550 at a rate of 15 per minute, maintaining the temperature for 3 hours, slightly opening the furnace door, and cooling to room temperature, thus completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h. After the replacement of electrodes, the amount of ozone generation was 168g/h under the same test conditions. Under the experimental conditions, the power consumption was 830 W.

### Embodiment 8

An ozone generator electrode is prepared by the following steps:
using a quartz glass plate with a length of 300 mm, a width of 30 mm, and a thickness of 1.5 mm as a barrier dielectric layer;
coating a catalyst (containing a coating layer and an active component) on a surface of the barrier dielectric layer, wherein after the catalyst is coated, the catalyst is 1% of the mass of the barrier dielectric layer, and wherein the catalyst includes the following components in percentages by weight: 5 wt% of the active component and 95 wt% of the coating layer, and wherein the active components are silver, rhodium, platinum, cobalt and lanthanum (the mass ratio of the substances in the order listed is 1:1:1:2:1.5), and the coating layer is zirconium oxide; and
pasting a copper foil on the other surface of the barrier dielectric layer coated with the catalyst to prepare an electrode.

A method for coating the catalyst in the above method is as follows:
(1) pouring 400 g of zirconium oxide, 1.7 g of silver nitrate, 2.89 g of rhodium nitrate, 3.19 g of platinum nitrate, 4.37 g of cobalt nitrate, 8.66 g of lanthanum nitrate, 15 g of oxalic acid, and 25 g of EDTA (for decomposition) into an agate mill, then adding 1500 g of deionized water, followed by grinding at 200 rpm/min for 10 hours to prepare a slurry;
(2) placing the above-described barrier dielectric layer in an oven to be dried at 150 °C for 2 hours, wherein an oven fan is turned on during drying, then cooling the barrier dielectric layer to room temperature while keeping the oven door closed;
(3) loading the catalyst slurry into a high pressure spray gun to be uniformly sprayed onto a surface of the dried barrier dielectric layer and drying the sprayed barrier dielectric layer in a vacuum drier in the shade for 2 hours; and
(4) after the drying in the shade, heating the barrier dielectric layer in a muffle furnace to 550 °C at a heating rate of 5 °C per minute, maintaining the temperature for two hours, naturally cooling the barrier dielectric layer to room temperature while keeping the furnace door closed; and then performing reduction at 220°C in a hydrogen reducing atmosphere for 1.5 hours, thereby completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h. After the replacement of electrodes, the amount of ozone generation was 140g/h under the same test conditions. Under the experimental conditions, the power consumption was 830 W.

### Embodiment 9

An ozone generator electrode is prepared by the following steps:
coating a catalyst (containing a coating layer and an active component) on one surface of a copper foil (electrode), wherein after the catalyst is coated, the catalyst has a thickness of 1.5 mm, and wherein the catalyst includes the following components in percentages by weight: 8 wt% of the active component and 92 wt% of the coating layer, and wherein the active components are zinc sulfate, calcium sulfate, titanium sulfate, and magnesium sulfate (the mass ratio of the substances in the order listed is 1:2:1:1), and the coating layer is graphene.

A method for coating the catalyst in the above method is as follows:
(1) pouring 100 g of graphene, 1.61 g of zinc sulfate, 3.44 g of calcium sulfate, 2.39 g of titanium sulfate, 1.20 g of magnesium sulfate, 25 g of oxalic acid, and 15 g of EDTA (for decomposition) into an agate mill, then adding 800 g of deionized water, followed by grinding at 200 rpm/min for 10 hours to prepare a slurry;
(2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 350 °C at a heating rate of 5 °C per minute, maintaining the temperature for two hours, and naturally cooling the copper foil to room temperature while keeping the furnace door closed,

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h. After the replacement of electrodes, the amount of ozone generation was 165g/h under the same test conditions. Under the experimental conditions, the power consumption was 830 W.

### Embodiment 10

An ozone generator electrode is prepared by the following steps:
coating a catalyst (containing a coating layer and an active component) on one surface of a copper foil (electrode), wherein after the catalyst is coated, the catalyst has a thickness of 3 mm, and wherein the catalyst includes the following components in percentages by weight: 10 wt% of the active component and 90 wt% of the coating layer, and wherein the active components are praseodymium oxide, samarium oxide and yttrium oxide (the mass ratio of the substances in the order listed is 1:1:1), and the coating layer is cerium oxide and manganese oxide (the mass ratio of the cerium oxide to manganese oxide is 1:1).

A method for coating the catalyst in the above method is as follows:
(1) pouring 62.54 g of cerium oxide, 31.59 g of manganese oxide, 3.27 g of praseodymium nitrate, 3.36 g of samarium nitrate, 3.83 g of yttrium nitrate, 12 g of oxalic acid, and 20 g of EDTA (for decomposition) into an agate mill, then adding 800 g of deionized water, followed by grinding at 200 rpm/min for 10 hours to prepare a slurry;
(2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 500°C at a heating rate of 5 °C per minute, maintaining the temperature for two hours, and naturally cooling the copper foil to room temperature while keeping the furnace door closed,

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h.

After the replacement of electrodes, the amount of ozone generation was 155g/h under the same test conditions. Under the experimental conditions, the power consumption was 830 W.

### Embodiment 11

An ozone generator electrode is prepared by the following steps:
coating a catalyst (containing a coating layer and an active component) on one surface of a copper foil (electrode), wherein after the catalyst is coated, the catalyst has a thickness of 1 mm, and the wherein catalyst includes the following components in percentages by weight: 14 wt% of the active component and 86 wt% of the coating layer, and wherein the active component is strontium sulfide, nickel sulfide, tin sulfide and iron sulfide (the mass ratio of the substances in the listed order is 2:1:1:1), and the coating layer is diatomaceous earth with a porosity of 80%, a specific surface area of 350 m²/g, and a mean pore size of 30 nm.

A method for coating the catalyst in the above method is as follows:
(1) pouring 58 g of diatomaceous earth, 3.66 g of strontium sulfate, 2.63 g of nickel sulfate, 2.18 g of stannous sulfate, 2.78 g of ferrous sulfate, 3 g of oxalic acid, and 5 g of EDTA (for decomposition) into an agate mill, then adding 400 g of deionized water, followed by grinding at 200 rpm/min for 10 hours to prepare a slurry;
(2) loading the catalyst slurry into a high pressure spray gun to be uniformly sprayed onto a surface of the copper foil (electrode), and drying the sprayed copper foil in a vacuum drier in the shade for 2 hours; and
(3) after the drying in the shade, heating the copper foil in a muffle furnace to 500 °C at a heating rate of 5 °C per minute, maintaining the temperature for two hours, naturally cooling the copper foil to room temperature while keeping the furnace door closed; and then introducing CO to perform a sulfuration reaction, thereby completing the coating process.

Four electrodes were prepared by the same method. Four electrodes of an XF-B-3-100 type ozone generator of Henan Dino Environmental Protection Technology Co., Ltd. were all replaced with the electrodes prepared above. A comparison test was carried out under the following test conditions: a pure oxygen gas source, an intake pressure of 0.6 MPa, an intake air volume of 1.5 cubic meters per hour, an alternating voltage, and a sine wave of 5000 V and 20000 Hz. The amount of ozone generated per hour was calculated from the gas outlet volume and the detected mass concentration.

The experimental results were as follows:
The original amount of ozone generation by the XF-B-3-100 type ozone generator was 120 g/h. After the replacement of electrodes, the amount of ozone generation was 155g/h under the same test conditions. Under the experimental conditions, the power consumption was 830 W.

### Embodiment 12

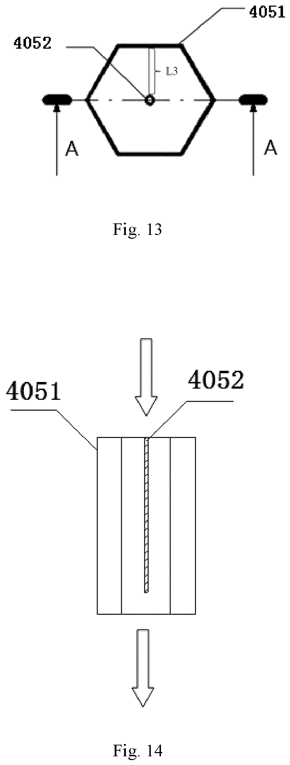

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

As shown in FIG. 13, FIG. 14, and FIG. 15, in the present embodiment, the dedusting electric field anode 4051 is in the shape of a hollow regular hexagonal tube, the dedusting electric field cathode 4052 is in the shape of a rod. The dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 6.67:1, selecting the inter-electrode distance between the dedusting electric field anode 4051 and the dedusting electric field cathode 4052 to be 9.9 mm, selecting the length of the dedusting electric field anode 4051 to be 60 mm, and selecting the length of the dedusting electric field cathode 4052 to be 54 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052. There is an included angle α between an exit end of the dedusting electric field anode 4051 and a near exit end of the dedusting electric field cathode 4052, wherein α=118 °. Under the action of the dedusting electric field anode 4051 and the dedusting electric field cathode 4052, more substances to be treated can be collected, the coupling time of the electric field of ≤3 is realized, and coupling consumption of the electric field to aerosols, water mist, oil mist, and loose smooth particulates can be reduced, thereby saving the electric energy of the electric field by 30-50%.

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

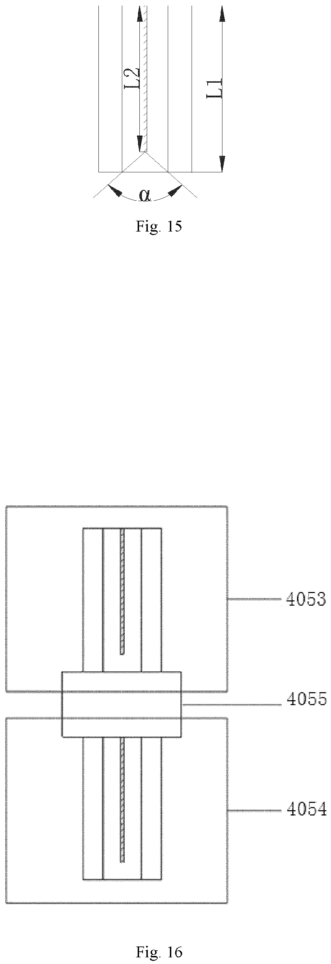

The plurality of electric field stages are connected in series to each other by a connection housing, and the distance between two adjacent electric field stages is greater than 1.4 times the inter-electrode distance. As shown in FIG. 16, there are two electric field stages, i.e., a first-stage electric field and a second-stage electric field which are connected in series by the connection housing.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 13

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 1680:1, selecting the inter-electrode distance between the dedusting electric field anode 4051 and the dedusting electric field cathode 4052 to be 139.9 mm, selecting the length of the dedusting electric field anode 4051 to be 180 mm, and selecting the length of the dedusting electric field cathode 4052 to be 180 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, the exit end of the dedusting electric field anode 4051 is flush with a near exit end of the dedusting electric field cathode 4052. Under the action of the dedusting electric field anode 4051 and the dedusting electric field cathode 4052, more substances to be treated can be collected, the coupling time of the electric field, ≤3, is realized, and coupling consumption of the electric field to aerosols, water mist, oil mist and loose smooth particulates can be reduced, saving the electric energy of the electric field by 20-40%.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 14

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 1.667:1, an inter-electrode distance between the dedusting electric field anode 4051 and the dedusting electric field cathode 4052 to be 2.4 mm, the length of the dedusting electric field anode 4051 to be 30 mm, and the length of the dedusting electric field cathode 4052 to be 30 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. Under the action of the dedusting electric field anode 4051 and the dedusting electric field cathode 4052, more substance to be treated can be collected, the coupling time of the electric field of ≤3 is realized, and coupling consumption of the electric field to aerosols, water mist, oil mist and loose smooth particulates can be reduced, saving the electric energy of the electric field by 10-30%.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 15

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

As shown in FIG. 13, FIG. 14, and FIG. 15, in the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 6.67:1, an inter-electrode distance between the dedusting electric field anode 4051 and the dedusting electric field cathode 4052 is 9.9 mm. The dedusting electric field anode 4051 has a length of 60 mm, and the dedusting electric field cathode 4052 has a length of 54 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052. There is an included angle α between an exit end of the dedusting electric field anode 4051 and a near exit end of the dedusting electric field cathode 4052, wherein α=118 °. Under the action of the dedusting electric field anode 4051 and the dedusting electric field cathode 4052, more substances to be treated can be collected, ensuring a higher dust collecting efficiency of the present electric field generating unit, with a dust collecting efficiency of 99% for typical tail gas particles (PM 0.23 particulate matter). In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

The plurality of electric field stages are connected in series to each other by a connection housing, and the distance between two adjacent electric field stages is greater than 1.4 times the inter-electrode distance. As shown in FIG. 16, there are two electric field stages, i.e., a first-stage electric field 4053 and a second-stage electric field 4054 which are connected in series by the connection housing 4055.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 16

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, and the dedusting electric field cathode 4052 is in the shape of a rod. The dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 1680:1, and the inter-electrode distance between the dedusting electric field anode 4051 and the dedusting electric field cathode 4052 is 139.9 mm. The dedusting electric field anode 4051 has a length of 180 mm. The dedusting electric field cathode 4052 has a length of 180 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. Under the action of the dedusting electric field anode 4051 and the dedusting electric field cathode 4052, more substances to be treated can be collected, ensuring a higher dust collecting efficiency of the present electric field device, with a dust collecting efficiency of 99% for typical tail gas particles (PM 0.23 particulate matter).

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 17

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, and the dedusting electric field cathode 4052 is in the shape of a rod. The dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 1.667:1, and the inter-electrode distance between the dedusting electric field anode 4051 and the dedusting electric field cathode 4052 is 2.4 mm. The dedusting electric field anode 4051 has a length of 30 mm, and the dedusting electric field cathode 4052 has a length of 30 mm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. Under the action of the dedusting electric field anode 4051 and the dedusting electric field cathode 4052, more substances to be treated can be collected, ensuring a higher dust collecting efficiency of the present electric field device, with a dust collecting efficiency of 99% for typical tail gas particles (PM 0.23 particulate matter).

In the present embodiment, the dedusting electric field anode 4051 and the dedusting electric field cathode 4052 constitute a dust collecting unit, and there is a plurality of dust collecting units so as to effectively improve the dust collecting efficiency of the present electric field device utilizing the plurality of dust collecting units.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 18

In the present embodiment, an engine exhaust system includes the electric field device of Embodiment 15, Embodiment 16, or Embodiment 17. A gas which is discharged from an engine needs to first flow through this electric field device so as to effectively eliminate pollutants such as dust in the gas utilizing this electric field device. Subsequently, the treated gas is discharged into the atmosphere so as to reduce the influence of the engine tail gas on the atmosphere. This engine exhaust system is also referred to as a tail gas treatment device.

### Embodiment 19

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, the dedusting electric field cathode 4052 is in the shape of a rod. The dedusting electric field cathode 4052 is provided in the dedusting electric field anode 4051 in a penetrating manner. The dedusting electric field anode 4051 has a length of 5 cm, and the dedusting electric field cathode 4052 has a length of 5 cm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. The inter-electrode distance between the dedusting electric field anode 4051 and the dedusting electric field cathode 4052 is 9.9 mm. Under the action of the dedusting electric field anode 4051 and the dedusting electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

In the present embodiment, the substance to be treated can be granular dust.

In the present embodiment, the gas can be a gas which is to enter an engine or a gas which has been discharged from an engine.

### Embodiment 20

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, the dedusting electric field cathode 4052 is in the shape of a rod. The dedusting electric field cathode 4052 is provided in the dedusting electric field anode 4051 in a penetrating manner. The dedusting electric field anode 4051 has a length of 9cm, and the dedusting electric field cathode 4052 has a length of 9cm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. The inter-electrode distance between the dedusting electric field anode 4051 and the dedusting electric field cathode 4052 is 139.9mm. Under the action of the dedusting electric field anode 4051 and the dedusting electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, all the dedusting electric field anodes have the same polarity as each other, and all the dedusting electric field cathodes have the same polarity as each other.

In the present embodiment, the substance to be treated can be granular dust.

In the present embodiment, the gas can be a gas which is to enter an engine or a gas which has been discharged from an engine.

### Embodiment 21

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

In the present embodiment, the dedusting electric field anode 4051 is in the shape of a hollow regular hexagonal tube, the dedusting electric field cathode 4052 is in the shape of a rod. The dedusting electric field cathode 4052 is provided in the dedusting electric field anode 4051 in a penetrating manner. The dedusting electric field anode 4051 has a length of 1cm, and the dedusting electric field cathode 4052 has a length of 1cm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052. The inter-electrode distance between the dedusting electric field anode 4051 and the dedusting electric field cathode 4052 is 2.4mm. Under the action of the dedusting electric field anode 4051 and the dedusting electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

The plurality of electric field stages are connected in series to each other by a connection housing, and the distance between two adjacent electric field stages is greater than 1.4 times the inter-electrode distance. There are two electric field stages, i.e., a first-stage electric field and a second-stage electric field which are connected in series by the connection housing.

In the present embodiment, the substance to be treated can be granular dust.

In the present embodiment, the gas can be a gas which is to enter an engine or a gas which has been discharged from an engine.

### Embodiment 22

As shown in FIG. 13, in the present embodiment, an electric field generating unit, which is applicable to a tail gas electric field device and is also applicable to a tail gas electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply. The power supply is a direct-current power supply. The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052. This discharge electric field is a static electric field.

As shown in FIG. 13 and FIG. 14, in the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner. The dedusting electric field anode 4051 has a length of 3 cm, and the dedusting electric field cathode 4052 has a length of 2 cm. The dedusting electric field anode 4051 includes a fluid passage having an entrance end and an exit end. The dedusting electric field cathode 4052 is disposed in the fluid passage and extends in the direction of the fluid passage. An entrance end of the dedusting electric field anode 4051 is flush with a near entrance end of the dedusting electric field cathode 4052. An included angle α is formed between an exit end of the dedusting electric field anode 4051 and a near exit end of the dedusting electric field cathode 4052, wherein α=90 °. The inter-electrode distance between the dedusting electric field anode 4051 and the dedusting electric field cathode 4052 is 20 mm. Under the action of the dedusting electric field anode 4051 and the dedusting electric field cathode 4052, it is possible to resist high temperature impact, and more substances to be treated can be collected, ensuring a higher dust collecting efficiency of the present electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the tail gas electric field device or the tail gas electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, all the dust collectors have the same polarity as each other, and all the discharge electrodes have the same polarity as each other.

The plurality of electric field stages are connected in series to each other by a connection housing, and the distance between two adjacent electric field stages is greater than 1.4 times the inter-electrode distance. As shown in FIG. 16, there are two electric field stages, i.e., a first-stage electric field and a second-stage electric field which are connected in series by the connection housing.

In the present embodiment, the substance to be treated can be granular dust.

In the present embodiment, the gas can be a gas which is to enter an engine or a gas which has been discharged from an engine.

### Embodiment 23

In the present embodiment, an engine exhaust system includes the electric field device of Embodiment 19, Embodiment 20, Embodiment 21, or Embodiment 22. A gas which is discharged from an engine needs to first flow through this electric field device so as to effectively eliminate pollutants such as dust in the gas utilizing this electric field device. Subsequently, the treated gas is discharged into the atmosphere so as to reduce the influence of the engine tail gas on the atmosphere. This engine exhaust system is also referred to as a tail gas treatment device.

### Embodiment 24

In the present embodiment, an ionization device, which is applicable to an intake system and is also applicable to a tail gas system, includes a dedusting electric field cathode 5081 and a dedusting electric field anode 5082 electrically connected with a cathode and an anode, respectively, of a direct-current power supply, and an auxiliary electrode 5083 is electrically connected with the anode of the direct-current power supply. In the present embodiment, the dedusting electric field cathode 5081 has a negative potential, and the dedusting electric field anode 5082 and the auxiliary electrode 5083 both have a positive potential.

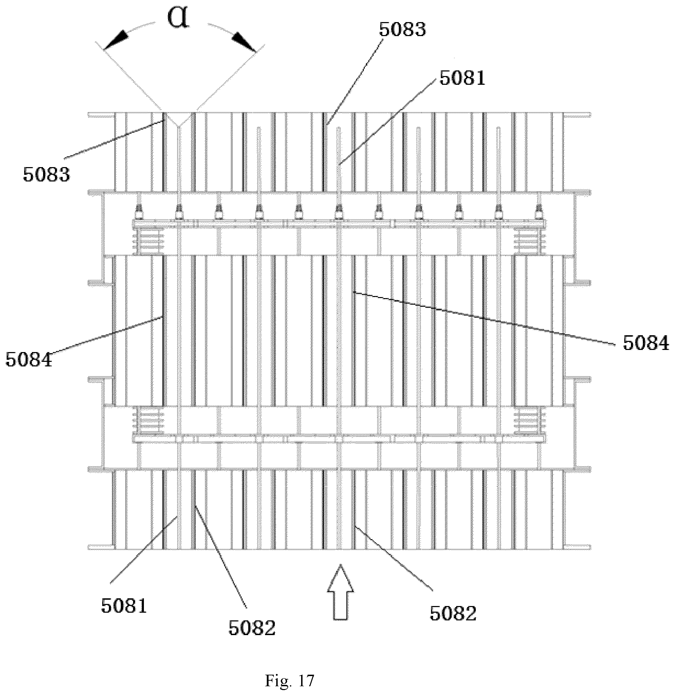

As shown in FIG. 17, the auxiliary electrode 5083 is fixedly connected with the dedusting electric field anode 5082 in the present embodiment. After the dedusting electric field anode 5082 is electrically connected with the anode of the direct-current power supply, the electrical connection between the auxiliary electrode 5083 and the anode of the direct-current power supply is also realized. The auxiliary electrode 5083 and the dedusting electric field anode 5082 have the same positive potential.

As shown in FIG. 17, the auxiliary electrode 5083 can extend in the front-back direction in the present embodiment. Namely, the lengthwise direction of the auxiliary electrode 5083 can be the same as the lengthwise direction of the dedusting electric field anode 5082.

As shown in FIG. 17, in the present embodiment, the dedusting electric field anode 5081 has a tubular shape, the dedusting electric field cathode 5081 is in the shape of a rod, and the dedusting electric field cathode 5081 is provided in the dedusting electric field anode 5082 in a penetrating manner. In the present embodiment, the auxiliary electrode 5083 also has a tubular shape, and the auxiliary electrode 5083 constitutes an anode tube 5084 with the dedusting electric field anode 5082. A front end of the anode tube 5084 is flush with the dedusting electric field cathode 5081, and a rear end of the anode tube 5084 is disposed to the rear of the rear end of the dedusting electric field cathode 5081. The portion of the anode tube 5084 disposed to the rear of the dedusting electric field cathode 5081 is the above-described auxiliary electrode 5083. Namely, in the present embodiment, the dedusting electric field anode 5082 and the dedusting electric field cathode 5081 have the same length as each other, and the dedusting electric field anode 5082 and the dedusting electric field cathode 5081 are positionally relative in a front-back direction. The auxiliary electrode 5083 is located behind the dedusting electric field anode 5082 and the dedusting electric field cathode 5081. Thus, an auxiliary electric field is formed between the auxiliary electrode 5083 and the dedusting electric field cathode 5081. The auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When the gas containing a substance to be treated flows into the anode tube 5084 from front to back, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the dedusting electric field anode 5082 and the anode tube 5084, more substances to be treated can be collected, ensuring a higher dedusting efficiency of the present electric field device.

In addition, as shown in FIG. 9, in the present embodiment, there is an included angle α between the rear end of the anode tube 5084 and the rear end of the dedusting electric field cathode 5081, wherein 0 °<α≤125 °, or 45 °≤α≤125 °, or 60 °≤α≤100 °, or α=90 °.

In the present embodiment, the dedusting electric field anode 5081, the auxiliary electrode 5083, and the dedusting electric field cathode 5083 constitute a dedusting unit. A plurality of dedusting units is provided so as to effectively improve the dedusting efficiency of the electric field device utilizing the plurality of dedusting units.

In the present embodiment, the substance to be treated can be granular dust and can also be other impurities that need to be treated.

In the present embodiment, the gas can be a gas which is to enter an engine or a gas which has been discharged from an engine.

In the present embodiment, a specific example of the direct-current power supply is a direct-current, high-voltage power supply. A discharge electric field is formed between the dedusting electric field cathode 5081 and the dedusting electric field anode 5082. This discharge electric field is a static electric field. In a case where the above-described auxiliary electrode 5083 is absent, an ion flow in the electric field between the dedusting electric field cathode 5081 and the dedusting electric field anode 5082 flows back and forth between the two electrodes, perpendicular to the direction of the electrodes, and causes back and forth consumption of the ions between the electrodes. In view of this, the relative positions of the electrodes are staggered by use of the auxiliary electrode 5083 in the present embodiment, thereby forming a relative imbalance between the dedusting electric field anode 5082 and the dedusting electric field cathode 5081. This imbalance will cause a deflection of the ion flow in the electric field. With use of the auxiliary electrode 5083, the present electric field device forms an electric field that can allow the ion flow to have directivity. In the present embodiment, the above-described electric field device is also referred to as an electric field device having an acceleration direction. For the present electric field device, the collection rate of particulates entering the electric field along the ion flow direction is improved by nearly 100% compared with the collection rate of particulates entering the electric field in a direction countering the ion flow direction, thereby improving the dust accumulating efficiency of the electric field and reducing the power consumption by the electric field. A main reason for the relatively low dedusting efficiency of the prior art dust collecting electric fields is also that the direction of dust entering the electric field is opposite to or perpendicular to the direction of the ion flow in the electric field so that the dust and the ion flow collide violently with each other and generate relatively high energy consumption. In addition, the charging efficiency is also affected, further reducing the dust collecting efficiency of the prior art electric fields and increasing the power consumption.

In the present embodiment, when the electric field device is used to collect dust in a gas, the gas and the dust enter the electric field along the ion flow direction, the dust is sufficiently charged, and the consumption of the electric field is low. The dust collecting efficiency of a unipolar electric field will reach 99.99%. When the gas and the dust enter the electric field in a direction countering the ion flow direction, the dust is insufficiently charged, the power consumption by the electric field will also be increased, and the dust collecting efficiency will be 40%-75%. In the present embodiment, the ion flow formed by the electric field device facilitates fluid transportation by an unpowered fan, increases the oxygen content in to the intake gas, heat exchange and so on by an unpowered fan.

### Embodiment 25

In the present embodiment, an ionization device, which is applicable to an intake system and is also applicable to a tail gas system, includes a dedusting electric field cathode 5081 and a dedusting electric field anode 5082 electrically connected with a cathode and an anode, respectively, of a direct-current power supply, and an auxiliary electrode 5083 is electrically connected with the cathode of the direct-current power supply. In the present embodiment, the auxiliary electrode 5083 and the dedusting electric field cathode 5081 both have a negative potential, and the dedusting electric field anode 5082 has a positive potential.

In the present embodiment, the auxiliary electrode 5083 can be fixedly connected with the dedusting electric field cathode 5081. In this way, after the dedusting electric field cathode 5081 is electrically connected with the cathode of the direct-current power supply, the electrical connection between the auxiliary electrode 5083 and the cathode of the direct-current power supply is also realized. The auxiliary electrode 5083 extends in a front-back direction in the present embodiment.

In the present embodiment, the dedusting electric field anode cathode has a tubular shape, the dedusting electric field cathode 5081 is in the shape of a rod, and the dedusting electric field cathode 5081 is provided in the dedusting electric field anode 5082 in a penetrating manner. In the present embodiment, the above-described auxiliary electrode 5083 is also rod-shaped, and the auxiliary electrode 5083 and the dedusting electric field cathode 5081 constitute a cathode rod. A front end of the cathode rod is disposed forward of a front end of the dedusting electric field anode 5082, and the portion of the cathode rod that is forward of the dedusting electric field anode 5083 is the auxiliary electrode 5083. Namely, in the present embodiment, the dedusting electric field anode 5082 and the dedusting electric field cathode 5081 have the same length as each other, and the dedusting electric field anode 5082 and the dedusting electric field cathode 5081 are positionally relative in a front-back direction. The auxiliary electrode 5083 is located in the front of the dedusting electric field anode 5082 and the dedusting electric field cathode 5081. In this way, an auxiliary electric field is formed between the auxiliary electrode 5083 and the dedusting electric field anode 5082. This auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When the gas containing a substance to be treated flows into the tubular dedusting electric field anode 5082 from front to back, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. Furthermore, under the action of the dedusting electric field anode 5082, more substances to be treated can be collected, ensuring a higher dedusting efficiency of the present electric field device.

In the present embodiment, the dedusting electric field anode 5082, the auxiliary electrode 5083, and the dedusting electric field cathode 5081 constitute a dedusting unit. A plurality of dedusting units is provided so as to effectively improve the dedusting efficiency of the electric field device utilizing the plurality of dedusting units.

In the present embodiment, the substance to be treated can be granular dust and can also be other impurities that need to be treated.

### Embodiment 26

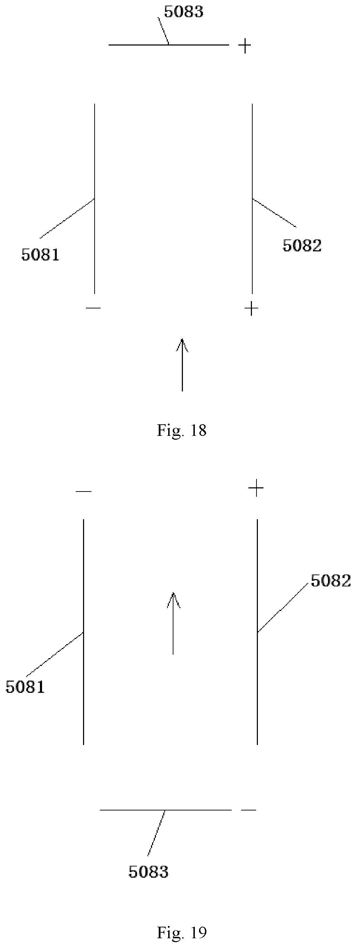

As shown in FIG. 18, in the present embodiment, an electric field device is applicable to an intake system and is also applicable to a tail gas system. An auxiliary electrode 5083 extends in a left-right direction. In the present embodiment, the lengthwise direction of the auxiliary electrode 5083 is different from the lengthwise direction of the dedusting electric field anode 5082 and the dedusting electric field cathode 5081. Specifically, the auxiliary electrode 5083 may be perpendicular to the dedusting electric field anode 5082.

In the present embodiment, the dedusting electric field cathode 5081 and the dedusting electric field anode 5082 are electrically connected with a cathode and an anode, respectively, of a direct-current power supply, and the auxiliary electrode 5083 is electrically connected with the anode of the direct-current power supply. In the present embodiment, the dedusting electric field cathode 5081 has a negative potential, and the dedusting electric field anode 5082 and the auxiliary electrode 5083 both have a positive potential.

As shown in FIG. 18, in the present embodiment, the dedusting electric field cathode 5081 and the dedusting electric field anode 5082 are positionally relative in the front-back direction, and the auxiliary electrode 5083 is located behind the dedusting electric field anode 5082 and the dedusting electric field cathode 5081. Thus, an auxiliary electric field is formed between the auxiliary electrode 5083 and the dedusting electric field cathode 5081. The auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When gas containing a substance to be treated flows from front to back into the electric field between the dedusting electric field anode 5082 and the dedusting electric field cathode 5081, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the dedusting electric field anode 5082, more substances to be treated can be collected, ensuring a higher dedusting efficiency of the present electric field device.

### Embodiment 27

As shown in FIG. 19, in the present embodiment, an electric field device is applicable to an intake system and is also applicable to a tail gas system. An auxiliary electrode 5083 extends in a left-right direction. In the present embodiment, the lengthwise direction of the auxiliary electrode 5083 is different from the lengthwise direction of the dedusting electric field anode 5082 and the dedusting electric field cathode 5081. Specifically, the auxiliary electrode 5083 may be perpendicular to the dedusting electric field cathode 5081.

In the present embodiment, the dedusting electric field cathode 5081 and the dedusting electric field anode 5082 are electrically connected with a cathode and an anode, respectively, of a direct-current power supply, and the auxiliary electrode 5083 is electrically connected with the cathode of the direct-current power supply. In the present embodiment, the dedusting electric field cathode 5081 and the auxiliary electrode 5083 both have a negative potential, and the dedusting electric field anode 5082 has a positive potential.

As shown in FIG. 19, in the present embodiment, the dedusting electric field cathode 5081 and the dedusting electric field anode 5082 are positionally relative in a front-back direction, and the auxiliary electrode 5083 is located in front of the dedusting electric field anode 5082 and the dedusting electric field cathode 5081. In this way, an auxiliary electric field is formed between the auxiliary electrode 5083 and the dedusting electric field anode 5082. This auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When gas containing a substance to be treated flows from front to back into the electric field between the dedusting electric field anode 5082 and the dedusting electric field cathode 5081, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the dedusting electric field anode 5082, more substances to be treated can be collected, ensuring a higher dedusting efficiency of the present electric field device.

### Embodiment 28

In the present embodiment, an engine exhaust device includes the electric field device of Embodiment 24, 25, 26, or 27. A gas which is discharged from an engine needs to first flow through this electric field device so as to effectively eliminate pollutants such as dust in the gas utilizing this electric field device. Subsequently, the treated gas is discharged into the atmosphere so as to reduce the influence of the engine tail gas on the atmosphere. In the present embodiment, the engine exhaust device is also referred to as a tail gas treatment device, the tail gas dedusting mechanism is also referred to as a tail gas electric field device, the dedusting electric field cathode 5081 is also referred to as a tail gas dedusting electric field cathode, and the dedusting electric field anode 5082 is also referred to as a tail gas dedusting electric field anode.

### Embodiment 29

The present embodiment provides a tail gas electric field device including a tail gas dedusting electric field cathode and a tail gas dedusting electric field anode. The tail gas dedusting electric field cathode and the tail gas dedusting electric field anode are each electrically connected to a different one of two electrodes of a direct-current power supply, a tail gas ionization dedusting electric field is formed between the tail gas dedusting electric field cathode and the tail gas dedusting electric field anode. The tail gas electric field device further includes an oxygen supplementing device. The oxygen supplementing device is configured to add an oxygen-containing gas to the tail gas before the tail gas ionization dedusting electric field. The oxygen supplementing device can add oxygen by purely increasing oxygen, by introducing external air, or by introducing compressed air, and/or introducing ozone. In the present embodiment, the tail gas electric field device supplements oxygen in the tail gas utilizing the oxygen supplementing device so as to increase the content of oxygen of the gas. As a result, when the tail gas flows through the tail gas ionization dedusting electric field, more dust in the gas is charged, and more charged dust is collected under the action of the tail gas dedusting electric field anode, resulting in a higher dedusting efficiency of the present tail gas electric field device.

In the present embodiment, the amount of supplemented oxygen depends at least upon the content of particles in the tail gas.

In the present embodiment, the tail gas dedusting electric field cathode and the tail gas dedusting electric field anode are electrically connected with a cathode and an anode, respectively, of a direct-current power supply such that the tail gas dedusting electric field anode has a positive potential, and the tail gas dedusting electric field cathode has a negative potential. In the present embodiment, a specific example of the direct-current power supply is a high-voltage, direct-current power supply. In the present embodiment, an electric field formed between the tail gas dedusting electric field cathode and the tail gas dedusting electric field anode specifically may be referred to as a static electric field.

In the present embodiment, the tail gas electric field device is applicable to a low oxygen environment. This tail gas electric field device is also referred to as an electric field device applicable to a low oxygen environment. In the present embodiment, the oxygen supplementing device includes a blower so as to add external air and oxygen into the tail gas utilizing the blower, thereby allowing the concentration of oxygen in the tail gas entering the electric field to be increased, thus increasing the charging probability of particulates such as dust in the tail gas and further improving the collecting efficiency of the electric field and the tail gas electric field device with respect to dust and other substances in the tail gas with a relatively low concentration of oxygen. In addition, air supplemented by the blower in the tail gas can also act as cooling air to cool the tail gas. In the present embodiment, the blower introduces air into the tail gas, and cools the tail gas before a tail gas electric field device entrance. The air which is introduced can be 50% to 300%, 100% to 180%, or 120% to 150% of the tail gas.

In the present embodiment, the tail gas ionization dedusting electric field and the tail gas electric field device can be used to collect particulates such as dust in the tail gas of fuel engines or the tail gas of combustion furnaces. Namely, the gas can be the tail gas of fuel engines or the tail gas of combustion furnaces. In the present embodiment, the oxygen supplementing device is utilized to supplement fresh air in the tail gas or simply add oxygen to the tail gas so as to increase the content of oxygen in the tail gas. As a result, the efficiency of collecting particulates and aerosol substances in the tail gas by the tail gas ionization dedusting electric field can be improved. In addition, it can function to cool the tail gas, which creates more favorable conditions for collecting the particulates in the tail gas by the electric field.

In the present embodiment, oxygen can also be increased in the tail gas, such as by introducing compressed air or ozone into the tail gas through the oxygen supplementing device. The combustion condition of a device such as a front-stage engine or a boiler is adjusted such that the content of oxygen in the tail gas generated is stable, thus meeting the requirements for charging and dust collection by the electric field.

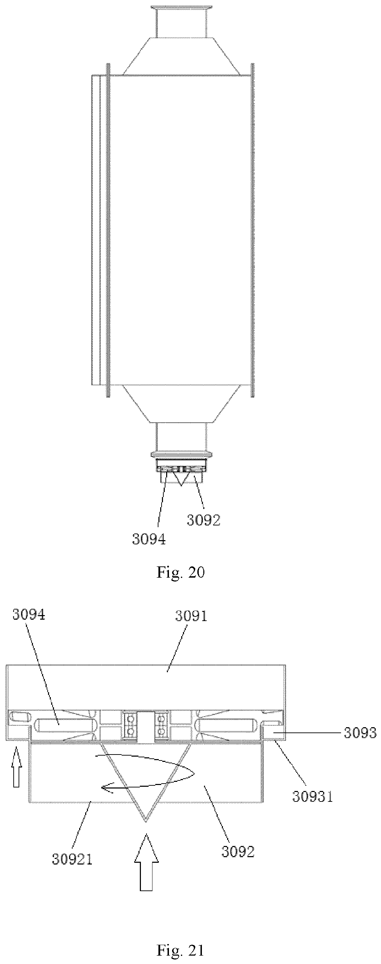

In the present embodiment, the oxygen supplementing device can include a positive pressure blower and a pipeline. The tail gas dedusting electric field cathode and the tail gas dedusting electric field anode constitute electric field components. The above-described tail gas dedusting electric field cathode is also referred to as a corona electrode. The high-voltage, direct-current power supply and power lines constitute power supply components. In the present embodiment, the oxygen supplementing device is utilized to supplement oxygen in air in the tail gas such that the dust is charged, thereby avoiding fluctuation in the efficiency of the electric field caused by fluctuation of the content of oxygen in the tail gas. Oxygen supplementation will also increase the ozone content in the electric field, facilitating an improvement in the efficiency of the electric field for treatments such as purification, self-cleaning, and denitration of organic matter in the tail gas. In the present embodiment, the tail gas electric field device is also referred to as a deduster. A dedusting passage is provided between the tail gas dedusting electric field cathode and the tail gas dedusting electric field anode, and the tail gas ionization dedusting electric field is formed in the dedusting passage. As shown in FIG. 20 and FIG. 21, the present tail gas electric field device further includes an impeller duct 3091 communicating with the dedusting passage, a tail gas passage 3092 communicating with the impeller duct 3091, and an oxygen increasing duct 3093 communicating with the impeller duct 3091. An impeller 3094 is installed in the impeller duct 3091. The impeller 3094 constitutes the above-mentioned blower. Namely, the above-described oxygen supplementing device includes the impeller 3094. The oxygen increasing duct 3093 is located at the periphery of the tail gas passage 3092, and the oxygen increasing duct 3093 is also referred to as an outer duct. One end of the oxygen increasing duct 3093 is provided with an air inlet 30931, and one end of the tail gas passage 3092 is provided with a tail gas inlet 30921 which communicates with an exhaust port of a fuel engine or a combustion furnace. In this way, the tail gas emitted by the engine or the combustion furnace and the like will enter the impeller duct 3091 through the tail gas inlet 30921 and the tail gas passage 3092, force the impeller 3094 in the impeller duct 3091 to rotate, and at the same time function to cool the tail gas. When rotating, the impeller 3094 absorbs external air into the oxygen increasing duct 3093 and the impeller duct 3091 through the air inlet 30931 such that air is mixed into the tail gas, thereby achieving the objects of increasing oxygen in the tail gas and cooling the tail gas. The tail gas in which oxygen is supplemented then flows through the dedusting passage through the impeller duct 3091, and the electric field is used to dedust the tail gas in which oxygen was increased, resulting in a higher dedusting efficiency. In the present embodiment, the impeller duct 3091 and the impeller 3094 constitute a turbofan.

### Embodiment 30

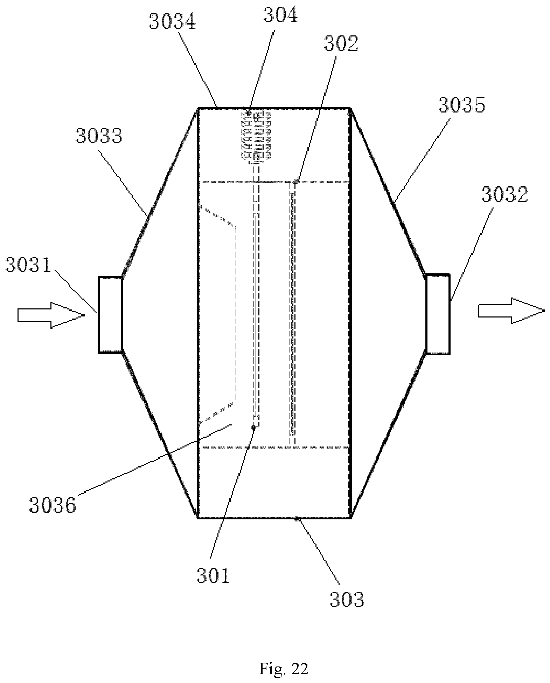

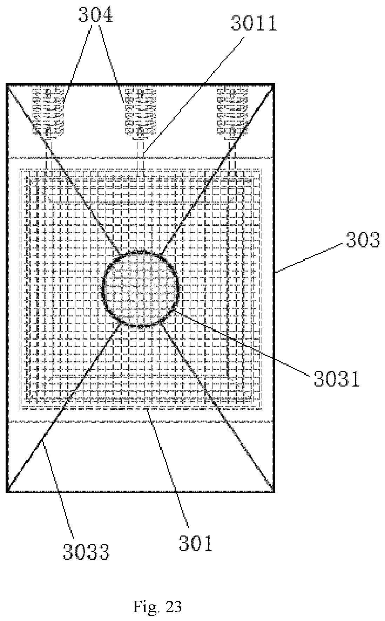

As shown in FIG. 22 to FIG. 24, the present embodiment provides an electrocoagulation device including the following:
a first electrode 301 capable of conducting electrons to nitric acid-containing water mist, wherein the nitric acid-containing water mist is charged when the electrons are conducted to the nitric acid-containing water mist; and
a second electrode 302 capable of applying an attractive force to the charged water mist.

As shown in FIG. 22, in the present embodiment, the electrocoagulation device further includes an electrocoagulation housing 303 having an electrocoagulation entrance 3031 and an electrocoagulation exit 3032. The first electrode 301 and the second electrode 302 are both mounted in the electrocoagulation housing 303. The first electrode 301 is fixedly connected to an inner wall of the electrocoagulation housing 303 through an electrocoagulation insulating part 304, and the second electrode 302 is directly fixedly connected to the electrocoagulation housing 303. In the present embodiment, the electrocoagulation insulating part 304 has a columnar shape and is also referred to as an insulating column. In another embodiment, the electrocoagulation insulating part 304 may further have a tower-like shape or the like. The electrocoagulation insulating part 304 is mainly used for preventing pollution and preventing electric leakage. In the present embodiment, the first electrode 301 and the second electrode 302 are both net-shaped and are both located between the electrocoagulation entrance 3031 and the electrocoagulation exit 3032. The first electrode 301 has a negative potential, and the second electrode 302 has a positive potential. In the present embodiment, the electrocoagulation housing 303 has the same potential as the second electrode 302. The electrocoagulation housing 303 also plays a role in adsorbing charged substances. In the present embodiment, the electrocoagulation housing is provided therein with an electrocoagulation flow channel 3036. The first electrode 301 and the second electrode 302 are both mounted in the electrocoagulation flow channel 3036, and the ratio of the cross-sectional area of the first electrode 301 to the cross-sectional area of the electrocoagulation flow channel 3036 is 99%-10%, 90-10%, 80-20%, 70-30%, 60-40%, or 50%.

In the present embodiment, the electrocoagulation device can further be used to treat acid mist-containing industrial tail gas. In the present embodiment, when the electrocoagulation device is used to treat acid mist-containing industrial tail gas, the electrocoagulation entrance 3031 communicates with a port for discharging the industrial tail gas. As shown in FIG. 22, in the present embodiment, the working principle of the electrocoagulation device is as follows. The industrial tail gas flows into the electrocoagulation housing 303 through the electrocoagulation entrance 3031 and flows out through the electrocoagulation exit 3032. During this process, the industrial tail gas will flow through the first electrode 301, and when the acid mist in the industrial tail gas contacts the first electrode 301 or the distance between the industrial tail gas and the first electrode 301 reaches a certain value, the first electrode 301 transfers electrons to the acid mist and the acid mist is charged. The second electrode 302 applies an attractive force to the charged acid mist, which moves towards the second electrode 302 and is attached to the second electrode 302. As the acid mist has the characteristics of being easily charged and easily losing electricity, a given charged mist drop will lose electricity in the process of moving towards the second electrode 302, at which time other charged mist drops will in turn quickly transfer electrons to the mist drop losing electricity. If this process is repeated, the given mist drop will be in a continuously charged state. The second electrode 302 can then continuously apply an attractive force to the mist drop and allow the mist drop to be attached to the second electrode 302, thus realizing removal of acid mist in the industrial tail gas and avoiding direct discharge of the acid mist into the atmosphere to cause pollution of the atmosphere. In the present embodiment, the first electrode 301 and the second electrode 302 constitute an adsorption unit. In the case where there is only one adsorption unit, the electrocoagulation device in the present embodiment can remove 80% of the acid mist in industrial tail gas and greatly reduce the emission of acid mist. Therefore, the electrocoagulation device possesses a significant environmental protection effect.

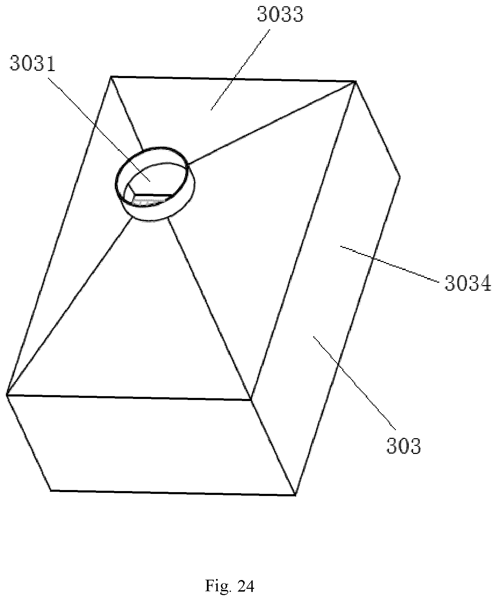

As shown in FIG. 24, in the present embodiment, the first electrode 301 is provided with three front connecting portions 3011 which are fixedly connected with three connecting portions on an inner wall of the electrocoagulation housing 303 through three electrocoagulation insulating parts 304. This manner of connection can effectively enhance the connection strength between the first electrode 301 and the electrocoagulation housing 303. In the present embodiment, the front connecting portions 3011 have a cylindrical shape, while in other embodiments, the front connecting portions 3011 may also have a tower-like shape or the like. In the present embodiment, the electrocoagulation insulating parts 304 have a cylindrical shape, while in other embodiments, the electrocoagulation insulating parts 304 may also have a tower-like shape or the like. In the present embodiment, a rear connecting portion has a cylindrical shape, while in other embodiments, the electrocoagulation insulating parts 304 may also have a tower-like shape or the like. As shown in FIG. 22, in the present embodiment, the electrocoagulation housing 303 includes a first housing portion 3033, a second housing portion 3034, and a third housing portion 3035 disposed in this order in the direction from the electrocoagulation entrance 3031 to the electrocoagulation exit 3032. The electrocoagulation entrance 3031 is located at one end of the first housing portion 3033, and the electrocoagulation exit 3032 is located at one end of the third housing portion 3035. The size of the outline of the first housing portion 3033 gradually increases in the direction from the electrocoagulation entrance 3031 to the electrocoagulation exit 3032, and the size of the outline of the third housing portion 3035 gradually decreases in the direction from the electrocoagulation entrance 3031 to the electrocoagulation exit 3032. In the present embodiment, the cross section of the second housing portion 3034 is rectangular. In the present embodiment, the electrocoagulation housing 303 adopts the above-described structural design such that the tail gas reaches a certain inlet flow rate at the electrocoagulation entrance 3031, and more importantly, a more uniform distribution of the airflow can be achieved. Furthermore, a medium in the tail gas, such as mist drops, can be more easily charged under the excitation of the first electrode 301. In addition, it is easier to encapsulate the electrocoagulation housing 303, the amount of materials which are used is decreased, space is saved, pipelines can be used for connection, and the housing is conducive to insulation. Any electrocoagulation housing 303 that can achieve the above effect is acceptable.

In the present embodiment, the electrocoagulation entrance 3031 and the electrocoagulation exit 3032 both have a circular shape. The electrocoagulation entrance 3031 can also be referred to as a gas inlet, and the electrocoagulation exit 3032 can also be referred to as a gas outlet. In the present embodiment, the electrocoagulation entrance 3031 has a diameter of 300 mm-1000 mm and specifically 500 mm. In the present embodiment, the electrocoagulation entrance 3031 has a diameter of 300 mm-1000 mm, and specifically 500 mm.

### Embodiment 31

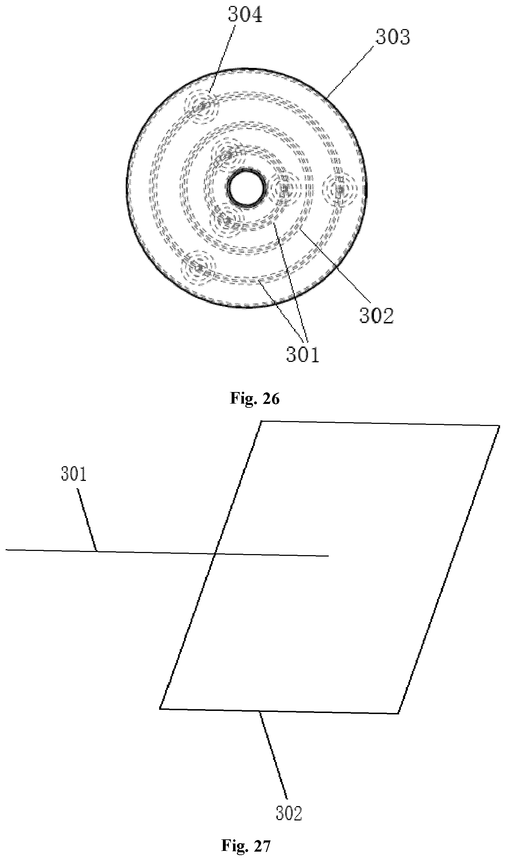

As shown in FIG. 25 and FIG. 26, the present embodiment provides an electrocoagulation device including the following:
a first electrode 301 capable of conducting electrons to nitric acid-containing water mist, wherein
the nitric acid-containing water mist is charged when the electrons are conducted to the nitric acid-containing water mist; and
a second electrode 302 capable of applying an attractive force to the charged water mist.

As shown in FIG. 25 and FIG. 26, in the present embodiment, there are two first electrodes 301, both having a net shape and a ball-cage shape. In the present embodiment, there is one second electrode 302, which has a net shape and a ball-cage shape. The second electrode 302 is located between the two first electrodes 301. As shown in FIG. 25, in the present embodiment, the electrocoagulation device further includes an electrocoagulation housing 303 having an electrocoagulation entrance 3031 and an electrocoagulation exit 3032. The first electrode 301 and the second electrode 302 are both mounted in the electrocoagulation housing 303. The first electrode 301 is fixedly connected to an inner wall of the electrocoagulation housing 303 through an electrocoagulation insulating part 304, and the second electrode 302 is directly fixedly connected to the electrocoagulation housing 303. In the present embodiment, the electrocoagulation insulating part 304 has a columnar shape and is also referred to as an insulating column. In the present embodiment, the first electrodes 301 have a negative potential, and the second electrode 302 has a positive potential. In the present embodiment, the electrocoagulation housing 303 has the same potential as the second electrode 302. The electrocoagulation housing 303 also plays a role in adsorbing charged substances.

In the present embodiment, the electrocoagulation device can further be used to treat acid mist-containing industrial tail gas. In the present embodiment, the electrocoagulation entrance 3031 can communicate with a port for discharging industrial tail gas. As shown in FIG. 25, the working principle of the electrocoagulation device in the present embodiment is as follows. The industrial tail gas flows into the electrocoagulation housing 303 from the electrocoagulation entrance 3031 and flows out through the electrocoagulation exit 3032. In this process, the industrial tail gas will first flow through one of the first electrodes 301. When the acid mist in the industrial tail gas contacts this first electrode 301 or the distance between the industrial tail gas and this first electrode 301 reaches a certain value, the first electrode 301 will transfer electrons to the acid mist, and a part of the acid mist is charged. The second electrode 302 applies an attractive force to the charged acid mist, and the acid mist moves towards the second electrode 302 and is attached to the second electrode 302. Another part of the acid mist is not adsorbed onto the second electrode 302. This part of the acid mist continues to flow in the direction of the electrocoagulation exit 3032. When this part of the acid mist contacts the other first electrode 301 or the distance between this part of the acid mist and the other first electrode 301 reaches a certain value, this part of the acid mist will be charged. The electrocoagulation housing 303 applies an adsorption force to this part of the charged acid mist such that this part of the charged acid mist is attached to the inner wall of the electrocoagulation housing 303, thereby greatly reducing the emission of the acid mist in the industrial tail gas. The treatment device in the present embodiment can remove 90% of the acid mist in the industrial tail gas, so the effect of removing the acid mist is quite significant. In the present embodiment, the electrocoagulation entrance 3031 and the electrocoagulation exit 3032 both have a circular shape. The electrocoagulation entrance 3031 may also be referred to as a gas inlet, and the electrocoagulation exit 3032 may also be referred to as a gas outlet.

### Embodiment 32

As shown in FIG. 27, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 is needle-shaped and has a negative potential. In the present embodiment, the second electrode 302 has a planar shape and has a positive potential. The second electrode 302 is also referred to as a collector. In the present embodiment, the second electrode 302 specifically has a flat surface shape, and the first electrode 301 is perpendicular to the second electrode 302. In the present embodiment, a line-plane electric field is formed between the first electrode 301 and the second electrode 302.

### Embodiment 33

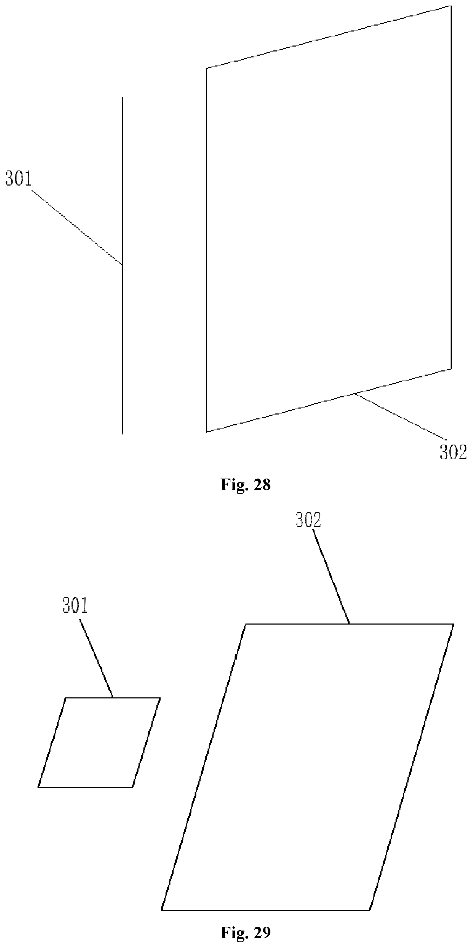

As shown in FIG. 28, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 has a linear shape and has a negative potential. In the present embodiment, the second electrode 302 has a planar shape and has a positive potential. The second electrode 302 is also referred to as a collector. In the present embodiment, the second electrode 302 specifically has a flat surface shape and is parallel to the first electrode 301. In the present embodiment, a line-plane electric field is formed between the first electrode 301 and the second electrode 302.

### Embodiment 34

As shown in FIG. 29, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 has a net-like shape and a negative potential. In the present embodiment, the second electrode 302 has a planar shape and has a positive potential. The second electrode 302 is also referred to as a collector. In the present embodiment, the second electrode 302 specifically has a flat surface shape and is parallel to the second electrode 302. In the present embodiment, a net-plane electric field is formed between the first electrode 301 and the second electrode 302. In the present embodiment, the first electrode 301 has a net-shaped structure made of metal wires, and the first electrode 301 is made of metal wires. In the present embodiment, the area of the second electrode 302 is greater than the area of the first electrode 301.

### Embodiment 35

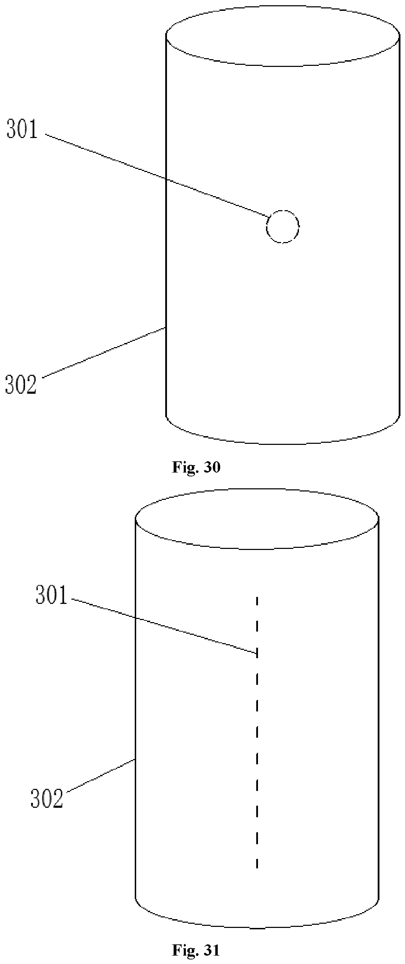

As shown in FIG. 30, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 has a point shape and a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located at a geometric center of symmetry of the barrel-shaped second electrode 302. In the present embodiment, a point-barrel electric field is formed between the first electrode 301 and the second electrode 302.

### Embodiment 36

As shown in FIG. 31, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 has a linear shape and has a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located on a geometric axis of symmetry of the barrel-shaped second electrode 302. In the present embodiment, a line-barrel electric field is formed between the first electrode 301 and the second electrode 302.

### Embodiment 37

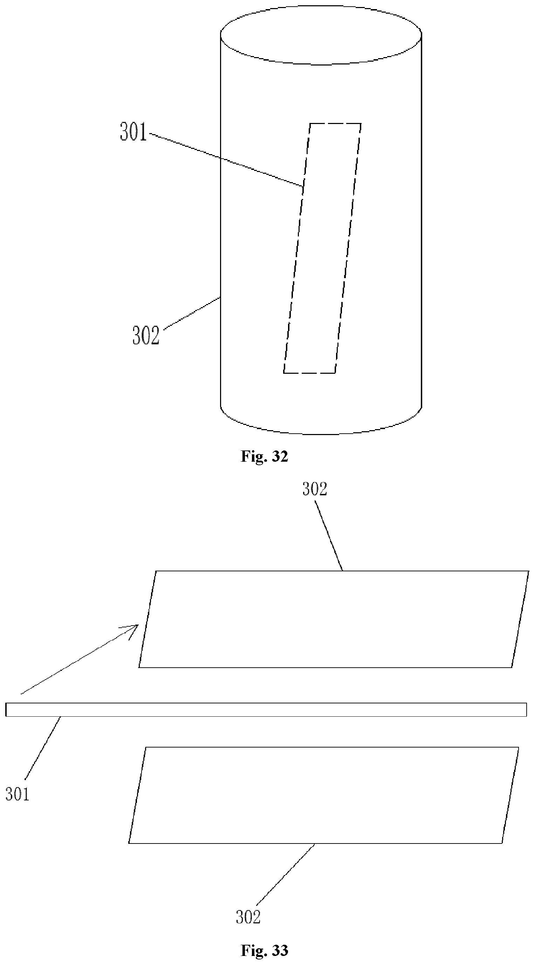

As shown in FIG. 32, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, the first electrode 301 has a net-like shape and a negative potential. In the present embodiment, the second electrode 302 has a barrel shape and a positive potential. The second electrode 302 is also referred to as a collector. In the present embodiment, the first electrode 301 is held in place by metal wires or metal needles. In the present embodiment, the first electrode 301 is located at a geometric center of symmetry of the barrel-shaped second electrode 302. In the present embodiment, a net-barrel electrocoagulation electric field is formed between the first electrode 301 and the second electrode 302.

### Embodiment 38

As shown in FIG. 33, the present embodiment provides an electrocoagulation device including the following:
a first electrode 301 capable of conducting electrons to a water mist, wherein the water mist is charged when the electrons are conducted to the water mist; and
a second electrode 302 capable of applying an attractive force to the charged water mist.

In the present embodiment, there are two second electrodes 302, and the first electrode 301 is located between the two second electrodes 302. The length of the first electrode 301 in the left-right direction is greater than the length of each second electrode 302 in the left-right direction. The left end of the first electrode 301 is located to the left of each second electrode 302. The left end of the first electrode 301 and the left ends of the second electrodes 302 form an obliquely extending power line. In the present embodiment, an asymmetrical electrocoagulation electric field is formed between the first electrode 301 and the second electrodes 302. In use, a low specific resistance substance, such as mist drops, enters between the two second electrodes 302 from the left. After being charged, a part of the mist drops moves obliquely from the left end of the first electrode 301 towards the left ends of the second electrodes 302. Thus, charging applies a pulling action on the mist drops.

### Embodiment 39

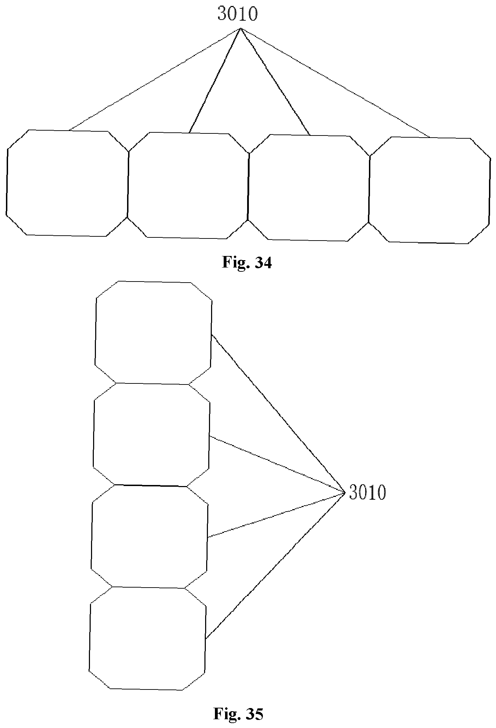

As shown in FIG. 34, the present embodiment provides an electrocoagulation device including the following:
a first electrode capable of conducting electrons to a water mist, wherein the water mist is charged when the electrons are conducted to the water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed in a horizontal direction. Specifically, in the present embodiment, all of the adsorption units 3010 are distributed along a left-right direction.

### Embodiment 40

As shown in FIG. 35, the present embodiment provides an electrocoagulation device including the following:
a first electrode capable of conducting electrons to a water mist, wherein the water mist is charged when the electrons are conducted to the water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed along an up-down direction.

### Embodiment 41

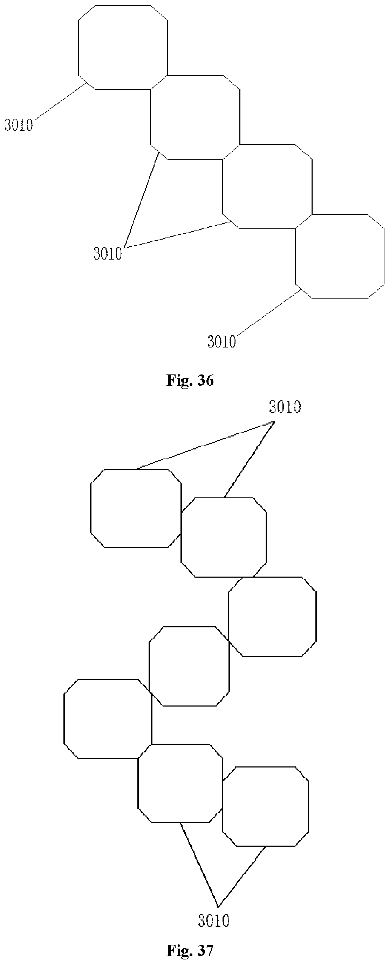

As shown in FIG. 36, the present embodiment provides an electrocoagulation device including the following:
a first electrode capable of conducting electrons to a water mist, wherein the water mist is charged when the electrons are conducted to the water mist; and
a second electrode capable of applying an attractive force to the charged water mist.

In the present embodiment, the first electrode and the second electrode constitute an adsorption unit 3010. In the present embodiment, there is a plurality of adsorption units 3010, all of which are distributed obliquely.

### Embodiment 42

As shown in FIG. 37, the present embodiment provides an electrocoagulation device including the following:
a first electrode capable of conducting electrons to a water mist, wherein the water mist is charged when the electrons are conducted to the water mist; and
a second electrode capable of applying an attractive force to the charged water mist.

In the present embodiment, the first electrode and the second electrode constitute an adsorption unit 3010. In the present embodiment, there is a plurality of the adsorption units 3010, all of which are distributed along a spiral direction.

### Embodiment 43

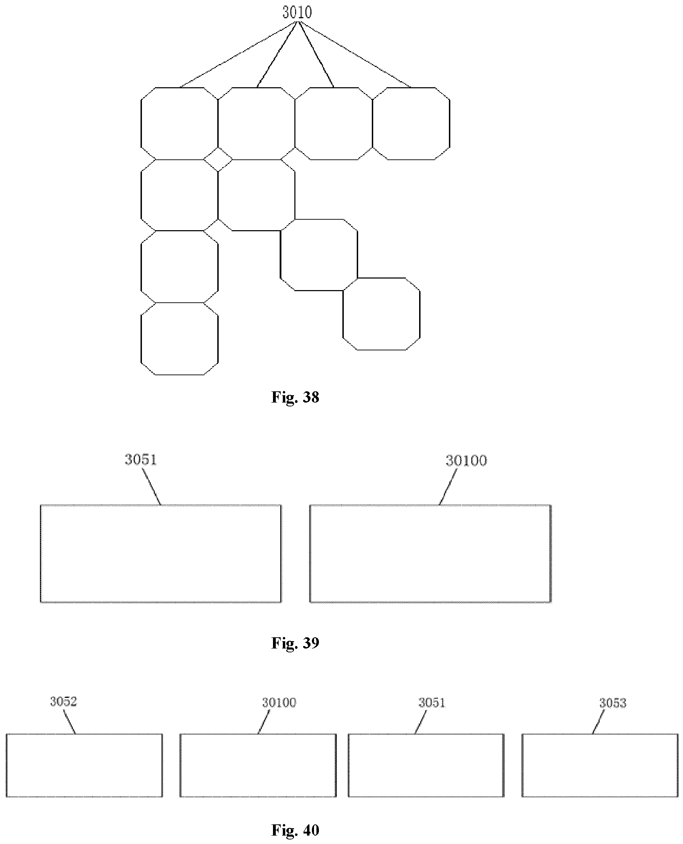

As shown in FIG. 38, the present embodiment provides an electrocoagulation device including the following:
a first electrode capable of conducting electrons to a water mist, wherein the water mist is charged when the electrons are conducted to the water mist; and
a second electrode capable of applying an attractive force to the charged water mist.

In the present embodiment, the first electrode and the second electrode constitute an adsorption unit 3010. In the present embodiment, there is a plurality of the adsorption units 3010, all of which are distributed along a left-right direction, an up-down direction, and an oblique direction.

### Embodiment 44

As shown in FIG. 39, the present embodiment provides an engine tail gas treatment system including the above-described electrocoagulation device 30100 and a venturi plate 3051. In the present embodiment, the electrocoagulation device 30100 and the venturi plate 3051 are used in combination.

### Embodiment 45

As shown in FIG. 40, the present embodiment provides an engine tail gas treatment system including the above-described electrocoagulation device 30100, a venturi plate 3051, a NOₓ oxidation catalyzing device 3052, and an ozone digestion device 3053. In the present embodiment, the electrocoagulation device 30100 and the venturi plate 3051 are located between the NOₓ oxidation catalyzing device 3052 and the ozone digestion device 3053. There is a NOₓ oxidation catalyst in the NOₓ oxidation catalyzing device 3052, and an ozone digestion catalyst is present in the ozone digestion device 3053.

### Embodiment 46

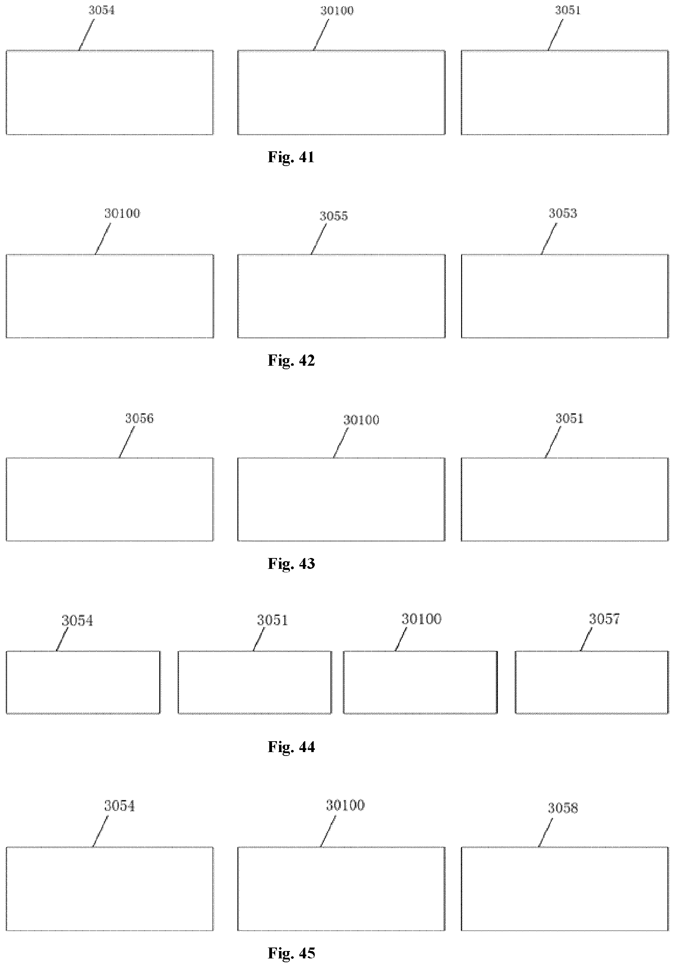

As shown in FIG. 41, the present embodiment provides an engine tail gas treatment system including the above-described electrocoagulation device 30100, a corona device 3054, and a venturi plate 3051, wherein the electrocoagulation device 30100 is located between the corona device 3054 and the venturi plate 3051.

### Embodiment 47

As shown in FIG. 42, the present embodiment provides an engine tail gas treatment system including the above-described electrocoagulation device 30100, a heating device 3055, and an ozone digestion device 3053, wherein the heating device 3055 is located between the electrocoagulation device 30100 and the ozone digestion device 3053.

### Embodiment 48

As shown in FIG. 43, the present embodiment provides an engine tail gas treatment system including the above-described electrocoagulation device 30100, a centrifugal device 3056, and a venturi plate 3051, wherein the electrocoagulation device 30100 is located between the centrifugal device 3056 and the venturi plate 3051.

### Embodiment 49

As shown in FIG. 44, the present embodiment provides an engine tail gas treatment system including the above-described electrocoagulation device 30100, a corona device 3054, a venturi plate 3051, and a molecular sieve 3057, wherein the venturi plate 3051 and the electrocoagulation device 30100 are located between the corona device 3054 and the molecular sieve 3057.

### Embodiment 50

As shown in FIG. 45, the present embodiment provides an engine tail gas treatment system including the above-described electrocoagulation device 30100, a corona device 3054, and an electromagnetic device 3058, wherein the electrocoagulation device 30100 is located between the corona device 3054 and the electromagnetic device 3058.

### Embodiment 51

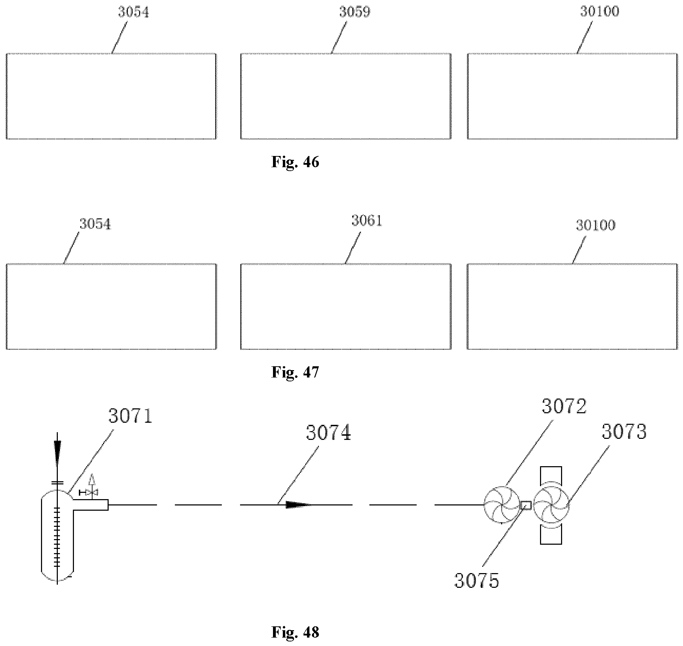

As shown in FIG. 46, the present embodiment provides an engine tail gas treatment system including the above-described electrocoagulation device 30100, a corona device 3054, and an irradiation device 3059, wherein the irradiation device 3059 is located between the corona device 3054 and the electrocoagulation device 30100.

### Embodiment 52

As shown in FIG. 47, the present embodiment provides an engine tail gas treatment system including the above-described electrocoagulation device 30100, a corona device 3054, and a wet electric dedusting device 3061, wherein the wet electric dedusting device 3061 is located between the corona device 3054 and the electrocoagulation device 30100.

### Embodiment 53

In the present embodiment, the tail gas dedusting system includes a tail gas cooling device configured to reduce the tail gas temperature before a tail gas electric field device entrance. In the present embodiment, the tail gas cooling device can communicate with the tail gas electric field device entrance.

As shown in FIG. 48, the present embodiment provides a tail gas cooling device including the following:
a heat exchange unit 3071 configured to perform heat exchange with tail gas of an engine so as to heat a liquid heat exchange medium in the heat exchange unit 3071 into a gaseous heat exchange medium.

In the present embodiment, the heat exchange unit 3071 may include the following:
a tail gas passing cavity which communicates with an exhaust pipeline of the engine and which is configured for the tail gas of the engine to pass through it; and
a medium gasification cavity configured to convert the liquid heat exchange medium, after undergoing heat exchange with the tail gas, into a gaseous heat exchange medium.

In the present embodiment, a liquid heat exchange medium is provided in the medium gasification cavity. After undergoing heat exchange with the tail gas in the tail gas passing cavity, the liquid heat exchange medium is converted into a gaseous heat exchange medium. Tail gas of an automobile is collected by the tail gas passing cavity. In the present embodiment, the medium gasification cavity and the tail gas passing cavity may have the same lengthwise direction as each other. Namely, an axis of the medium gasification cavity and an axis of the tail gas passing cavity overlap. In the present embodiment, the medium gasification cavity may be located inside the tail gas passing cavity, or it may be located outside the tail gas passing cavity. In this way, when tail gas of an automobile flows through the tail gas passing cavity, heat carried by the tail gas of the automobile will be transferred to the liquid inside the medium gasification cavity and heat the liquid to above its boiling point. The liquid is then vaporized into a gaseous medium such as a high-temperature, high-pressure vapor. The vapor will flow in the medium gasification cavity. In the present embodiment, the medium gasification cavity specifically may be completely covered or partially covered, except for a front end thereof, on the inner and outer sides of the tail gas passing cavity.

In the present embodiment, the tail gas cooling device further includes a driving force generating unit 3072. The driving force generating unit 3072 is configured to convert heat energy of the heat exchange medium and/or heat energy of the tail gas into mechanical energy.

In the present embodiment, the tail gas cooling device further includes an electricity generating unit 3073. The electricity generating unit 3073 is configured to convert mechanical energy produced by the driving force generating unit 3072 into electric energy.

In the present embodiment, the working principle of the tail gas cooling device is as follows. The heat exchange unit 3071 performs heat exchange with the tail gas of the engine so as to heat the liquid heat exchange medium in the heat exchange unit 3071 into a gaseous heat exchange medium. The driving force generating unit 3072 converts the heat energy of the heat exchange medium or the heat energy of the tail gas into mechanical energy. The electricity generating unit 3073 converts the mechanical energy produced by the driving force generating unit 3072 into electric energy, thereby realizing the generation of electricity using the tail gas of the engine and avoiding waste of the heat and pressure carried by the tail gas. When performing heat exchange with the tail gas, the heat exchange unit 3071 can further perform the function of heat dissipation and cooling to the tail gas so that the tail gas can be treated using other tail gas purification devices and the like. As a result, the efficiency of subsequent treatment of the tail gas is improved. In the present embodiment, the heat exchange medium may be water, methanol, ethanol, oil, alkane, etc. These heat exchange media are substances that can undergo a phase change with temperature, with the volume and pressure thereof undergoing corresponding changes during the phase change process.

In the present embodiment, the heat exchange unit 3071 is also referred to as a heat exchanger. In the present embodiment, tubular heat exchange equipment may be used as the heat exchange unit 3071. Factors considered in the design of the heat exchange unit 3071 include pressure bearing, volume reduction, increase of heat exchange area, or the like.

As shown in FIG. 48, in the present embodiment, the tail gas cooling device may further include a medium transfer unit 3074 connected between the heat exchange unit 3071 and the driving force generating unit 3072. A gaseous medium such as vapor formed in the medium gaseous cavity acts on the driving force generating unit 3072 through the medium transfer unit 3074. The medium transfer unit 3074 includes a pressure-bearing pipeline.

In the present embodiment, the driving force generating unit 3072 includes a turbofan. The turbofan can convert pressure produced by a gaseous medium such as vapor or tail gas into kinetic energy. The turbofan includes a turbofan shaft and at least one turbofan assembly fixed on the turbofan shaft. The turbofan assembly includes a diversion fan and a power fan. When the pressure of vapor acts on the turbofan assembly, the turbofan shaft will rotate together with the turbofan assembly so as to convert the pressure of vapor into kinetic energy. When the driving force generating unit 3072 includes the turbofan, the pressure of the tail gas of the engine can also act on the turbofan so as to drive the turbofan to rotate. In this way, the pressure of vapor and the pressure generated by the tail gas can alternatingly act on the turbofan in a seamless manner. When the turbofan rotates in a first direction, the electricity generating unit 3073 converts kinetic energy into electric energy, realizing generation of electricity with waste heat. When the electric energy produced in turn drives the turbofan to rotate and the turbofan rotates in a second direction, the electricity generating unit 3073 converts electric energy into exhaust resistance and provides the exhaust resistance to the engine. When an exhaust braking device mounted on the engine operates to produce high-temperature, high-pressure tail gas for engine braking, the turbofan converts this kind of braking energy into electric energy, thereby realizing exhaust braking and braking electricity generation of the engine. In the present embodiment, a constant exhaust negative pressure can be generated by high-speed air suction of the turbofan, the engine exhaust resistance is reduced, and the engine is assisted. When the driving force generating unit 3072 includes the turbofan, the driving force generating unit 3072 further includes a turbofan adjusting module which drives the turbofan to produce a moment of inertia utilizing the peak value of the engine exhaust pressure. This further delays the production of a tail gas negative pressure, drives the engine to take in air, reduces the engine exhaust resistance, and improves the engine power.

In the present embodiment, the tail gas cooing device is applicable to a fuel engine such as a diesel engine or gasoline engine. In the present embodiment, the tail gas cooling device is further applicable to a gas engine. Specifically, the present tail gas cooling device is applied to a diesel engine of a vehicle. Namely, the tail gas passing cavity communicates with an exhaust port of a diesel engine.

The electricity generating unit 3073 includes a generator stator and a generator rotor. The generator rotor is connected with a turbofan shaft of the driving force generating unit 3072. In this way, the generator rotor rotates with the rotation of the turbofan shaft, thereby cooperating with the generator stator to realize power generation. In the present embodiment, the electricity generating unit 3073 can use a variable load generator, or it can use a direct-current generator to convert torque into electric energy. The present electricity generating unit 3073 can match the generating capacity to changes in the tail gas heat by adjusting an excitation winding current so as to be adapted to changes in the tail gas temperature when the vehicle goes uphill, goes downhill, has a heavy load, has a light load, etc. In the present embodiment, the electricity generating unit 3073 may further include a battery assembly for storing electric energy, namely, for realizing temporary storage of the electricity which is released. In the present embodiment, electricity stored in the battery assembly is available to a heat exchanger power fan, a water pump, a refrigeration compressor, and other electrical equipment in the vehicle.

As shown in FIG. 48, in the present embodiment, the tail gas cooling device may further include a coupling unit 3075, and this coupling unit 3075 is electrically connected between the driving force generating unit 3072 and the electricity generating unit 3073, and the electricity generating unit 3073 is coaxially coupled with the driving force generating unit 3072 through this coupling unit 3075. In the present embodiment, the coupling unit 3075 includes an electromagnetic coupler.

In the present embodiment, the electricity generating unit 3073 may further include a generator adjusting and controlling component. The generator adjusting and controlling component is configured to adjust the electric torque of the generator, generate an exhaust negative pressure so as to change the magnitude of a forced braking force of the engine, and generate an exhaust backpressure so as to improve the conversion efficiency of waste heat. Specifically, the generator adjusting and controlling component can change the electricity generation power output by adjusting the generated excitation or generated current, thereby adjusting the tail gas emission resistance of the automobile, realizing a balance among work application, exhaust backpressure, and exhaust negative pressure of the engine and improving the efficiency of the generator.

In the present embodiment, the tail gas cooling device may further include a thermal insulation pipeline connected between an exhaust pipeline and the heat exchange unit 3071 of the engine. Specifically, opposite ends of the thermal insulation pipeline respectively communicate with the exhaust port and the tail gas passing cavity of the engine system so as to keep a high tail gas temperature. The thermal insulation pipeline guides the tail gas into the tail gas passing cavity.

In the present embodiment, the tail gas cooling device may further include a blower which introduces air into the tail gas and functions to cool the tail gas before it enters the tail gas electric field device entrance. The air which is introduced can be 50% to 300%, 100% to 180%, or 120% to 150% of the tail gas.

In the present embodiment, the tail gas cooling device can assist the engine system to realize recycling of waste heat of engine exhaust, facilitate a reduction in greenhouse gas emissions by the engine and also facilitate a reduction in harmful gas emission by fuel engines, decrease emission of pollutants, and enable the emissions of fuel engines to be more environmentally friendly.

The intake of the tail gas cooling device can be used for purifying air, and the content of particles in the tail gas treated by the tail gas dedusting system is smaller than that in the air.

### Embodiment 54

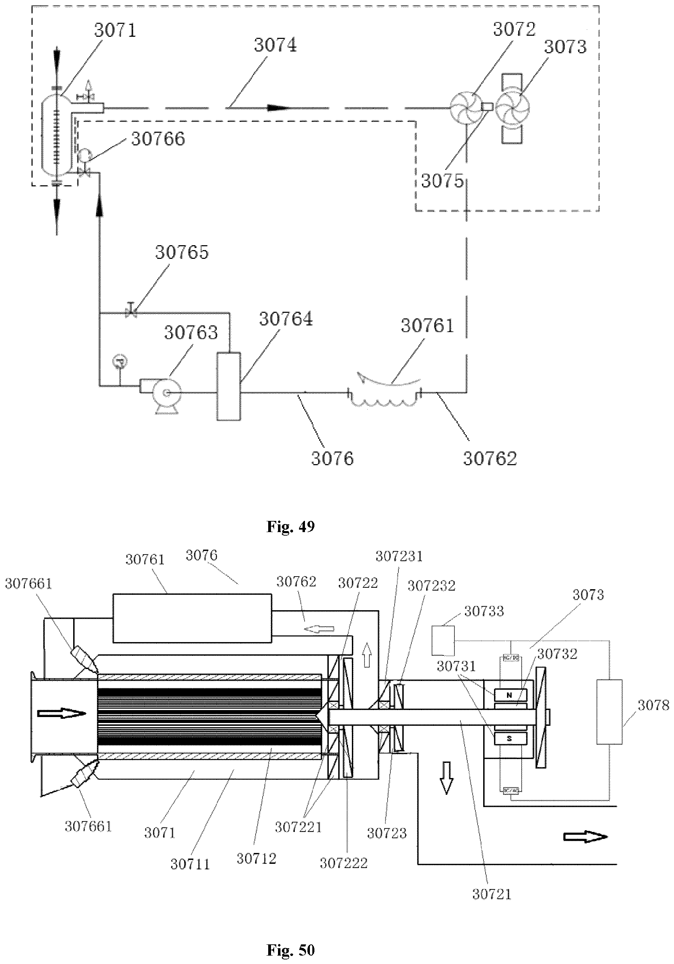

As shown in FIG. 49, a heat exchange unit 3071 in the present embodiment, which is based on above-described Embodiment 53, may further include a medium circulation loop 3076. The medium circulation loop 3076 has two ends which respectively communicate with two ends, namely, the front and back ends of the medium gasification cavity and form a closed gas-liquid circulation loop. A condenser 30761 is mounted on the medium circulation loop 3076. The condenser 30761 is used to condense a gaseous heat exchange medium into a liquid heat exchange medium. The medium circulation loop 3076 communicates with the medium gasification cavity through a driving force generating unit 3072. In the present embodiment, the medium circulation loop 3076 has one end configured to collect the gaseous heat exchange medium such as vapor and condense the vapor into a liquid heat exchange medium, i.e., a liquid, and the other end is configured to inject the liquid heat exchange medium into the medium gasification cavity so as to generate vapor again, thus realizing recycling of the heat exchange medium. In the present embodiment, the medium circulation loop 3076 includes a vapor loop 30762 which communicates with a rear end of the medium gasification cavity. In the present embodiment, the condenser 30761 further communicates with the driving force generating unit 3072 through the medium transfer unit 3074. In the present embodiment, the gas-liquid circulation loop does not communicate with the tail gas passing cavity.

In the present embodiment, the condenser 30761 can use a heat dissipation device such as an air-cooled heat sink and specifically a pressure-bearing finned air-cooled heat sink. When the vehicle runs, the condenser 30761 dissipates heat forcibly through natural air flow, and when there is no natural air flow, an electric fan can be used to perform heat dissipation for the condenser 30761. Specifically, the gaseous medium such as vapor formed in the medium gasification cavity will release pressure after acting on the driving force generating unit 3072 and flow into the medium circulation loop 3076 and the air-cooled heat sink. The temperature of the vapor decreases as the heat sink dissipates heat, and the vapor continues to be condensed into a liquid. As shown in FIG. 49, in the present embodiment, one end of the medium circulation loop 3076 can be provided with a pressurizing module 30763. The pressurizing module 30763 is configured to pressurize the condensed heat exchange medium so as to push the condensed heat exchange medium to flow into the medium gasification cavity. In the present embodiment, the pressurizing module 30763 includes a circulating water pump or a high-pressure pump. The liquid heat exchange medium, which is pressurized and pushed by the impeller of the circulating water pump, is extruded by a water supplementing pipeline and enters the medium gasification cavity so as to be heated and vaporized continuously in the medium gasification cavity. When rotating, the turbofan can replace the circulating water pump or the high-pressure pump, at which time, pushed by the residual pressure of the turbofan, the liquid is extruded by the water supplementing pipeline into the medium gasification cavity and continues to be heated and vaporized.

As shown in FIG. 49, in the present embodiment, the medium circulation loop 3076 may further include a liquid storage module 30764 provided between the condenser 30761 and the pressurizing module 30763. The liquid storage module 30764 is used to store the liquid heat exchange medium condensed by the condenser 30761. The pressurizing module 30763 is located on a conveying pipeline between the liquid storage module 30764 and the medium gasification cavity. After being pressurized by the pressurizing module 30763, the liquid in the liquid storage module 30764 is injected into the medium gasification cavity. In the present embodiment, the medium circulation loop 3076 further includes a liquid adjusting module 30765 which is provided between the liquid storage module 30764 and the medium gasification cavity and specifically on another conveying pipeline located between the liquid storage module 30764 and the medium gasification cavity. The liquid adjusting module 30765 is configured to adjust the amount of liquid flowing back into the medium gasification cavity. When the tail gas temperature of an automobile is continuously higher than the temperature of the boiling point of the liquid heat exchange medium, the liquid adjusting module 30765 injects the liquid in the liquid storage module 30764 into the medium gasification cavity. In the present embodiment, the medium circulation loop 3076 further includes an injection module 30766 provided between the liquid storage module 30764 and the medium gasification cavity. The injection module 30766 specifically communicates with the pressurizing module 30763 and the liquid adjusting module 30765. In the present embodiment, the injection module 30766 may include a nozzle 307661. The nozzle 307661 is located at one end of the medium circulation loop 3076 and is provided in a front end of the medium gasification cavity so as to inject the liquid into the medium gasification cavity through the nozzle 307661. After being pressurized by the pressurizing module 30763, the liquid in the liquid storage module 30764 is injected into the medium gasification cavity through the nozzle 307661 of the injection module 30766. The liquid in the liquid storage module 30764 can also be injected into the injection module 30766 through the liquid adjusting module 30765 and injected into the medium gasification cavity through the nozzle 307661 of the injection module 30766. The conveying pipeline is also referred to as a heat medium pipeline.

In the present embodiment, the tail gas cooling device is specifically applied to a 13-L diesel engine, the tail gas passing cavity specifically communicates with an exhaust port of the diesel engine, the tail gas emitted by the engine has a temperature of 650 °C and a flow rate of 4000 m³/h, and the tail gas has a heat amount of about 80 kilowatts. In the present embodiment, water is specifically used as the heat exchange medium in the medium gasification cavity, and a turbofan is used as the driving force generating unit 3072. The present tail gas cooling device can recover 15 kilowatts of electric energy, which can be used to drive vehicle-mounted equipment. Adding the direct efficiency recycling of the circulating water pump, 40 kilowatts of the tail gas heat energy can be recovered. In the present embodiment, the tail gas cooling device not only can improve the economic efficiency of fuel oil but can also reduce the tail gas temperature to below the dew-point temperature and so it beneficial to the execution of processes of wet electric dedusting and ozone denitration tail gas purification that need a low temperature environment.

To sum up, the present tail gas cooling device is applicable to energy conservation and emission reduction of diesel, gasoline, and gas engines, and it is a novel technology for improving engine efficiency, saving fuel, and improving the economic efficiency of the engines. The present tail gas cooling device can help automobiles save fuel and improve economic efficiency of the fuel. In addition, it can recycle the waste heat of engines and realize high-efficiency utilization of energy.

### Embodiment 55

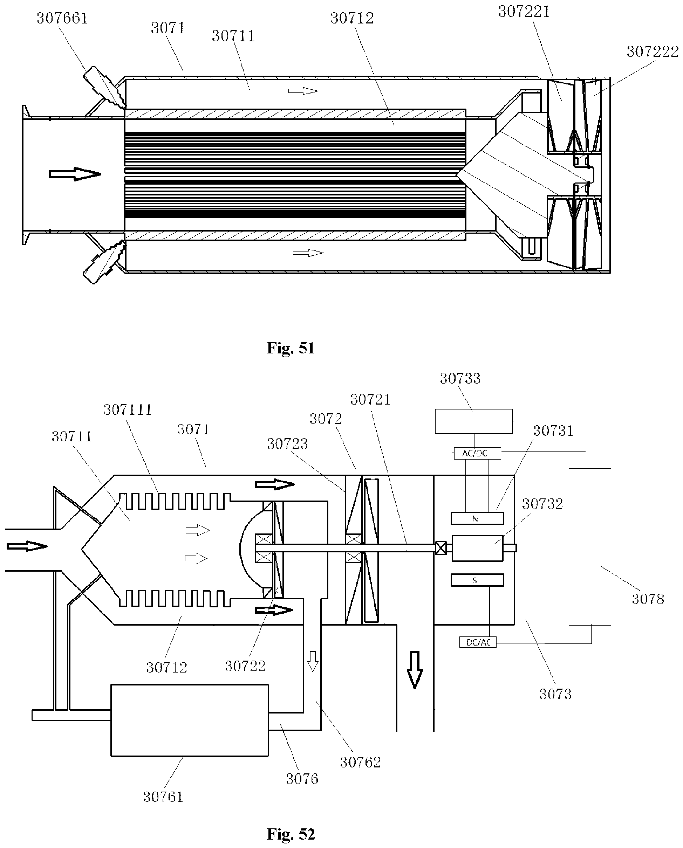

As shown in FIG. 50 and FIG. 51, a turbofan is specifically used as the driving force generating unit 3072 in the present embodiment, which is based on above-described Embodiment 54. In the present embodiment, the turbofan includes a turbofan shaft 30721 and a medium cavity turbofan assembly 30722. The medium cavity turbofan assembly 30722 is mounted on the turbofan shaft 30721 and is located in the medium gasification cavity 30711. Specifically, it is located at a rear end in the medium gasification cavity 30711.

In the present embodiment, the medium cavity turbofan assembly 30722 includes a medium cavity diversion fan 307221 and a medium cavity power fan 307222.

In the present embodiment, the turbofan includes a tail gas cavity turbofan assembly 30723 which is mounted on the turbofan shaft 30721 and which is located in the tail gas passing cavity 30712. In the present embodiment, the tail gas cavity turbofan assembly 30723 includes a tail gas cavity diversion fan 307231 and a tail gas cavity power fan 307232.

In the present embodiment, the tail gas passing cavity 30712 is located in the medium gasification cavity 30711. Namely, the medium gasification cavity 30711 is disposed around the outside of the tail gas passing cavity 30712 like a sleeve. In the present embodiment, the medium gasification cavity 30711 specifically may be completely covered or partially covered, except for a front end thereof, on an outer side of the tail gas passing cavity 30712. A gaseous medium such as a vapor formed in the medium gasification cavity 30711 flows through the medium cavity turbofan assembly 30722 and pushes the medium cavity turbofan assembly 30722 and the turbofan shaft 30721 to operate under the effect of vapor pressure. The medium cavity diversion fan 307221 is specifically provided at a rear end of the medium gasification cavity 30711. When the gaseous medium such as vapor is flowing through the medium cavity diversion fan 307221, it pushes the medium cavity diversion fan 307221 to operate. Under the effect of the medium cavity diversion fan 307221, the vapor flows to the medium cavity power fan 307222 along a set path. The medium cavity power fan 307222 is provided at a rear end of the medium gasification cavity 30711. Specifically, it is located behind the medium cavity diversion fan 307221. The vapor flowing through the medium cavity diversion fan 307221 flows to the medium cavity power fan 307222 and pushes the medium cavity power fan 307222 and the turbofan shaft 30721 to operate. In the present embodiment, the medium cavity power fan 307222 is also referred to as a first-stage power fan. The tail gas cavity turbofan assembly 30723 is provided behind or in front of the medium cavity turbofan assembly 30722 and operates coaxially with the medium cavity turbofan assembly 30722. The tail gas cavity diversion fan 307231 is provided in the tail gas passing cavity 30712. When flowing through the tail gas passing cavity 30712, the tail gas pushes the tail gas cavity diversion fan 307231 to operate. Under the effect of the tail gas cavity diversion fan 307231, the tail gas flows to the tail gas cavity power fan 307232 along to a set path. The tail gas cavity power fan 307232 is provided in the tail gas passing cavity 30712, and specifically it is located behind the tail gas cavity diversion fan 307231. The tail gas flowing through the tail gas cavity diversion fan 307231 flows to the tail gas cavity power fan 307232 and pushes the tail gas cavity power fan 307232 and the turbofan shaft 30721 to operate under the effect of the tail gas pressure. Finally, the tail gas is discharged through the tail gas cavity power fan 307232 and the tail gas passing cavity 30712. In the present embodiment, the tail gas cavity power fan 307232 is also referred to as a second-stage power fan.

As shown in FIG. 50, in the present embodiment, the electricity generating unit 3073 includes a generator stator 30731 and a generator rotor 30732. In the present embodiment, the above-described electricity generating unit 3073 is also provided outside the tail gas passing cavity 30712 and is coaxially connected with the turbofan. Namely, the generator rotor 30732 is connected with the turbofan shaft 30721, so the generator rotor 30732 will rotate with the rotation of the turbofan shaft 30721.

In the present embodiment, just with use of the turbofan, the driving force generating unit 3072 enables the vapor and the tail gas to be capable of moving quickly, thus saving volume and weight and meeting the requirements for energy conversion of tail gas of automobiles. When the turbofan rotates in a first direction in the present embodiment, the electricity generating unit 3073 converts kinetic energy of the turbofan shaft 30721 into electric energy, thus realizing generation of electricity with waste heat. When the turbofan rotates in a second direction, the electricity generating unit 3073 converts the electric energy into exhaust resistance and provides the exhaust resistance to the engine. When the exhaust braking device mounted on the engine operates and produces high-temperature, high-pressure tail gas for engine braking, the turbofan converts this kind of braking energy into electric energy, realizing exhaust braking and braking electricity generation of the engine. Specifically, the kinetic energy produced by the turbofan can be used for generating electricity, thus realizing generation of electricity with waste heat of automobiles. The electric energy produced in turn drives the turbofan to rotate and provides an exhaust negative pressure to the engine, thereby realizing exhaust braking and braking electricity generation of the engine and greatly improving the engine efficiency.

As shown in FIG. 50 and FIG. 51, in the present embodiment, the tail gas passing cavity 30712 is fully contained in the medium gasification cavity 30711 so as to realize collection of the tail gas of the automobile. In the present embodiment, the medium gasification cavity 30711 overlaps the tail gas passing cavity 30712 laterally and axially.

In the present embodiment, the driving force generating unit 3072 further includes a turbofan rotating negative pressure adjusting module. The turbofan rotating negative pressure adjusting module drives the turbofan to produce a moment of inertia utilizing the peak value of engine exhaust pressure, further delaying the production of the tail gas negative pressure, driving the engine to take in air, reducing the engine exhaust resistance, and improving the engine power.

As shown in FIG. 50, in the present embodiment, the electricity generating unit 3073 includes a battery assembly 30733 for storing electric energy, namely, for realizing temporary storage of the electricity released. In the present embodiment, electricity stored in the battery assembly 30733 is available to the heat exchanger power fan, water pump, refrigeration compressor and other electrical equipment in the vehicle.

In the present embodiment, the tail gas cooling device can generate electricity using the waste heat of the automobile tail gas while volume and weight requirements are taken into consideration. In addition, the conversion efficiency of heat energy is high, and the heat exchange medium can be recycled, resulting in a great improvement in the energy utilization ratio. As such, the tail gas cooling device is environmentally friendly and has strong practicability.

In an initial state, the tail gas emitted by the engine pushes the tail gas cavity power fan 307232 to rotate, thereby realizing direct energy conversion of the tail gas pressure. An instantaneous negative pressure of the tail gas is realized by the rotational inertia of the tail gas cavity power fan 307232 and the turbofan shaft 30721. A generator adjusting and controlling component 3078 can change the output of electrical generated power by adjusting the generated excitation or generated current, thereby adjusting the tail gas emission resistance of the automobile and adapting to the working conditions of the engine.

When the waste heat of the automobile tail gas is used to generate electricity and the automobile tail gas temperature is continuously higher than 200 °C, water is injected into the medium gasification cavity 30711. The water adsorbs heat of the tail gas to form a high-temperature, high-pressure vapor and generate vapor power to continue to push the medium cavity power fan 307222 in an accelerated manner such that the medium cavity power fan 307222 and the tail gas cavity power fan 307232 rotate more quickly with greater rotational moment. By adjusting the starting current or excitation current, the work and exhaust backpressure of the engine are balanced. By adjusting the amount of water injected into the medium gasification cavity 30711 in accordance with changes in the temperature of the exhaust, a constant exhaust temperature is maintained.

When the automobile brakes to generate electricity, engine compressed air passes through the tail gas cavity power fan 307232 and pushes the tail gas cavity power fan 307232 to rotate, thus converting the pressure into a rotating power of the generator. By adjusting the generated current or the excitation current, the magnitude of resistance is changed, thereby realizing engine braking and slow release of the braking force.

When the automobile is electrically braked, the engine compressed air passes through the tail gas cavity power fan 307232 and pushes the tail gas cavity power fan 307232 to rotate forward. A motor is turned on and outputs a reverse rotational torque, which is transferred to the medium cavity power fan 307222 and the tail gas cavity power fan 307232 through the turbofan shaft 30721, thereby forming a strong backwards thrust and converting energy consumption into cavity heat. At the same time, the engine braking force is increased to realize forced braking.

The medium transfer unit 3074 includes a reversing duct. During vapor braking, the heat accumulated by the continuous compressed braking generates a larger thrust through the vapor. The vapor is output onto the medium cavity power fan 307222 through the reversing duct, forcing the medium cavity power fan 307222 and the tail gas cavity power fan 307232 to rotate in reverse to produce simultaneous braking and starting.

### Embodiment 56

As shown in FIG. 52, in the present embodiment, which is based on above-described Embodiment 55, the medium gasification cavity 30711 is located in the tail gas passing cavity 30712. The medium cavity turbofan assembly 30722 is located in the medium gasification cavity 30711, and specifically it is located at a rear end of the medium gasification cavity 30711. The tail gas cavity turbofan assembly 30723 is located in the tail gas passing cavity 30712, and specifically it is located at a rear end of the tail gas passing cavity 30712. The medium cavity turbofan assembly 30722 and the tail gas cavity turbofan assembly 30723 are both mounted on the turbofan shaft 30721. In the present embodiment, the tail gas cavity turbofan assembly 30723 is located behind the medium cavity turbofan assembly 30722. In this way, the automobile tail gas flowing through the tail gas passing cavity 30712 will directly act on the tail gas cavity turbofan assembly 30723 so as to drive the tail gas cavity turbofan assembly 30723 and the turbofan shaft 30721 to rotate. When flowing through the tail gas passing cavity 30712, the automobile tail gas will exchange heat with the liquid in the medium gasification cavity 30711 and vaporize the liquid in the medium gasification cavity 30711. The pressure of the vapor acts on the medium cavity turbofan assembly 30722 so as to drive the medium cavity turbofan assembly 30722 and the turbofan shaft 30721 to rotate, thereby further accelerating the rotation of the turbofan shaft 30721. During rotation, the turbofan shaft 30721 will drive the generator rotor 30723 connected the turbofan shaft to rotate together with it, further realizing generation of electricity using the electricity generating unit 3073. After flowing backward through the medium cavity turbofan assembly 30722, the vapor in the medium gasification cavity 30711 will flow into the medium circulation loop 3076, and condense into liquid by the condenser 30761 in the medium circulation loop 3076, then it is again injected into the medium gasification cavity 30711 to realize recycling of the heat exchange medium. After flowing through the tail gas cavity turbofan assembly 30723, the automobile tail gas in the tail gas passing cavity 30712 is discharged into the atmosphere.

In the present embodiment, a bent section 307111 is provided on a side wall of the medium gasification cavity 30711. The bent section 307111 can effectively increase the contact area, i.e., the heat exchange area between the medium gasification cavity 30711 and the tail gas passing cavity 30712. In the present embodiment, the bent section 307111 has a saw-tooth cross-sectional shape.

### Embodiment 57

In order to improve the thermal efficiency of the engine, the heat energy and the backpressure of engine tail gas need to be recovered and transduced to achieve high efficiency. Especially for hybrid vehicles, it is necessary to directly drive the generator with fuel and to efficiently convert tail gas heat into electric energy. In this way, the thermal efficiency of the fuel can be improved by 15%-20%. For hybrid vehicles, the battery assembly can be charged more while saving fuel, and the efficiency of converting fuel into electric energy can reach more than 70%.

Specifically, the tail gas cooling device of Embodiment 55 or Embodiment 56 is mounted at an exhaust port of a fuel engine of a hybrid vehicle. When the fuel engine is started, the engine tail gas enters the tail gas passing cavity 30712. Under the effect of the tail gas backpressure, the direction of the tail gas is adjusted by the tail gas cavity diversion fan 307231, and the tail gas directly pushes the tail gas cavity power fan 307232 to rotate so as to apply a rotational torque to the turbofan shaft 30721. When the medium cavity power fan 307222 and the tail gas cavity power fan 307232 continue to rotate due to existence of rotational inertia, air suction will be generated such that the engine exhaust has an instantaneous negative pressure. As a result, the engine exhaust resistance is extremely low. This condition is conducive to continuous exhaust and work by the engine. The engine speed is improved by about 3%-5% with the same fuel supply and output load.

The engine exhaust heat will be concentrated in the medium gasification cavity 30711 due to heat conduction by fins. When the concentrated temperature is higher than the boiling temperature of water, water is injected into the medium gasification cavity 30711. The water instantly vaporizes and rapidly expands in volume. The vapor is diverted by the medium cavity diversion fan to push the medium cavity power fan 307222 and the turbofan shaft 30721 to further rotate at an accelerated speed and generate a greater rotational inertia and torque. The engine speed is increased continuously while the fuel is not increased and the load is not reduced, thus obtaining 10%-15% of additional improvement in the rotational speed. While the rotational speed is increased due to the recovery backpressure and temperature, the engine power output will be increased. As a result of differences in the exhaust temperature, the power output is improved by about 13%-20%, which is quite helpful for improving fuel economic efficiency and reducing the engine volume.

### Embodiment 58

In the present embodiment, the tail gas cooling device in Embodiment 55 or Embodiment 56 is applied to a 13-L diesel engine. Tail gas of the diesel engine has a temperature of 650 °C, a flow rate of 4000 m3/h, and a tail gas heat of about 80 kilowatts. In the present embodiment, water is used as a heat exchange medium. The present tail gas cooling device can recover 20 kilowatts of electric energy which can be used to drive vehicle-mounted equipment. Therefore, in the present embodiment, the tail gas cooling device not only can improve the economic efficiency of fuel oil but can also reduce the tail gas temperature to below the dew-point temperature. As such, it is beneficial to performing electrostatic dedusting, wet electric dedusting, and ozone denitration tail gas purification processes that need a low temperature environment. At the same time, continuous efficient torque-changing braking and forced continuous braking of the engine are realized. Specifically, the tail gas cooling device in the present embodiment is directly connected to an exhaust port of a 13-L diesel engine. Electricity generation with tail gas heat, tail gas cooling, engine braking, dedusting, denitration, etc. can be realized by connecting a tail gas electric field device, and a tail gas wet electric dedusting and ozone denitration system to an exit of the tail gas cooling device, i.e., to an exit of the tail gas passing cavity 30712. In the present embodiment, the tail gas cooling device is mounted in front of the tail gas electric field device.

In the present embodiment, a 3-inch (Chinese inch) medium cavity power fan 307222, a tail gas cavity power fan 307232, and a 10 kw high-speed direct-current generator motor are used. The battery assembly uses a 48 v, 300 ah power battery pack, and an electricity-generating electric-manual switch is used. In an initial state, the engine runs at an idle rotational speed of less than 750 rpm and with an engine output power of about 10%. The tail gas cavity power fan 307232 is pushed by the engine exhaust to rotate at a rotational speed of about 2000 rpm, realizing direct energy conversion of the tail gas pressure. The rotational inertia of the tail gas cavity power fan 307232 and the turbofan shaft 30721 causes an instantaneous negative pressure of the tail gas. As the tail gas cavity power fan 307232 rotates, an instantaneous negative pressure of about -80 kp is generated in the exhaust pipeline. The generated electrical output is varied by adjusting the generated current, thereby adjusting the tail gas emission resistance in accordance with the working conditions of the engine to obtain a generated power of 0.1-1.2 kw.

When the load is 30%, the engine speed is increased to 1300 rpm, and the tail gas temperature is continuously higher than 300 °C. Water is injected into the medium gasification cavity 30711 to decrease the tail gas temperature to 200 °C. As a result, a large amount of high-temperature, high-pressure vapor is generated and produces vapor power while absorbing the tail gas temperature. Due to the limitation of the medium cavity diversion fan and the nozzle, the vapor pressure sprayed on the medium cavity power fan continues to rotate the medium cavity power fan in an accelerated manner such that the medium cavity power fan and the turbofan shaft rotate faster, the torque is increased, and the generator is driven to rotate at a high speed and high torque. By adjusting a starting current or an excitation current, the work and exhaust backpressure of the engine are balanced to obtain a generated energy of 1 kw-3 kw. By adjusting the amount of water injected in accordance with temperature changes of the exhaust, the object of maintaining a constant exhaust temperature is achieved, thereby obtaining a continuous exhaust temperature of 150 °C. The low-temperature exhaust facilitates subsequent recovery of particulates and ozone denitration by the tail gas electric field device and achieves the goal of environmental protection. When the engine stops supplying oil, the turbofan shaft 30721 drives the engine compressed air, and the engine compressed air reaches the tail gas cavity power fan 307232 through the exhaust pipeline to push the tail gas cavity power fan 307232, thus converting the pressure into rotational power of the turbofan shaft 30721. The generator is also mounted on the turbofan shaft 30721. By adjusting the generated current, the exhaust volume passing through the turbofan is changed. As a result, the magnitude of the exhaust resistance is changed, engine braking and slow release of braking force are realized, a braking force of about 3-10 kw can be obtained, and 1-5 kw of generated energy is recovered.

When the generator is switched to the electric braking mode, the generator instantly becomes a motor, which is equivalent to a driver quickly stepping on a brake pedal. At this time, the engine compressed air passes through the tail gas cavity power fan 307232 and pushes the tail gas cavity power fan 307232 to rotate forward. The motor is started to output a reverse rotational torque which is transmitted to the medium cavity power fan 307222 and the tail gas cavity power fan 307232 through the turbofan shaft 30721 to form a strong reverse thrust, further improving the braking effect. The work of a large amount of compressed air converts energy consumption into high-temperature gas, so that heat is accumulated in the cavity. At the same time, the engine is enabled to have an increased braking force and is braked forcibly. The forced braking power is 15-30 kw. Such braking can generate electricity intermittently with a generated power of about 3-5 kw.

When the electric reverse-thrust brake is used while intermittent electricity generation is carried out, if emergency braking is suddenly needed, electricity generation can be stopped, vapor generated by braking heat is used for braking, heat accumulated by continuous compressed braking is transferred to water in the medium gasification cavity, vapor generated in the medium gasification cavity is output to the medium cavity power fan 307222 through the reversing duct, and the vapor pushes the medium cavity power fan 307222 in reverse to force the medium cavity power fan 307222 and the tail gas cavity power fan 307232 to rotate in reverse. As a result, forced braking is realized, and a braking power of more than 30 kw can be generated.

To sum up, the tail gas cooling device in the present invention can realize electricity generation with waste heat in the automobile tail gas. The conversion efficiency of heat energy is high, and the heat exchange medium can be recycled. The tail gas cooling device can be applied to energy conservation and emission reduction of diesel engines, gasoline engines, and gas engines such that the engine waste heat is recycled, thereby improving the economic efficiency of the engines. A constant exhaust negative pressure is generated by high-speed air suction of the turbofan, the exhaust resistance of the engine is reduced, and the efficiency of the engine is improved. Therefore, the present invention effectively overcomes various defects in the prior art and has high industrial utilization value.

### Embodiment 59

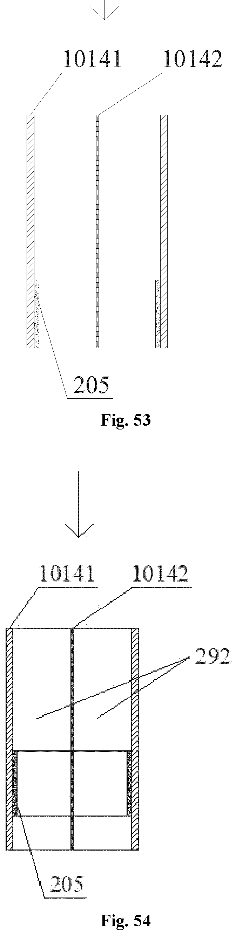

An intake electric field device shown in FIG. 53 includes an intake dedusting electric field anode 10141, an intake dedusting electric field cathode 10142, and an intake electret element 205. An intake ionization dedusting electric field is formed when the intake dedusting electric field anode 10141 and the intake dedusting electric field cathode 10142 are connected to a power supply. The intake electret element 205 is provided in the intake ionization dedusting electric field. The arrow in FIG. 53 shows the flow direction of a substance to be treated. The intake electret element is provided at an intake electric field device exit. The intake ionization dedusting electric field charges the intake electret element. The intake electret element has a porous structure, and the material of the intake electret element is alumina. The intake dedusting electric field anode has a tubular interior, the intake electret element has a tubular exterior, and the intake dedusting electric field anode is disposed around the intake electret element like a sleeve. The intake electret element is detachably connected with the intake dedusting electric field anode.

An intake dedusting method includes the following steps:
a) adsorbing particulates in the intake using an intake ionization dedusting electric field; and
b) charging an intake electret element using the intake ionization dedusting electric field.

In this method, the intake electret element is provided at the intake electric field device exit, and the material of the intake electret element is alumina. When the intake ionization dedusting electric field has no power-on drive voltage, the charged intake electret element is used to adsorb particulates in the gas intake. After adsorbing certain particulates in the gas intake, the charged intake electret element is replaced by a new intake electret element. After replacement with the new intake electret element, the intake ionization dedusting electric field is restarted to adsorb particulates in the gas intake and charge the new intake electret element.

The above-described intake electric field device and the electrostatic dedusting method are used to treat tail gas after a motor vehicle is started, the intake ionization dedusting electric field is used to adsorb particulates in the tail gas after the motor vehicle is started, and the intake electret element is charged by the intake ionization dedusting electric field. When the intake ionization dedusting electric field has no power-on drive voltage (i.e., when it is in trouble), the charged intake electret element is used to adsorb the particulates in the gas intake, and a purification efficiency of more than 50% can be achieved.

The structure of the above-described electric field device can also be used as an intake electric field device, and the above-described dedusting method can also be used as a tail gas dedusting method.

### Embodiment 60

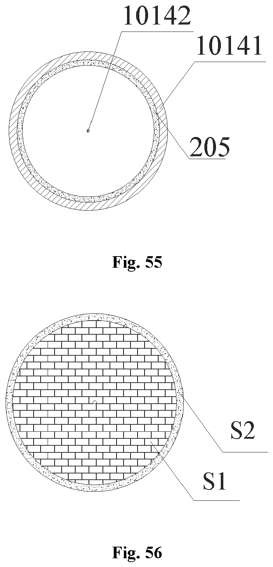

An intake electric field device shown in FIG. 54 and FIG. 55 includes an intake dedusting electric field anode 10141, an intake dedusting electric field cathode 10142, and an intake electret element 205. The intake dedusting electric field anode 10141 and the intake dedusting electric field cathode 10142 form an intake flow channel 292, and the intake electret element 205 is provided in the intake flow channel 292. The arrow in FIG. 54 shows the flow direction of a substance to be treated. The intake flow channel 292 includes an intake flow channel exit, and the intake electret element 205 is close to an intake flow channel exit. The cross section of the intake electret element 205 in the intake flow channel occupies 10% of the cross section of the intake flow channel, as shown in FIG. 56, which is S2/(S1+S2)H100%, where a first cross sectional area S2 is the cross sectional area of the intake electret element in the intake flow channel, the sum of the first cross sectional area S1 and the second cross sectional area S2 is the cross sectional area of the intake flow channel, and the first cross sectional area S1 does not include the cross sectional area of the intake dedusting electric field cathode 10142. An intake ionization dedusting electric field is formed when the intake dedusting electric field anode and the intake dedusting electric field cathode are connected to a power supply. The intake ionization dedusting electric field charges the intake electret element. The intake electret element has a porous structure, and the material of the intake electret element is polytetrafluoroethylene. The intake dedusting electric field anode has a tubular interior, the intake electret element has a tubular exterior, and the intake dedusting electric field anode is disposed around the intake electret element like a sleeve. The intake electret element is detachably connected with the intake dedusting electric field anode.

An intake dedusting method includes the following steps:
1) adsorbing particulates in the intake using an intake ionization dedusting electric field; and
2) charging an intake electret element using the intake ionization dedusting electric field.

In this method described above, the intake electret element is close to the intake flow channel exit, and the material forming the intake electret element is polytetrafluoroethylene. When the intake ionization dedusting electric field has no power-on drive voltage, the charged intake electret element is used to adsorb particulates in the gas intake. After adsorbing certain particulates in the gas intake, the charged intake electret element is replaced by a new intake electret element. After the intake electret element is replaced by the new intake electret element, the intake ionization dedusting electric field is restarted to adsorb particulates in the gas intake and charge the new intake electret element.

The above-described intake electric field device and the electrostatic dedusting method are used to treat intake after a motor vehicle is started, the intake ionization dedusting electric field is used to adsorb particulates in the intake after the motor vehicle is started, and the intake electret element is charged by the intake ionization dedusting electric field. When the intake ionization dedusting electric field has no power-on drive voltage (i.e., when it is in trouble), the charged intake electret element is used to adsorb the particulates in the gas intake, and a purification efficiency of more than 30% can be achieved.

The structure of the above-described electric field device can also be used as an intake electric field device, and the above-described dedusting method can also be used as an intake dedusting method.

### Embodiment 61

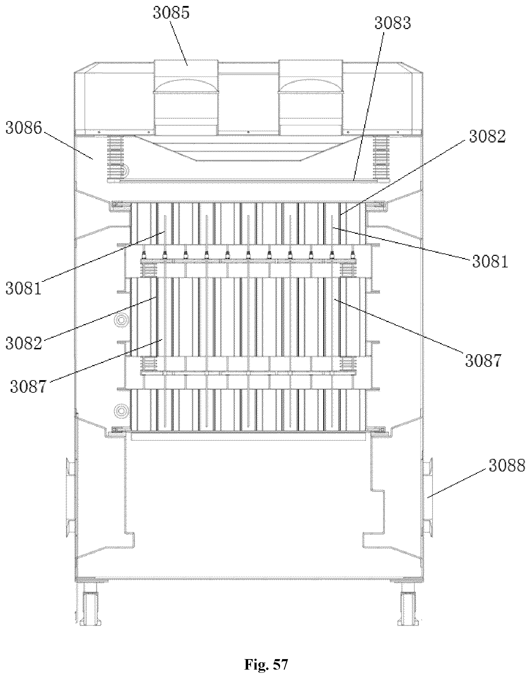

As shown in FIG. 57, the present embodiment provides an electric field device including an electric field device entrance 3085, a flow channel 3086, an electric field flow channel 3087, and an electric field exit 3088 that are in communication with each other in the order listed. A front electrode 3083 is mounted in the flow channel 3086. The ratio of the cross-sectional area of the front electrode 3083 to the cross-sectional area of the flow channel 3086 is 99%-10%. The electric field device further includes a dedusting electric field cathode 3081 and a dedusting electric field anode 3082. The electric field flow channel 3087 is located between the dedusting electric field cathode 3081 and the dedusting electric field anode 3082. In the present embodiment, the working principle of the electric field device is as follows. A pollutant-containing gas enters the flow channel 3086 through the electric field device entrance 3085. The front electrode 3083 mounted in the flow channel 3086 conducts electrons to a part of the pollutants, which are charged. After the pollutants enter the electric field flow channel 3087 through the flow channel 3086, the dedusting electric field anode 3082 applies an attractive force to the charged pollutants. The charged pollutants then move towards the dedusting electric field anode 3082 until this part of the pollutants is attached to the dedusting electric field anode 3082. An ionization dedusting electric field is formed between the dedusting electric field cathode 3081 and the dedusting electric field anode 3082 in the electric field flow channel 3087. The ionization dedusting electric field enables the other part of uncharged pollutants to be charged. In this way, after being charged, the other part of the pollutants will also receive the attractive force applied by the dedusting electric field anode 3082 and is finally attached to the dedusting electric field anode 3082. As a result, by using this electric field device, pollutants are charged at a higher efficiency and are charged more sufficiently, further ensuring that the dedusting electric field anode 3082 can collect more pollutants and ensuring a higher collecting efficiency of pollutants by the electric field device.

The cross-sectional area of the front electrode 3083 refers to the sum of the areas of entity parts of the front electrode 3083 along a cross section. The ratio of the cross-sectional area of the front electrode 3083 to the cross-sectional area of the flow channel 3086 may be 99%-10%, 90-10%, 80-20%, 70-30%, 60-40%, or 50%.

As shown in FIG. 57, in the present embodiment, the front electrode 3083 and the dedusting electric field cathode 3081 are both electrically connected with a cathode of a direct-current power supply, and the dedusting electric field anode 3082 is electrically connected with an anode of the direct-current power supply. In the present embodiment, the front electrode 3083 and the dedusting electric field cathode 3081 both have a negative potential, and the dedusting electric field anode 3082 has a positive potential.

As shown in FIG. 57, in the present embodiment, the front electrode 3083 specifically can have a net shape. In this way, when gas flows through the flow channel 3086, the net-shaped structural characteristic of the front electrode 3083 facilitates flow of gas and pollutants through the front electrode 3083 and allows the pollutants in the gas to contact the front electrode 3083 more sufficiently. As a result, the front electrode 3083 can conduct electrons to more pollutants and allow a higher charging efficiency of the pollutants.

As shown in FIG. 57, in the present embodiment, the dedusting electric field anode 3082 has a tubular shape, the dedusting electric field cathode 3081 has the shape of a rod, and the dedusting electric field cathode 3081 is provided in the dedusting electric field anode 3082 in a penetrating manner. In the present embodiment, the dedusting electric field anode 3082 and the dedusting electric field cathode 3081 have an asymmetrical structure. When gas flows into the ionization electric field formed between the dedusting electric field cathode 3081 and the dedusting electric field anode 3082, the pollutants will be charged, and under the action of the attractive force of the dedusting electric field anode 3082, the charged pollutants will be collected on an inner wall of the dedusting electric field anode 3082.

As shown in FIG. 57, in the present embodiment, the dedusting electric field anode 3082 and the dedusting electric field cathode 3081 both extend in a front-back direction, and a front end of the dedusting electric field anode 3082 is located in front of a front end of the dedusting electric field cathode 3081 in the front-back direction. As shown in FIG. 57, a rear end of the dedusting electric field anode 3082 is located to the rear of a rear end of the dedusting electric field cathode 3081 along the front-back direction. In the present embodiment, the length of the dedusting electric field anode 3082 in the front-back direction is increased such that the area of an adsorption surface located on the inner wall of the dedusting electric field anode 3082 is bigger, thus resulting in a larger attractive force being applied to the negatively charged pollutants and making it possible to collect more pollutants.

As shown in FIG. 57, in the present embodiment, the dedusting electric field cathode 3081 and the dedusting electric field anode 3082 constitute an ionization unit. A plurality of the ionization units is provided so as to collect more pollutants utilizing the plurality of ionization units and allow a greater ability to collect pollutants and a higher collecting efficiency by the electric field device. In the present embodiment, the above-described pollutants include common dust and the like with relatively weak electrical conductivity, and metal dust, mist drops, aerosols and the like with relatively strong electrical conductivity. In the present embodiment, a process of collecting common dust with relatively weak electrical conductivity and pollutants with relatively strong electrical conductivity by the electric field device is as follows. When gas flows into the flow channel 3086 through the electric field device entrance 3085 and pollutants in the gas with relatively strong electrical conductivity, such as metal dust, mist drops, or aerosols contact the front electrode 3083 or the distance between the pollutants and the front electrode 3083 reaches a certain range, the pollutants will be directly negatively charged. Subsequently, all the pollutants enter the electric field flow channel 3087 with the gas flow, and the dedusting electric field anode 3082 applies an attractive force to the metal dust, mist drops, aerosols, and the like that have been negatively charged and collects this part of the pollutants. The dedusting electric field anode 3082 and the dedusting electric field cathode 3081 form an ionization electric field which obtains oxygen ions by ionizing oxygen in the gas, and the negatively charged oxygen ions, after being combined with common dust, enable common dust to be negatively charged. The dedusting electric field anode 3082 applies an attractive force to this part of the negatively charged dust and collects this part of the pollutants such that all pollutants with relatively strong electrical conductivity and pollutants with relatively weak electrical conductivity in the gas are collected. As a result, this electric field device is capable of collecting a wider variety of substances and has a stronger collecting capability.

In the present embodiment, the dedusting electric field cathode 3081 is also referred to as corona charged electrode. The direct-current power supply specifically is a direct-current, high-voltage power supply. A direct-current high voltage is introduced between the front electrode 3083 and the dedusting electric field anode 3082, forming an electrically conductive loop. A direct-current high voltage is introduced between the dedusting electric field cathode 3081 and the dedusting electric field anode 3082 and forms an ionization discharge corona electric field. In the present embodiment, the front electrode 3083 is a densely distributed conductor. The dust is charged and is subsequently adsorbed by the heteropolar dedusting electric field anode 3082. The uncharged dust passes through an ionization zone formed by the dedusting electric field cathode 3081 and the dedusting electric field anode 3082, and the ionized oxygen formed in the ionization zone will charge the dust with electrons. In this way, the dust continues to be charged and is adsorbed by the heteropolar dedusting electric field anode 3082.

In the present embodiment, the electric field device can operate in two or more electrifying modes. For example, in the case where there is sufficient oxygen in the gas, the ionization discharge corona electric field formed between the dedusting electric field cathode 3081 and the dedusting electric field anode 3082 can be used to ionize oxygen so as to charge pollutants and then collect the pollutants using the dedusting electric field anode 3082. When the content of oxygen in the gas is too low or when there is no oxygen, or when the pollutants are electrically conductive dust mist and the like, the front electrode 3083 is used to directly enable the pollutants to be charged such that the pollutants are sufficiently charged and then adsorbed by the dedusting electric field anode 3082. The present electric field device, while allowing the electric field to collect various kinds of dust, is also applicable to tail gas environments having various oxygen contents, resulting in a broader scope of dust control by the dust collecting electric field and improvements in the dust collecting efficiency. In the present embodiment, through use of the electric field with two charging modes, it is possible to simultaneously collect high-resistance dust which is easily charged and low-resistance metal dust, aerosols, liquid mist, etc. which are easily electrified. The electric field has an expanded scope of application due to simultaneous use of the two electrifying modes.

In the present embodiment, the electric field device is applicable to an intake dedusting system and a tail gas dedusting system. When the electric field device in the present embodiment is applied to an intake dedusting system, the electric field device is also referred to as an intake electric field device, the front electrode 3083 is also referred to as an intake front electrode, the dedusting electric field anode 3082 is also referred to as an intake dedusting electric field anode, the dedusting electric field cathode 3081 is also referred to as an intake dedusting electric field cathode, and the flow channel 3086 is also referred to as an intake flow channel. When the electric field device in the present embodiment is applied to a tail gas dedusting system, the electric field device is also referred to as a tail gas electric field device, the front electrode 3083 is also referred to as a tail gas front electrode, the dedusting electric field anode 3082 is also referred to as a tail gas dedusting electric field anode, the dedusting electric field cathode 3081 is also referred to as a tail gas dedusting electric field cathode, and the flow channel 3086 is also referred to as a tail gas flow channel.

In conclusion, the present invention effectively overcomes various defects in the prior art and has high industrial utilization value.

The above embodiments merely illustratively describe the principles of the present invention and effects thereof, rather than limiting the present invention. Anyone familiar with this technology can modify or change the above embodiments without departing from the spirit and scope of the present invention. Therefore, all equivalent modifications or changes made by those with ordinary knowledge in the technical field to which they belong without departing from the spirit and technical ideas disclosed in the present invention should still be covered by the claims of the present invention.

## Claims

1. An engine tail gas treatment system, wherein the system includes an engine tail gas dedusting system and an tail gas ozone purification system; the engine tail gas dedusting system includes an tail gas dedusting system entrance, an tail gas dedusting system exit, and an tail gas electric field device; the tail gas electric field device includes an tail gas electric field device entrance, an tail gas electric field device exit, an tail gas dedusting electric field cathode and an tail gas dedusting electric field anode, and the tail gas dedusting electric field cathode and the tail gas dedusting electric field anode are used to generate an tail gas ionization dedusting electric field.

2. The engine tail gas treatment system according to claim 1, wherein the engine tail gas electric field device further includes a plurality of connection housings, and serially connected electric field stages are connected by the connection housings.

3. The engine tail gas treatment system according to claim 2, wherein the distance between adjacent electric field stages is greater than 1.4 times the inter-electrode distance.

4. The engine tail gas treatment system according to claim 2 or 3, wherein the tail gas dedusting electric field anode has a length of 10-90 mm and the tail gas dedusting electric field cathode has a length of 10-90 mm.

5. The engine tail gas treatment system according to claim 4, wherein when the electric field has a temperature of 200°C, the corresponding dust collecting efficiency is 99.9%.

6. The engine tail gas treatment system according to claim 4, wherein when the electric field has a temperature of 400°C, the corresponding dust collecting efficiency is 90%.

7. The engine tail gas treatment system according to claim 6, wherein when the electric field has a temperature of 500°C, the corresponding dust collecting efficiency is 50%.

8. The engine tail gas treatment system according to any one of claims 1-7, wherein the engine tail gas treatment system includes a reaction field for mixing and reacting an ozone stream with an tail gas stream.

9. The engine tail gas treatment system according to any one of claims 1-8, wherein the engine tail gas treatment system further includes an engine.
